Europäisches Patentamt

European Patent Office

Office européen des brevets

(19)

(11) Publication number: **0 569 589 A1**

## (12) EUROPEAN PATENT APPLICATION
published in accordance with Art. 158(3) EPC

(21) Application number: **92914785.8**

(22) Date of filing: **13.07.92**

(86) International application number:
**PCT/JP92/00893**

(87) International publication number:
**WO 93/01559 (21.01.93 93/03)**

(51) Int. Cl.5: **G06F 15/70**, G06F 15/64, H04N 7/18

(30) Priority: **12.07.91 JP 198694/91**
**25.10.91 JP 307046/91**
**01.06.92 JP 166997/92**
**04.06.92 JP 171613/92**

(43) Date of publication of application:
**18.11.93 Bulletin 93/46**

(84) Designated Contracting States:
**BE DE DK ES FR GB IT NL SE**

(71) Applicant: **OMRON CORPORATION**
**10, Tsuchido-cho**
**Hanazono**
**Ukyo-ku**
**Kyoto 616(JP)**

(72) Inventor: **SHIBATA, Fumio, Omron Corporation**
**10, Tsuchido-cho,**
**Hanazono,**
**Ukyo-ku**
**Kyoto-shi, Kyoto 616(JP)**
Inventor: **TERAMOTO, Hiroshi, Omron**

**Corporation**
**10, Tsuchido-cho,**
**Hanazono,**
**Ukyo-ku**
**Kyoto-shi, Kyoto 616(JP)**
Inventor: **MATSUMOTO, Toshihiko, Omron**
**Corporation**
**10, Tsuchido-cho,**
**Hanazono,**
**Ukyo-ku**
**Kyoto-shi, Kyoto 616(JP)**
Inventor: **FUJIEDA, Shiro, Omron Corporation**
**10, Tsuchido-cho,**
**Hanazono,**
**Ukyo-ku**
**Kyoto-shi, Kyoto 616(JP)**

(74) Representative: **Kahler, Kurt, Dipl.-Ing.**
**Patentanwälte Kahler, Käck & Fiener**
**Maximilianstrasse 57**
**Postfach 12 49**
**D-87712 Mindelheim (DE)**

(54) APPARATUS AND METHOD FOR DETERMINING OR SETTING ADEQUATE ILLUMINATING AND PHOTOGRAPHING CONDITION, ETC., IN PICTURE PROCESSING SYSTEM; AND APPARATUS AND METHOD FOR AIDING THE DETERMINATION OR SETTING.

(57) The sizes and equiluminous characteristics of illumination devices (11, 13) are stored beforehand in a data base. Shape features such as the size of an object, the depths and widths of grooves formed in the object and visual field information necessary for illuminating the object are inputted through an input device (51). On the basis of inputted information and data base information, the conditions for photographing the object suitably, e.g., the condition for darkening the grooves formed in the object and illuminating the other surface parts of the object equiluminously is calculated by determining sections (54, 55). For example, the optimum heights and

EP 0 569 589 A1

optimum angle of the illumination devices, etc, are derived, and those are displayed on a display device (41).

# Fig. 14

2

Technical Field

This invention relates to an apparatus and method in an image processing system in which an object is imaged using an image pick-up device under illumination provided by a lighting device and image data obtained by this imaging is processed, wherein in order to perform lighting of the object that is suited to the purpose and carry out imaging that is suited to the purpose, the apparatus and method are for selecting or deciding the appropriate or optimum type of lighting device and lighting method, deciding or setting the position of set-up, angle of set-up and luminous intensity of the lighting device, and selecting or deciding the camera, lens and close-up photography ring constituting the image pick-up device, or for aiding in making the selection, decision or setting.

Background Art

In order to automate the visual inspection of industrial products, automatic inspecting devices have become popular and image processing systems have been introduced for these automatic scanning devices. In order to realize high-precision inspection by an automatic inspecting device, it is required that the optimum image suited to the purpose of inspection be obtained. The setting of optimum lighting conditions, imaging conditions, etc., is important in order to obtain the optimum image.

One example of this will be cited and described in detail. In an exterior inspecting device or positioning device, an object that is to be recognized is imaged by a television camera under lighting provided by a lighting device. The image data obtained is accepted in an image processor, where the data is subjected to binarization processing. A characteristic quantity such as the area or center of gravity of the object is measured based upon the binary image data, the acceptability of the object is discriminated and the object is positioned.

Excellent binary image data is necessary to measure the characteristic quantities in a highly precise manner. To this end, it is required that the lighting in the observation system be set to the optimum state. The excellent binary image referred to here means an image in which the edge of the object in the binary image is smoothly connected and there is little isolated noise (small white or black dots).

Accordingly, when such a binary image has been obtained, it is judged that the lighting of the observation system has been set to the optimum state. The fact that the binary image obtained does not change even if some disturbing light is applied also is a requirement for optimum lighting.

The type of lighting device and the lighting method are selected in dependence upon the particular purpose, such as inspection. Conventionally, since guidelines for selecting the lighting device and lighting method have not been clearly set forth, which lighting device and lighting method to employ has been left to selection by trial and error.

Even if a lighting device or lighting method has been selected appropriately, it is not easy to set the lighting device at the optimum position and set-up angle. Conventionally, an operation for adjusting the position and angle of the lighting device is carried out while an operator is observing an image displayed on a monitor.

In accordance with the conventional methods of this kind, however, skill is needed to decide the position and angle of the lighting device and making adjustments to obtain the optimum state is difficult for an inexperienced worker. Further, the position and angle of the lighting device tend to vary depending upon the worker, and the lighting device will not always be placed at the optimum position or angle. A problem that arises is that the accuracy of recognition varies from one adjustment to another.

The lighting conditions include not only the position and angle of the lighting device but also the luminous intensity of the device, which is an important factor.

The judgment as to whether the lighting conditions are suitable preferably is made by evaluating the obtained image more realistically. For example, the optimum lighting conditions for examining article quality are those that enable acceptable articles and defective articles to be distinguished with certainty. In other words, lighting conditions which provide high discrimination accuracy are best.

Further, optimum lighting conditions for purposes of measurement are those under which a dispersion among measured values is made small. In other words, lighting conditions which provide high measurement accuracy are best.

However, in accordance with the conventional adjustment method described above, there is no assurance that lighting conditions that make it possible for acceptable articles and defective articles to be distinguished reliably and lighting conditions that diminish the disparity among measured values will be obtained at all times.

The setting of appropriate photographic conditions or of the appropriate photographic environment also is an important factor. For example, it is necessary to select the optimum lens in order to place the camera at a convenient position in terms of the inspecting system arrangement and to obtain a field of view suited to the purpose of inspection. In addition, there are cases in which it is necessary to use a close-up photography ring in order to realize the desired set-up distance and field of view. In order to realize the desired field of view under a limitation that a currently existing lens be used, a problem that needs to be solved is determining how to set the placement distance and close-up photography ring properly.

Disclosure of the Invention

An object of the present invention is to automate or semiautomate, without requiring skill, the deciding or selecting of a lighting device and lighting method, the deciding or selecting of such lighting conditions as the set-up position, set-up angle and luminous intensity of the lighting device, and the deciding or selecting of imaging conditions that include the type of lens, close-up photography ring and camera and set distance of the camera.

Another object of the present invention is to estimate and optimize lighting conditions and imaging conditions based upon image data obtained by actually imaging an object.

More specifically, it is so arranged that lighting conditions can be set from the viewpoint of how acceptable articles and defective articles can be distinguished from each other with certainty in the inspection of acceptable articles and how measured values having small variance can be obtained in case of measurement.

The present invention provides an apparatus and method for aiding in the deciding of lighting conditions, which apparatus and method derive an appropriate setting position of a lighting device.

An apparatus for aiding in deciding of lighting conditions according to the present invention comprises an input unit for entering information relating to a shape feature of an object, a memory device for storing information relating to characteristics of lighting devices, an operation unit for deriving a setting position of the lighting devices that satisfies a requirement for optimum photography of the object based upon the shape feature of the object entered from the input unit and characteristics that have been stored in the memory device regarding a designated lighting device, and an output unit for outputting the setting position derived by the arithmetic unit.

In an image processing system having lighting devices for lighting an object, an image pick-up device for photographing the object under lighting provided by the lighting devices and outputting a video signal representing the photographed object, and a processing unit for executing image processing relating to the object using the video signal outputted by the image pick-up device, a method of aiding in deciding of lighting conditions according to the present invention comprises accepting information relating to a shape feature of the object, deriving a setting position of a designated lighting device that satisfies a requirement for optimum photography of the object based upon the information relating to the shape feature of the object and characteristics that have been set in advance regarding the lighting device, and outputting the setting position derived.

In accordance with the present invention, an appropriate setting position of the lighting device is outputted merely by entering the necessary information, as set forth above. Accordingly, the lighting device can be set at the appropriate position without skill being required.

The positioning of the lighting device may be performed by the user or it can be performed automatically utilizing a lighting-device position adjusting unit.

The present invention provides an apparatus and method for aiding in deciding of lighting conditions, in which an appropriate setting angle of a lighting device is derived.

An apparatus and method for aiding in deciding of lighting conditions according to the present invention comprises an input unit for entering information relating to a shape feature of an object, an operation unit for deriving a setting angle of a lighting device that satisfies a requirement for optimum photography of the object based upon the shape feature of the object entered from the input unit, and an output unit for outputting the setting angle derived by the operation unit.

In an image processing system having a lighting device for lighting an object, a image pick-up device for photographing the object under lighting provided by the lighting device and outputting a video signal representing the photographed object, and a processing unit for executing image processing relating to the object using the video signal outputted by the image pick-up device, a method of aiding in deciding of lighting conditions according to the present invention comprises accepting information relating to shape features of the object, deriving a setting angle of the lighting device that satisfies a requirement for optimum photography of the object based upon the information relating to the shape features of the object, and outputting the setting position of the lighting device based upon the information relating to the shape features of the object, and

4

outputting the setting angle derived.

In accordance with the present invention, an appropriate setting angle of the lighting device is outputted merely by entering the necessary information, as set forth above. Accordingly, the lighting device can be set at the appropriate angle without skill being required.

The angle setting of the lighting device may be performed by the user or it can be performed automatically utilizing a lighting-device angle adjusting unit.

The present invention provides an apparatus and method for aiding in deciding of lighting conditions, in which an appropriate type of lighting device and lighting method are derived.

An apparatus for aiding in deciding of lighting conditions according to the present invention comprises a memory device for storing beforehand appropriate types of lighting devices and lighting methods in correlation with information relating to purposes of illumination and disparities in optical properties between an observed portion and a background portion of an object, an input unit for entering information relating to the purpose of illumination and the disparity in optical properties between the observed portion and background portion of the object, a processing unit for deriving an appropriate type of lighting device and lighting method, which have been stored in the memory device, in accordance with the information entered from the input unit, and a display unit for displaying the appropriate type of lighting device and lighting method that have been derived by the processing unit.

A method of aiding in deciding of lighting conditions according to the present invention comprises accepting information relating to a purpose of illumination and a disparity in optical properties between an observed portion and a background portion of an object, selecting, from types of lighting devices and lighting methods that have been set in advance, a type of lighting device and illumination method suited to the information accepted, and outputting the selected lighting device and lighting method in a visible form.

In accordance with the present invention, an appropriate type of lighting device and lighting method can be derived by entering the purpose of inspection, the disparity in optical properties between an observed portion and a background portion of the object and, if necessary, the size of the field of view. As a result, an appropriate lighting device and lighting method can be selected without technical experience or expertise. In addition, when an expert performs the operation, the time required for deciding the lighting device and method can be shortened.

The present invention provides an apparatus and method for evaluating and optimizing lighting conditions based upon actual image data obtained by actually imaging an object, or for aiding in the optimization. In particular, the position of the lighting device is adjusted according to the invention.

An apparatus for aiding in setting of lighting conditions according to the present invention comprises a lighting device for lighting an object, a supporting device for supporting the lighting device in a positionally adjustable manner, an image pick-up device for imaging the object under lighting provided by the lighting device and outputting a video signal representing an image of the object, picture-quality histogram generating circuit means for generating a picture-quality histogram that represents degree of acceptability of picture quality with respect to brightness based upon the video signal outputted by the image pick-up means, evaluated-value calculating circuit means for calculating an evaluated value of brightness based upon the picture-quality histogram generated by the picture-quality histogram generating circuit means, comparing circuit means for comparing a currently prevailing evaluated value calculated by the evaluated-value calculating means with an immediately preceding evaluated value that prevailed prior to a change in position of the lighting device, and output means for outputting results of the comparison performed by the comparing circuit means.

In a first embodiment, the output means is a display unit that designates a direction for positional adjustment of the lighting device in dependence upon the results of the comparison performed by the comparing circuit means.

In a second embodiment, the supporting device includes a driving device for changing the position of the lighting device. The output means is a display unit that designates a direction for positional adjustment of the lighting device in dependence upon the results of the comparison performed by the comparing circuit means. Further provided are an input unit for entering a command for the purpose of driving the driving device, and a control unit for controlling the driving device in response to the command entered through the input unit.

In a third embodiment, the supporting device includes a driving device for changing the position of the lighting device. Further provided is control means for controlling the driving device in dependence upon the results of comparison performed by the comparing circuit means and adjusting the position of the lighting device to an optimum position.

In an image processing system having a lighting device for lighting an object, a supporting device for supporting the lighting device in a positionally adjustable manner, and an image pick-up device for imaging the object under lighting provided by the lighting device and outputting a video signal representing an image of the object, a method of aiding in setting of lighting conditions according to the present invention comprises generating a picture-quality histogram that represents degree of acceptability of picture quality with respect to brightness based upon the video signal outputted by the image pick-up device, calculating an evaluated value of brightness based upon the picture-quality histogram generated, comparing a calculated currently prevailing evaluated value with an immediately preceding evaluated value that prevailed prior to a change in position of the lighting device, and outputting results of the comparison.

In accordance with the present invention, lighting conditions are optimized so as to obtain an excellent image based upon the image data acquired by actually imaging the object. As a result, an excellent image is obtained in the same manner at all times without requiring special skill and even if the workers are different.

The height of the lighting device is adjusted manually while the worker observes a displayed instruction in a first embodiment and semiautomatically in a second embodiment.

In a third embodiment, the setting of the height of the lighting device is completely automated, and therefore the positional setting of the lighting device is greatly facilitated and a more efficient and rational operation can be achieved.

The principal portion of the above-described picture-quality histogram generating circuit is capable of being utilized as an edge-image generating unit.

The present invention provides an edge-image generating unit that utilizes image-quality histogram generating circuit means.

The edge-image generating unit according to the present invention comprises an image pick-up device for imaging an object and outputting a video signal representing an image resulting from imaging, A/D converting means for converting the video signal, which is outputted by the image pick-up device, into digital image data, an image memory for storing one screen of digital image data resulting from the A/D conversion, window means for setting a window on the one screen of image data and extracting pixel data regarding a plurality of pixels within the window, means for generating data relating to slope of the image data within the window, means for calculating degree of matching between the data relating to slope and a plurality of edge patterns, means for calculating an evaluated value of edge likeness from the degree of matching, and means for executing control in such a manner that the calculation of the evaluated value of edge likeness is performed with regard to all pixels of one screen.

In accordance with the present invention, it is arranged to set a window on one screen of image data and extract pixel data regarding a plurality of pixels within the window, generate data relating to the slope of the image data within the window, calculate degree of matching between the data relating to the slope and a plurality of edge patterns, calculate an evaluated value of edge likeness from the degree of matching, perform the calculation of the evaluated value of edge likeness with regard to all pixels of one screen and obtain edge image data comprising the evaluated values. As a result, an excellent edge image with an emphasized edge of good quality can be generated, and it is possible to eliminate the influence of noise or the like.

The present invention provides an apparatus and method for actually imaging a sample of an object for examination or recognition (measurement) under lighting provided by a lighting device, actually performing examination or recognition (measurement) of the sample based upon image data obtained by the imaging, and optimizing lighting conditions (e.g., luminous intensity of the lighting device) by evaluating the results of examination or recognition.

Described first will be an apparatus and method for aiding in setting of lighting conditions for a system in which an acceptable-article inspection is carried out by distinguishing between acceptable articles and defective articles.

An apparatus for aiding in setting of lighting conditions according to the present invention comprises a sample supply device for successively supplying a plurality of samples of acceptable articles and defective articles to a predetermined observation position, a lighting device capable of varying lighting conditions for lighting a sample at the observation position, an image pick-up device for imaging, under lighting provided by the lighting device, each sample of the acceptable and defective articles brought to the observation position by the sample supply device and outputting a video signal representing the samples imaged, characteristic-quantity measuring means for measuring a characteristic quantity of each sample based upon the video signal outputted by the image pick-up device, means for calculating an evaluated value relating to discrimination accuracy of acceptable articles and defective articles based upon the characteristic quantity measured by the characteristic-quantity measuring means, and means for retrieving lighting conditions, which will give the best evaluated value, based upon evaluated values for each of the lighting conditions obtained while changing the lighting conditions of the lighting device.

A method of aiding in setting of lighting conditions according to the present invention comprises setting up a lighting device capable of varying lighting conditions for lighting a predetermined observation position, successively supplying a plurality of samples of acceptable articles and defective articles to the observation position, imaging, under lighting provided by the lighting device, each sample of the acceptable and defective articles supplied to the observation position, measuring a characteristic quantity of each sample based upon a video signal obtained by imaging, calculating an evaluated value relating to discrimination accuracy of acceptable articles and defective articles based upon the characteristic quantity measured, obtaining an evaluated value for every lighting condition while changing the lighting conditions of the lighting device, and retrieving lighting conditions that will give the best evaluated value.

In accordance with the present invention, lighting conditions are evaluated based upon an image obtained by imaging actual acceptable articles and defective articles, and lighting conditions are retrieved that make it possible to reliably distinguish between acceptable and defective articles to the greatest possible degree.

Described next will be an apparatus and method for aiding in setting of lighting conditions for a system in which a characteristic quantity of an object is measured.

An apparatus for aiding in setting of lighting conditions according to the present invention comprises a sample supply device for successively supplying a plurality of samples to a predetermined observation position, a lighting device capable of varying lighting conditions for lighting a sample at the observation position, an image pick-up device for imaging, under lighting provided by the lighting device, each sample brought to the observation position by the supply device and outputting a video signal representing each sample imaged, characteristic-quantity measuring means for measuring a characteristic quantity of each sample based upon the video signal outputted by the image pick-up device, means for calculating dispersion of the characteristic quantities measured by the characteristic-quantity measuring means, and means for retrieving lighting conditions, which will minimize the dispersion, based upon dispersion for every lighting condition obtained while varying the lighting conditions of the lighting device.

A method of aiding in setting of lighting conditions according to the present invention comprises setting up a lighting device capable of varying lighting conditions for lighting a sample at a predetermined observation position, successively supplying a plurality of samples to the observation position, imaging, under lighting provided by the lighting device, each sample supplied to the observation position, measuring a characteristic quantity of each sample based upon a video signal obtained by imaging, calculating dispersion of characteristic quantities of all samples measured, obtaining dispersion for every lighting condition while varying the lighting conditions of the lighting device, and retrieving lighting conditions that will minimize the variance.

In accordance with the present invention, samples of objects for measurement are actually imaged, characteristic quantities of the samples are actually measured using the image data obtained by imaging, and lighting conditions that will minimize dispersion of measured characteristic quantities are retrieved. As a result, dispersion among measured values is reduced and highly precise measurement is possible at all times.

The sample supply device is constituted by a rotary table on which each sample is placed, and a driving device for rotatively driving the rotary table. As a result, the arrangement can be simplified and space can be conserved.

Finally, the present invention provides an apparatus for aiding in deciding of appropriate photographic conditions for photography performed by a camera to which a lens and a required close-up photography ring are freely attached and detached.

This apparatus comprises an input unit for entering at least two items of information from among camera field-of-view information, camera set-up-distance information relating to set-up distance from an object of photography, lens information and close-up photography ring information, an operation unit for calculating the remaining items of information using the at least two items of information entered from the input unit, and a display unit for displaying the remaining information represented by the results of calculation performed by the operation unit.

In accordance with the present invention, at least two items of information from among camera field-of-view information, camera set-up-distance information regarding an object of photography, lens information and close-up photography rang information are entered, whereby the remaining items of information are calculated and displayed. As a result, information such as appropriate lens, photography ring and camera set-up-distance information can be selected or decided in an interactive format and in a short time.

It goes without saying that the evaluation and optimization of imaging conditions (the imaging system) can be performed, in the same manner as in the case of evaluating and optimizing the lighting conditions, by actually imaging an object under each of a plurality of types of imaging conditions, calculating an evaluated value of imaging conditions based upon image data obtained by imaging, and performing the evaluation and optimization based upon this evaluated value.

Brief Description of the Drawings

Figs. 1 through 6 show examples of lighting devices, in which:
Fig. 1 is a perspective view showing a ring fluorescent lamp;
Fig. 2 is a perspective view showing a straight fluorescent lamp;
Fig. 3 is a perspective view showing a ring light guide;
Fig. 4 is a perspective view showing a slit light guide;
Fig. 5 is a perspective view showing a straight light guide; and
Fig. 6 is a perspective view showing a bifurcated light guide;
Figs. 7 through 11 illustrate examples of lighting methods, in which:

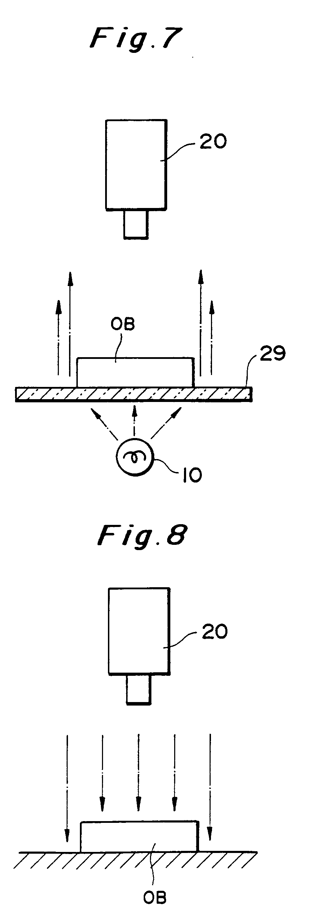

Fig. 7 shows lighting by transmitted light;
Fig. 8 shows lighting by uniform light;

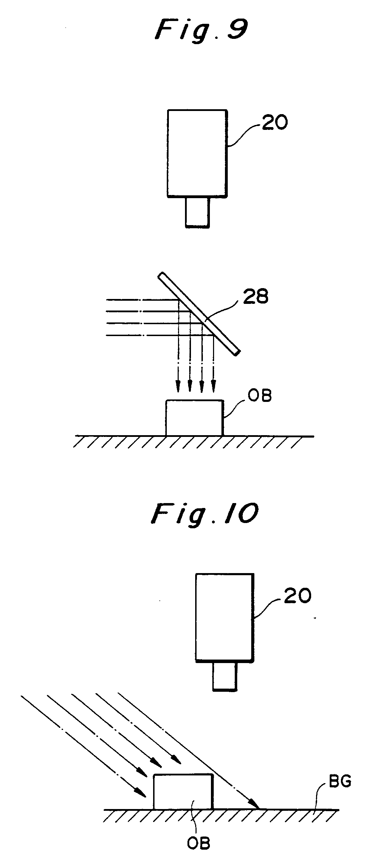

Fig. 9 shows lighting by coaxial incident illumination from above;
Fig. 10 shows lighting by parallel rays; and

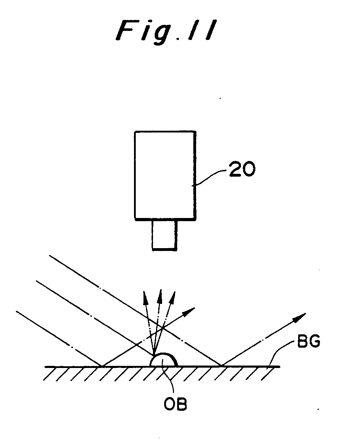

Fig. 11 shows lighting by dark field illumination;

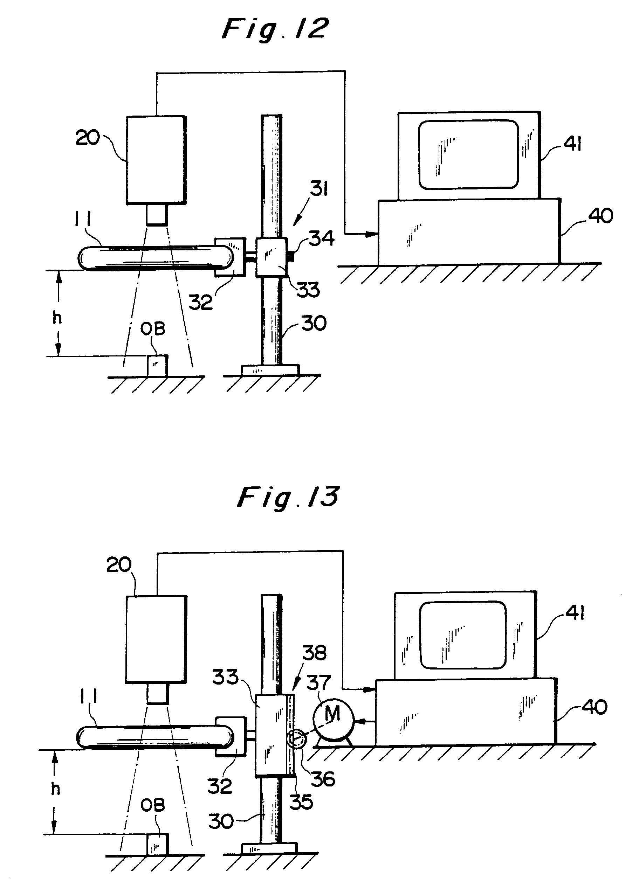

Fig. 12 illustrates the overall construction of an image processing system;
Fig. 13 illustrates an another example of an image processing system;

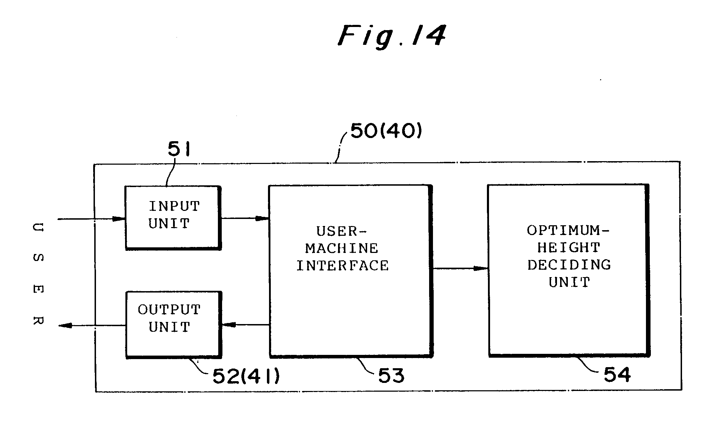

Fig. 14 is a block diagram illustrating the construction of an apparatus for aiding in the deciding of lighting conditions, the apparatus being suitable for aiding in the deciding of the optimum height of a lighting device;

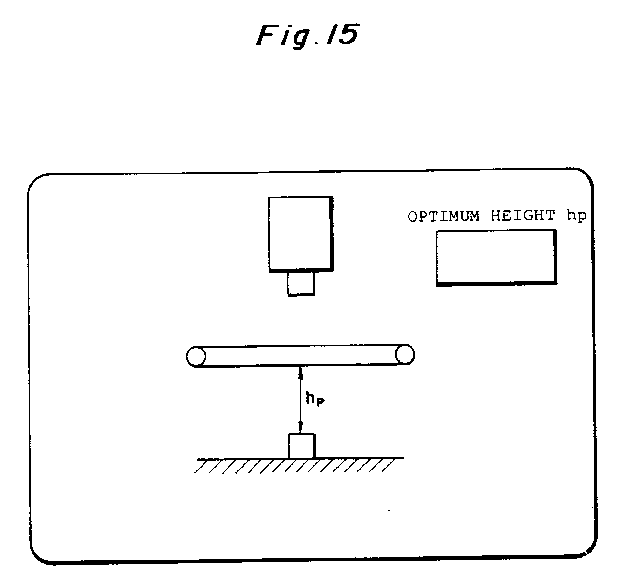

Fig. 15 illustrates an example of a display of decided optimum height presented on a display unit;

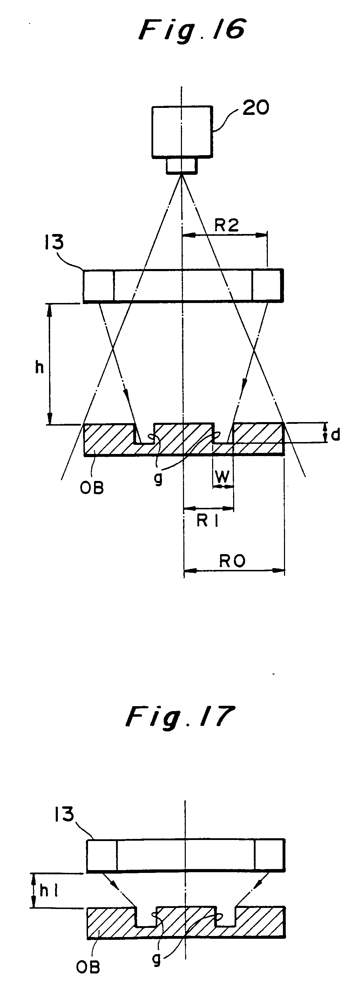

Figs. 16 and 17 are for describing a method of deciding the optimum set-up height of a lighting device;

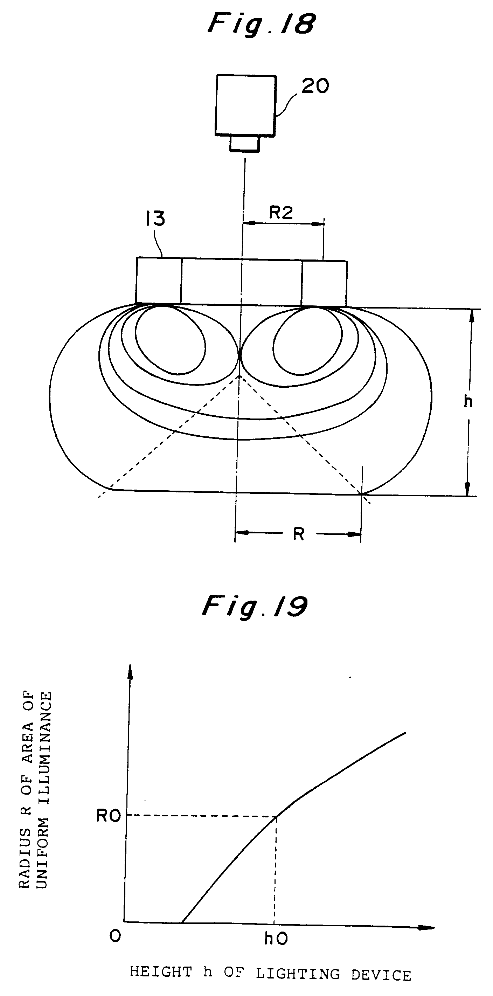

Fig. 18 illustrates a lighting device and isophotic lines of the illuminating light;
Fig. 19 is a graph illustrating the relationship between the radius of an area illuminated at a uniform illuminance and the set-up height of a lighting device;

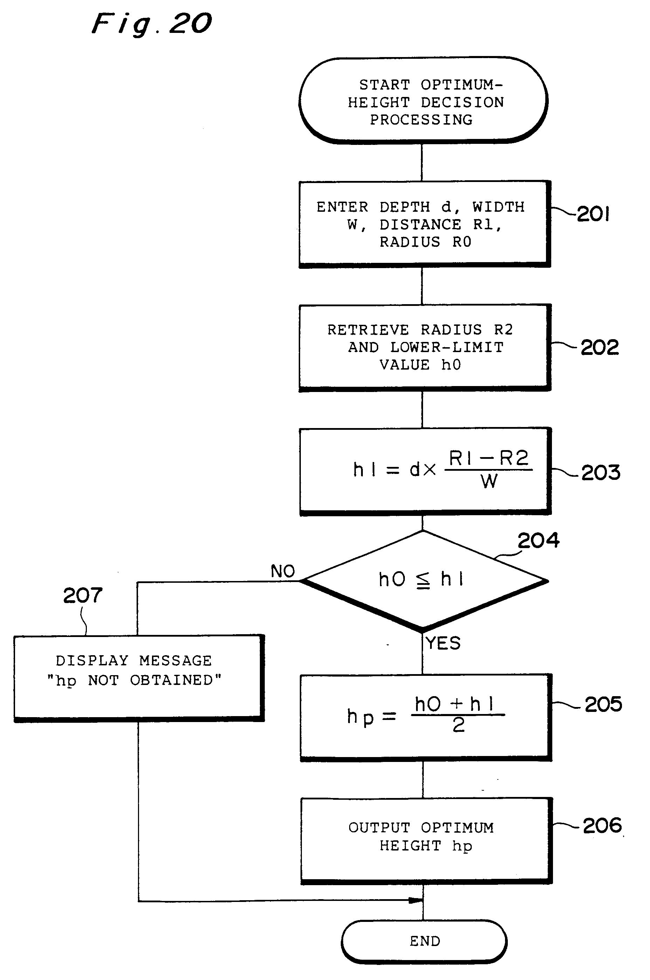

Fig. 20 is a flowchart showing the procedure of processing for deciding optimum height;

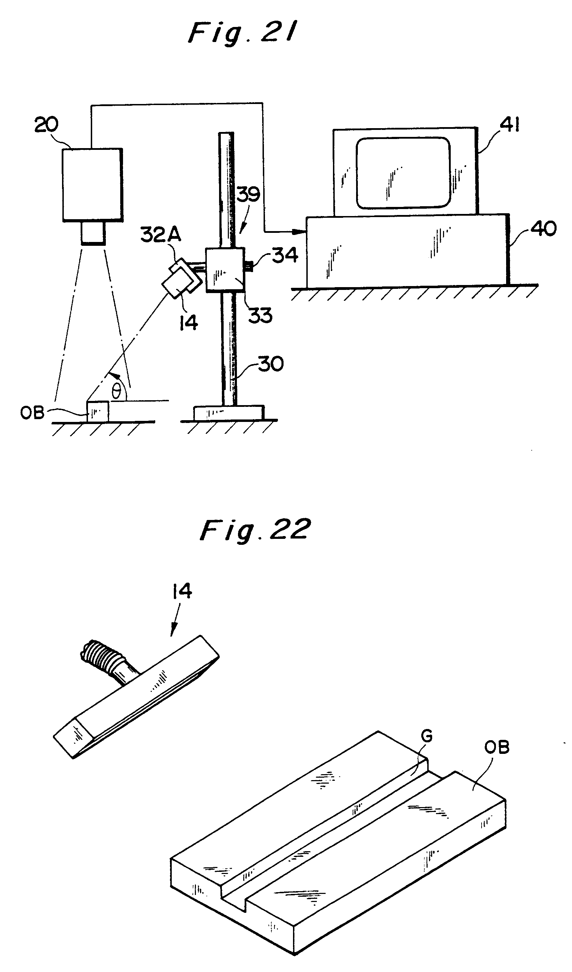

Fig. 21 illustrates another example of an image processing system;
Fig. 22 is a perspective view showing the shape of an object and the positional relationship between the object and a lighting device;

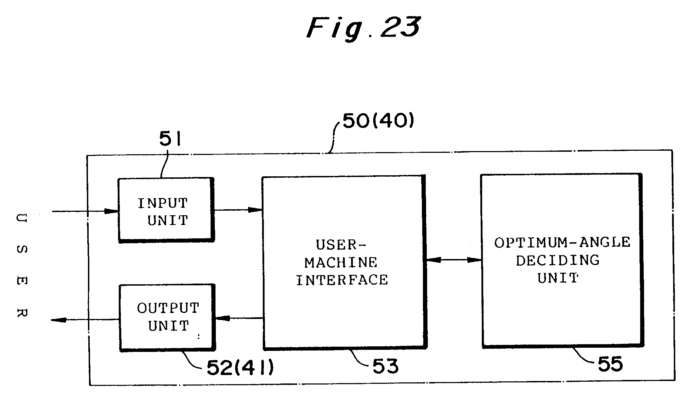

Fig. 23 is a block diagram illustrating the construction of an apparatus for aiding in the deciding of lighting conditions, the apparatus being suitable for aiding in the deciding of optimum angle;

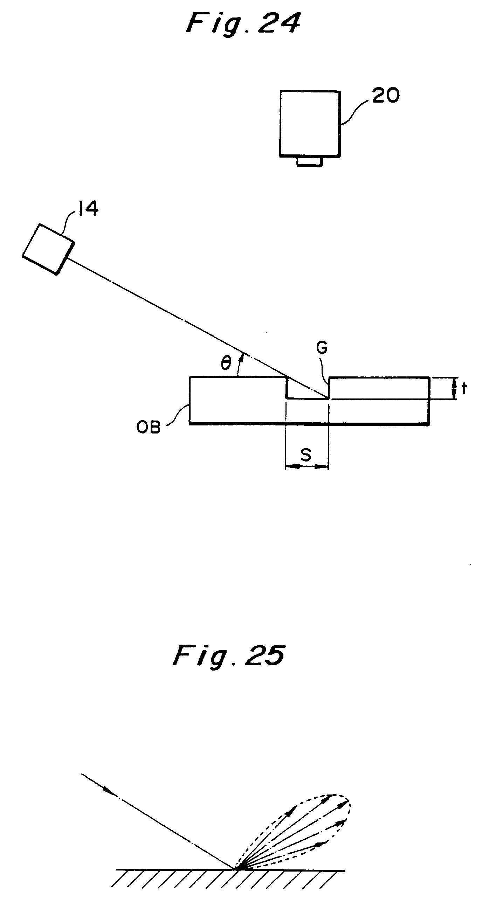

Fig. 24 is for describing a method of deciding optimum set-up angle of a lighting device;
Fig. 25 shows a state of imperfect diffuse reflection;

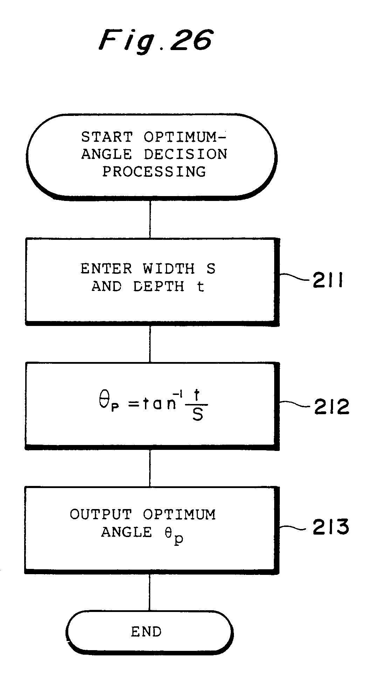

Fig. 26 is a flowchart showing the procedure of processing for deciding optimum angle;

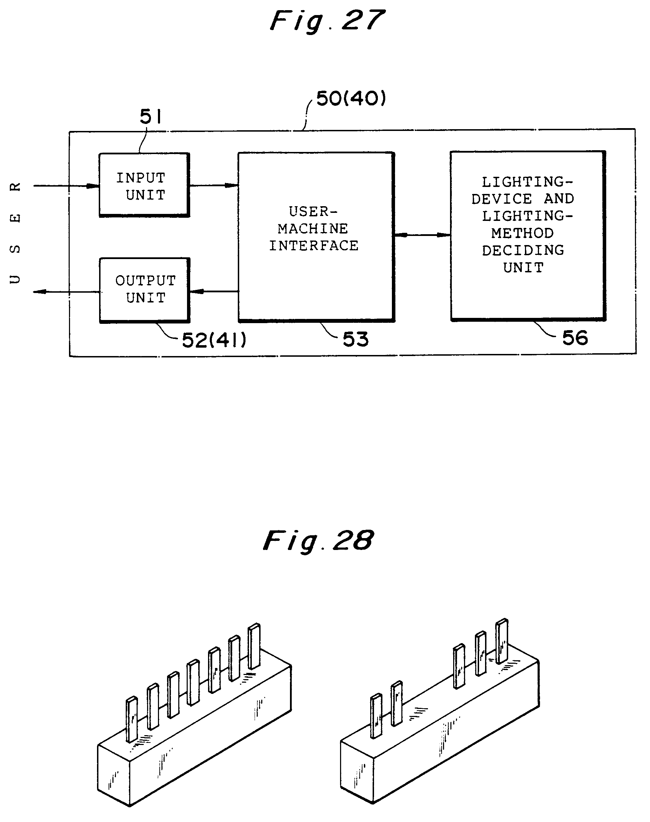

Fig. 27 is a block diagram illustrating the construction of an apparatus for aiding in the deciding of lighting conditions, the apparatus being suitable for aiding in the deciding of a lighting device and lighting method;
Fig. 28 is a perspective view showing the external appearance of connectors as one example of an object;

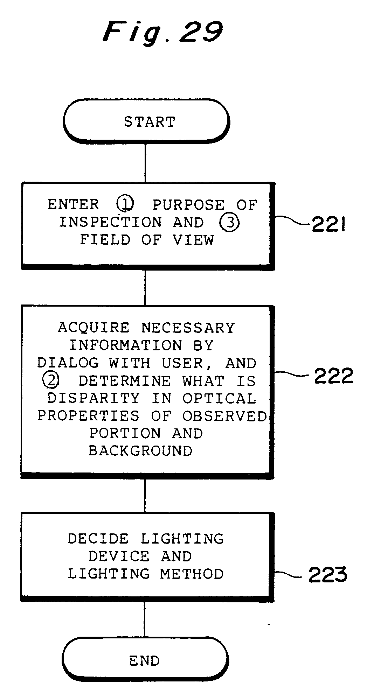

Fig. 29 is a flowchart showing the overall procedure of processing for deciding a lighting device and lighting method;

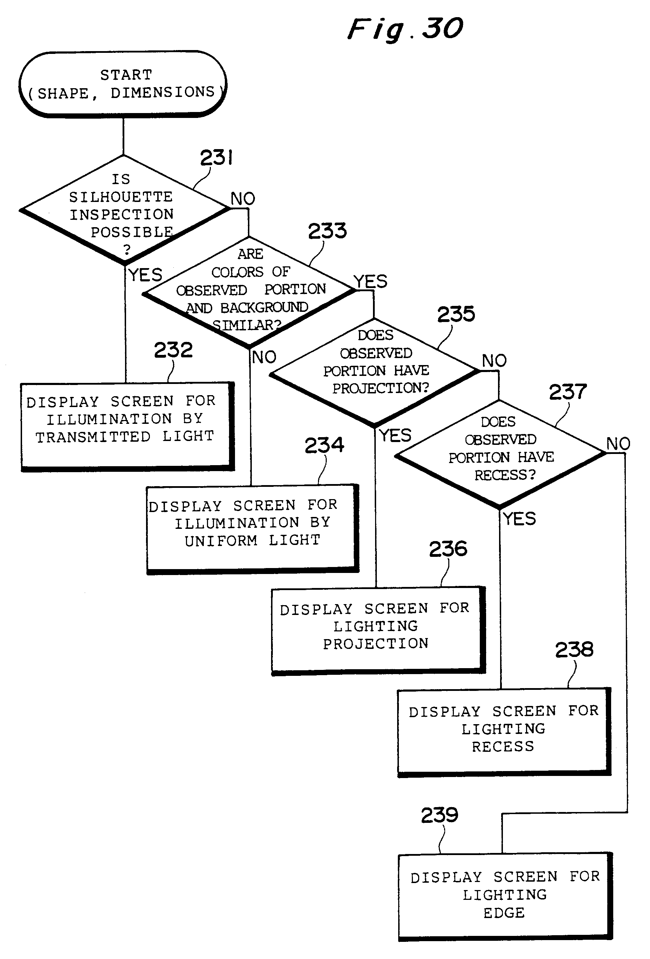

Fig. 30 is a flowchart showing the procedure of processing for deciding a lighting device and lighting method in a case where inspection of shape and dimensions is the objective;

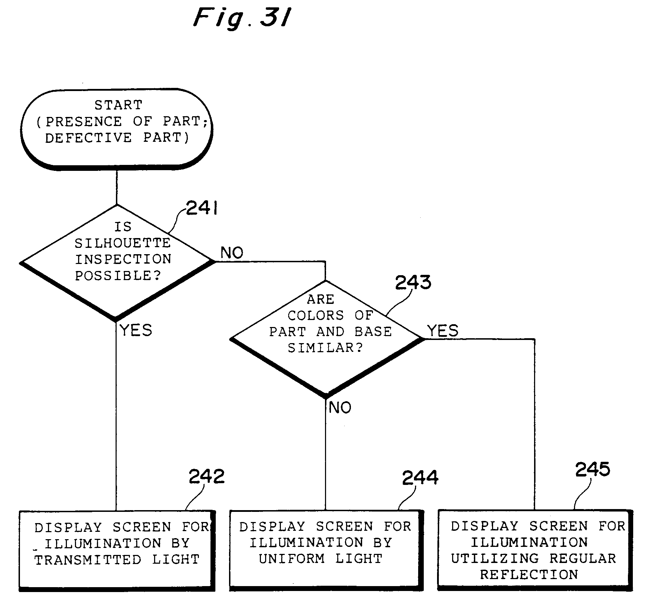

Fig. 31 is a flowchart showing the procedure of processing for deciding a lighting device and lighting method in a case where inspection for the presence of a part and inspection for defective parts are the objectives;

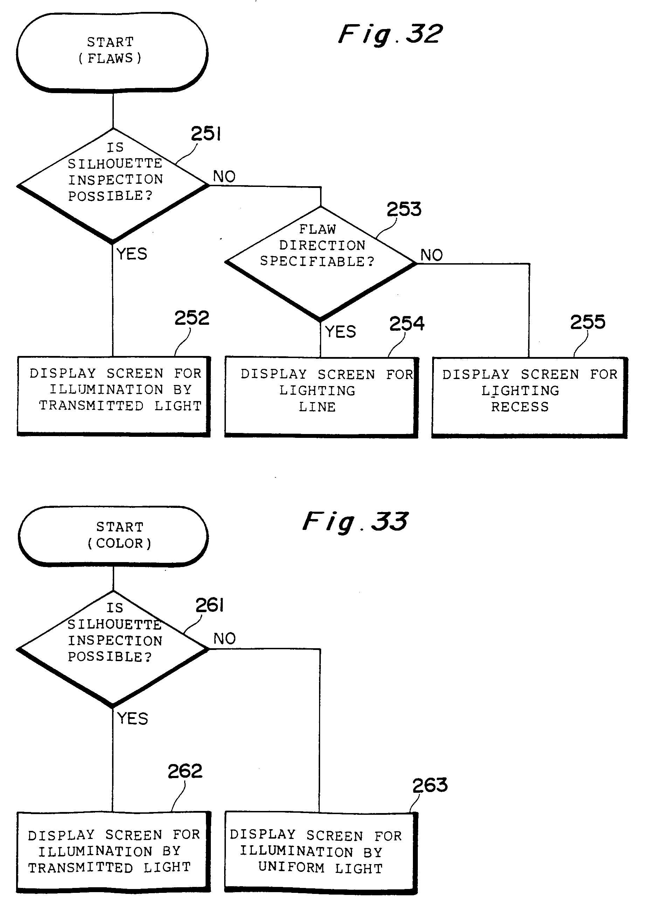

Fig. 32 is a flowchart showing the procedure of processing for deciding a lighting device and lighting method in a case where inspection for flaws is the objective;
Fig. 33 is a flowchart showing the procedure of processing for deciding a lighting device and lighting method in a case where inspection of color is the objective;

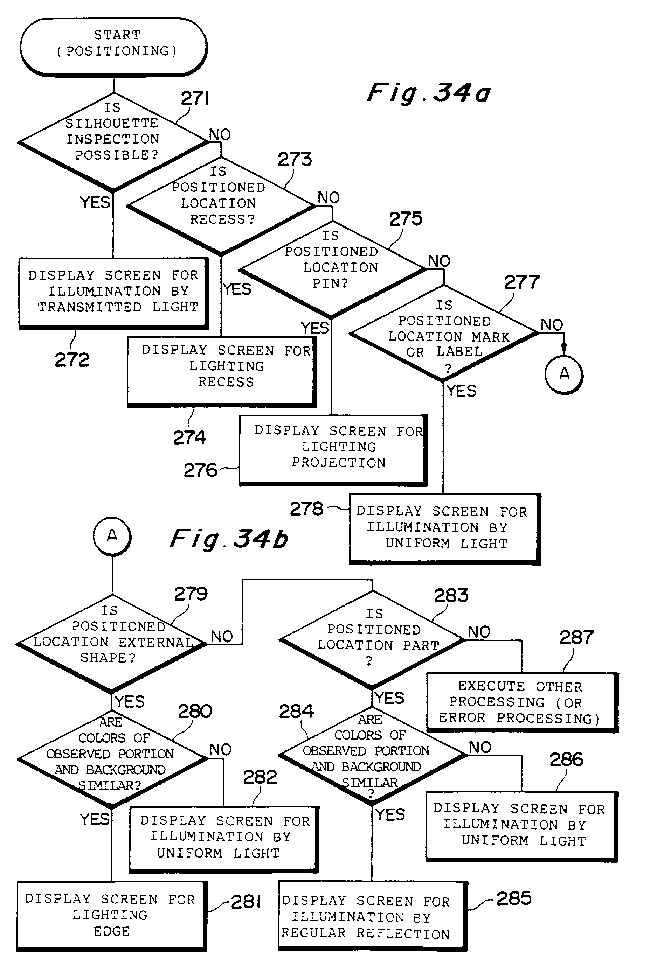

Figs. 34a and 34b are flowcharts showing the procedure of processing for deciding a lighting device and lighting method in a case where positioning is the objective;

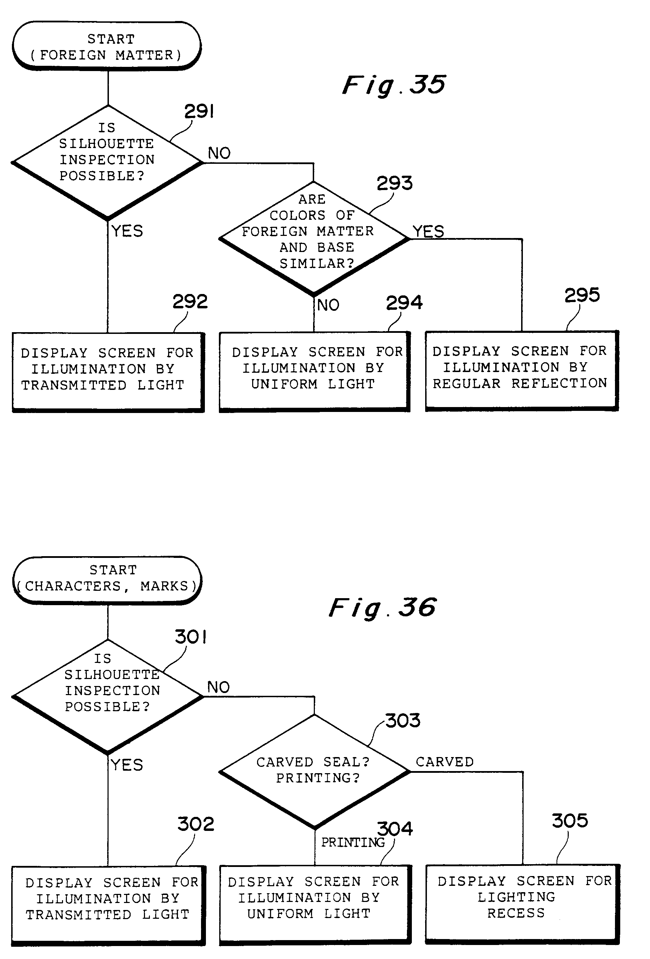

Fig. 35 is a flowchart showing the procedure of processing for deciding a lighting device and lighting method in a case where inspection for foreign matter is the objective;

Fig. 36 is a flowchart showing the procedure of processing for deciding a lighting device and lighting method in a case where inspection of characters and marks is the objective;

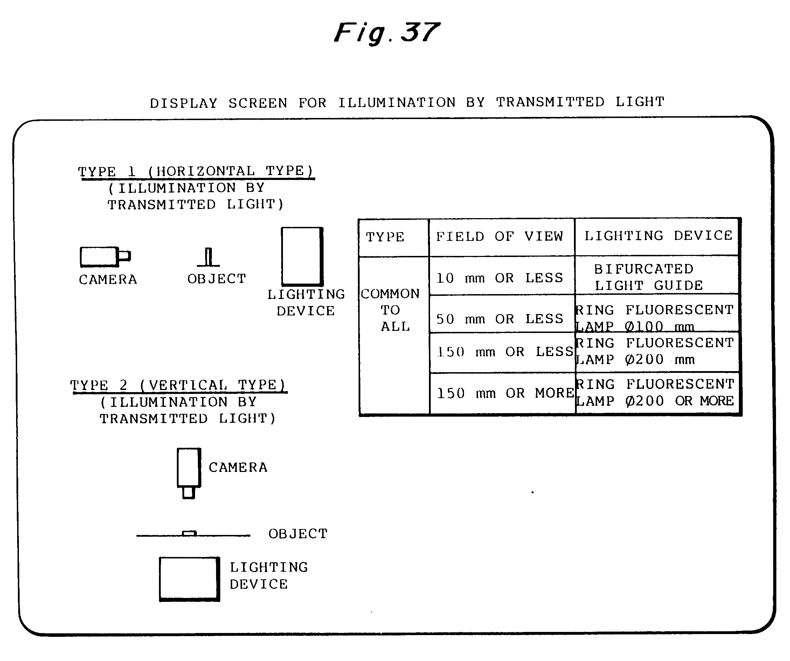

Fig. 37 shows an example of a display of a screen for illumination by transmitted light;

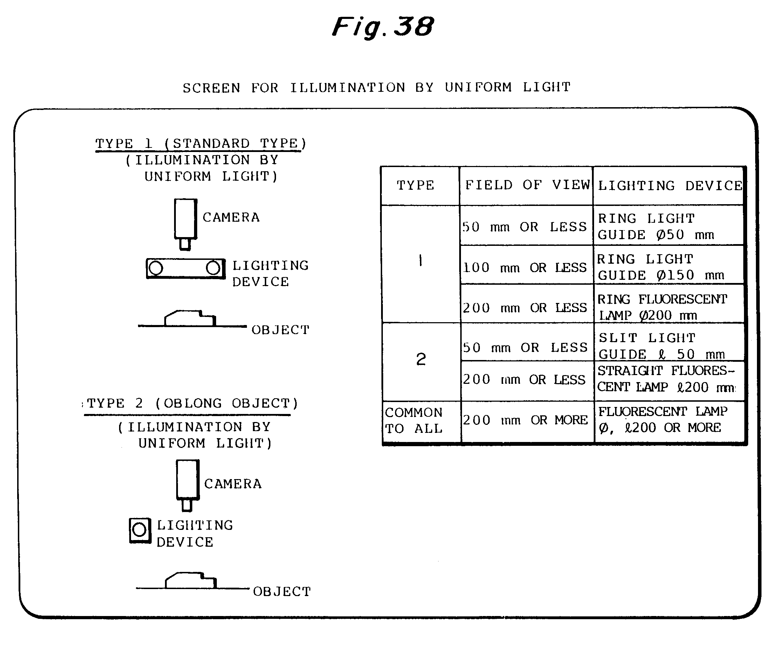

Fig. 38 shows an example of a display of a screen for illumination by uniform light;

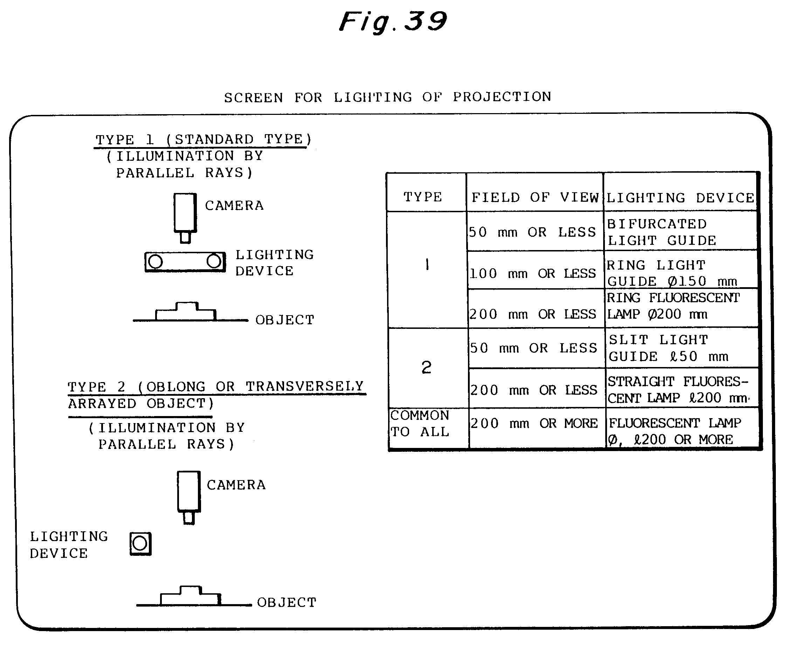

Fig. 39 shows an example of a display of a screen for illumination of a projection on an irregular surface;

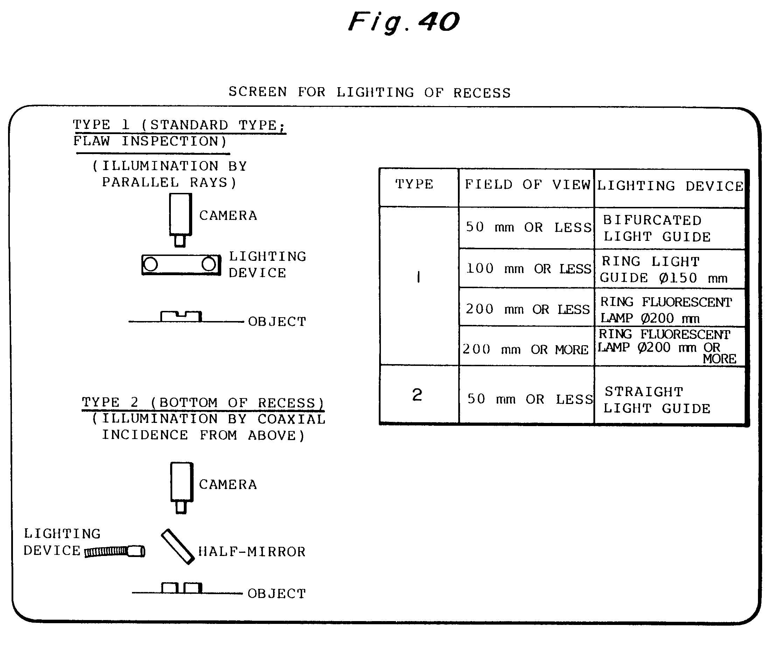

Fig. 40 shows an example of a display of a screen for illumination of a recess on an irregular surface;

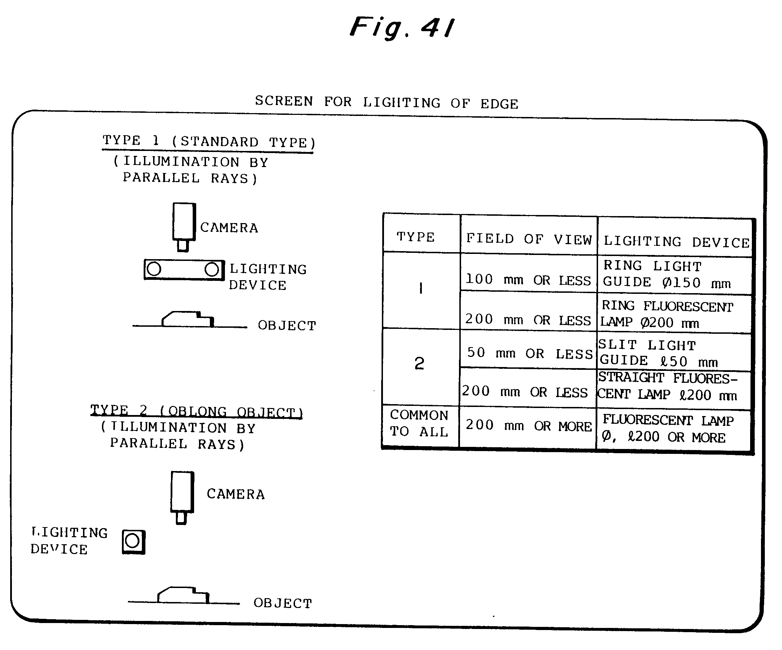

Fig. 41 shows an example of a display of a screen for illumination of an edge on an irregular surface;

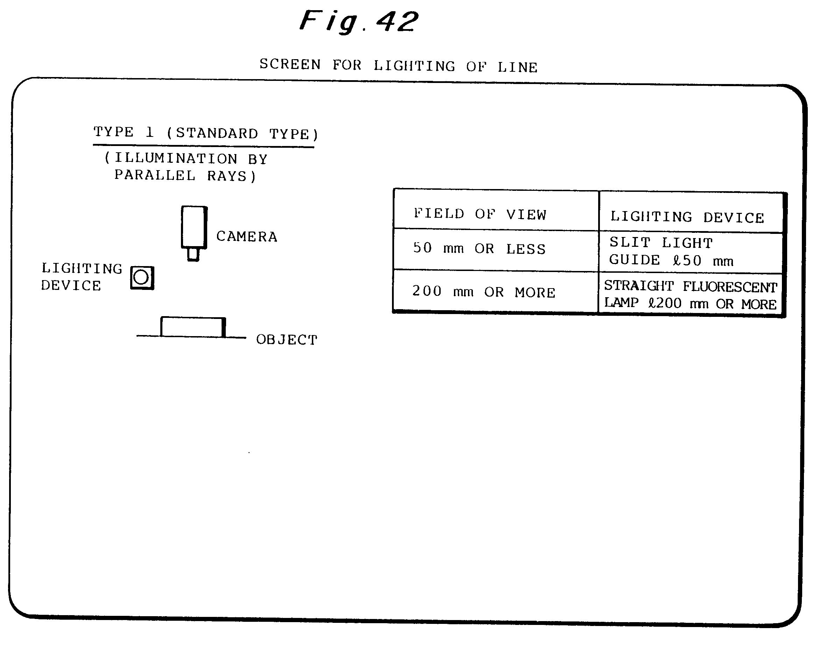

Fig. 42 shows an example of a display of a screen for illumination of a line on an irregular surface;

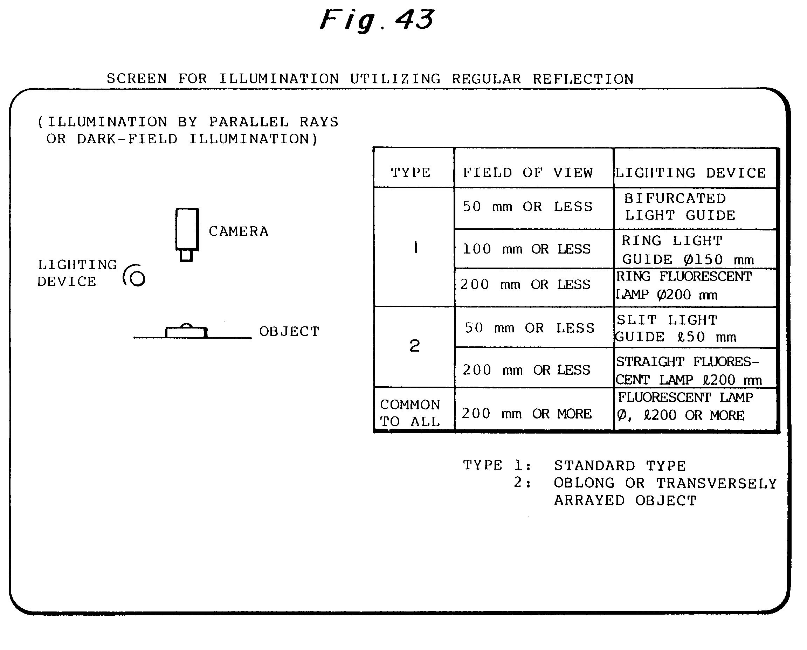

Fig. 43 shows an example of a display of a screen for illumination utilizing regular reflection;

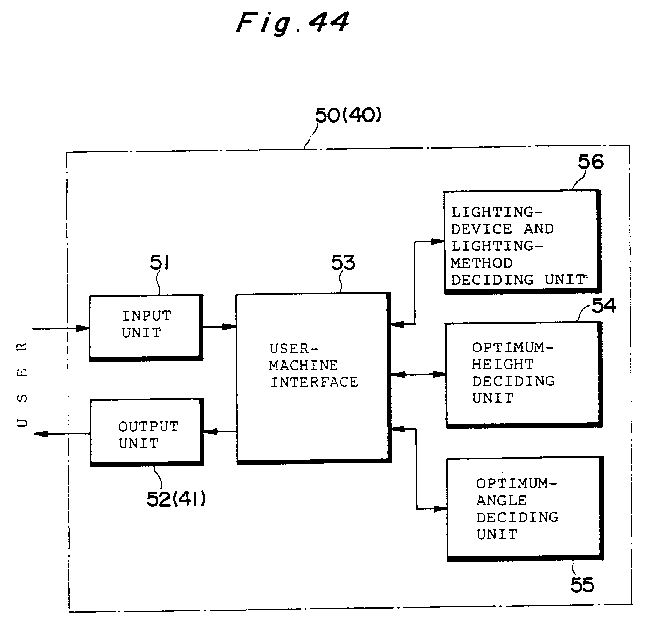

Fig. 44 is a block diagram illustrating the construction of an apparatus suitable for aiding in the deciding of a lighting device and lighting method and the deciding of optimum height or optimum angle;

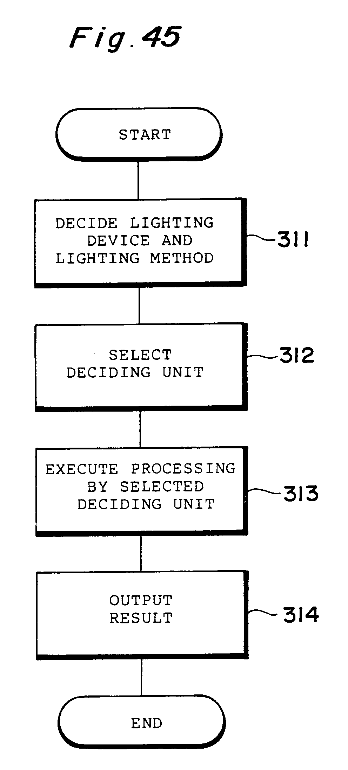

Fig. 45 is a flowchart showing the entirety of processing for deciding a lighting device and lighting method as well as the optimum height or optimum angle;

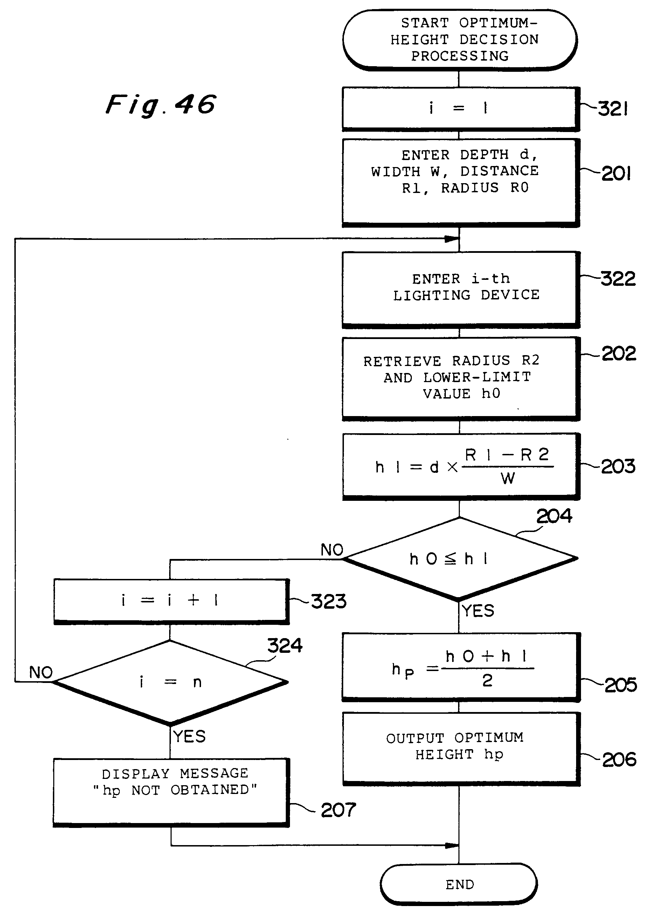

Fig. 46 is a flowchart showing the procedure of processing for deciding optimum height in case of a plurality of lighting devices;

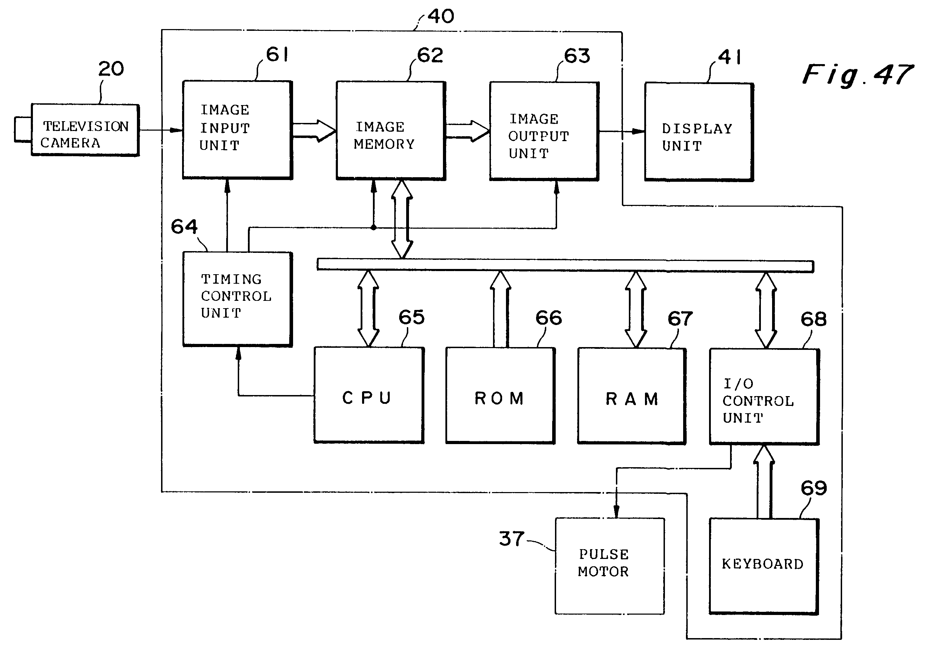

Fig. 47 is a block diagram showing the circuit arrangement of an image processor in an apparatus for aiding in setting of optimum lighting conditions;

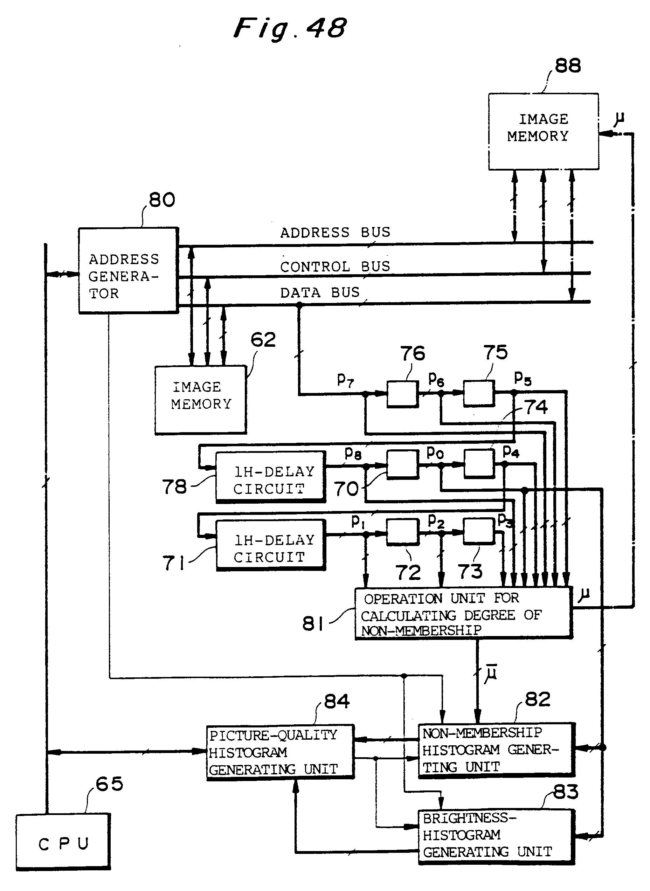

Fig. 48 is a block diagram showing the circuit construction of a histogram generating circuit;

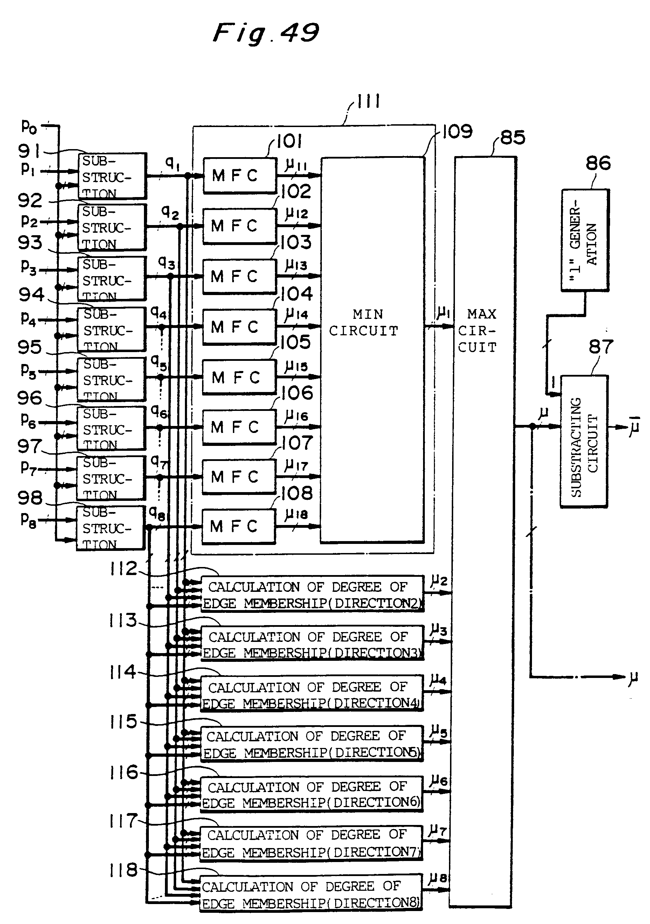

Fig. 49 is a block diagram showing the circuit construction of an operation unit for calculating degree of non-membership;

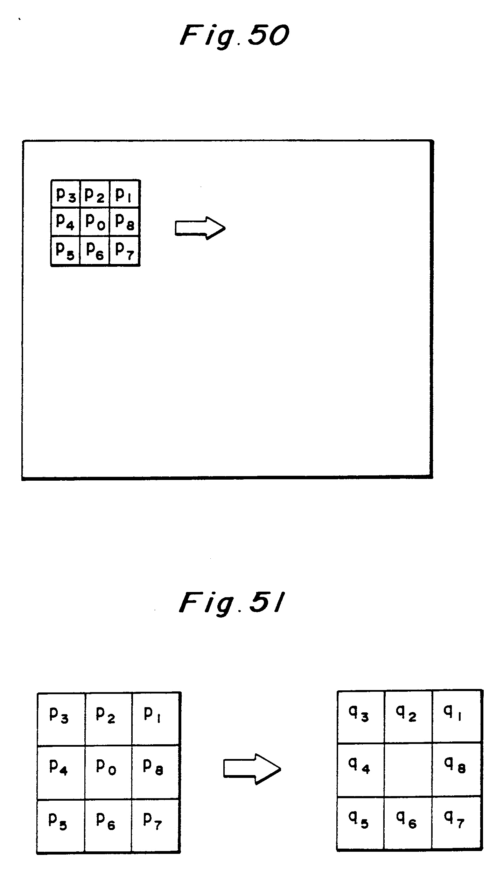

Fig. 50 illustrates a window set on an image;

Fig. 51 is for describing the operation of a subtracting circuit that converts brightness data into data representing a difference in brightness;

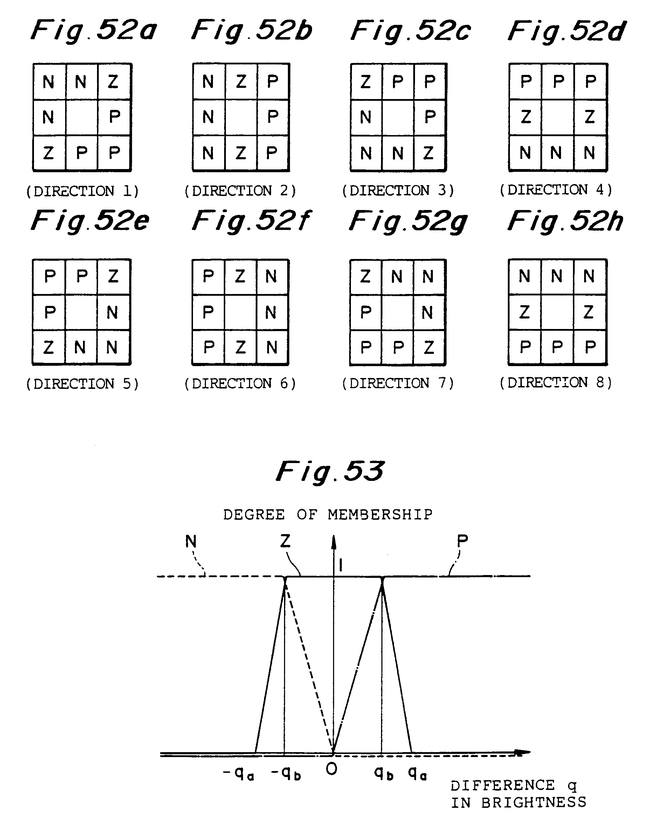

Figs. 52a through 52h show fuzzy models representing edge patterns;

Fig. 53 is a graph showing a membership function;

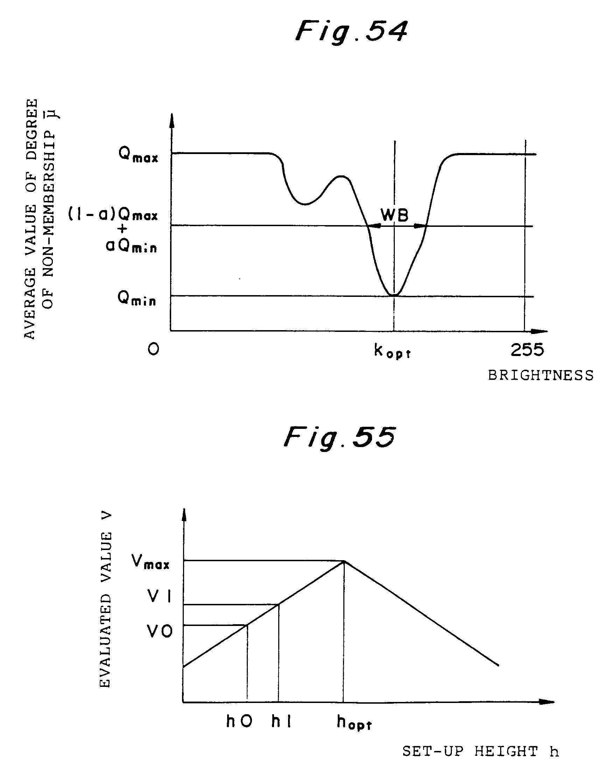

Fig. 54 is a graph showing a picture-quality histogram;

Fig. 55 is a graph showing the relationship between the set-up height and evaluated value of lighting provided by a lighting device;

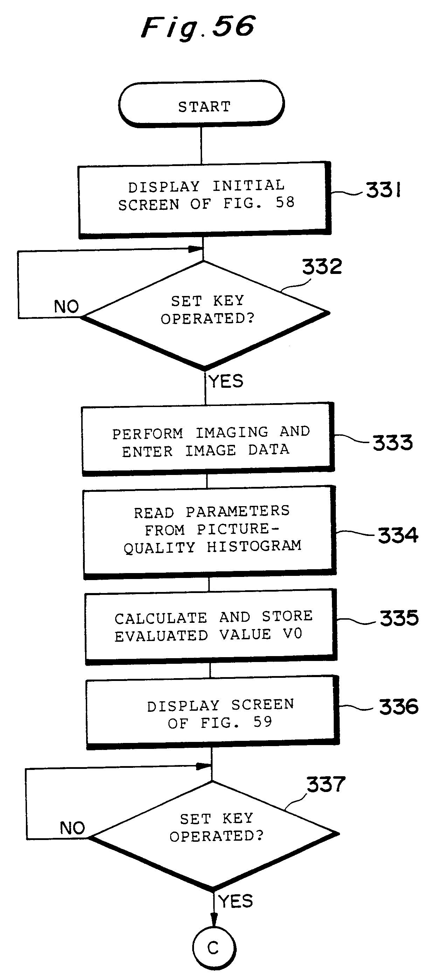

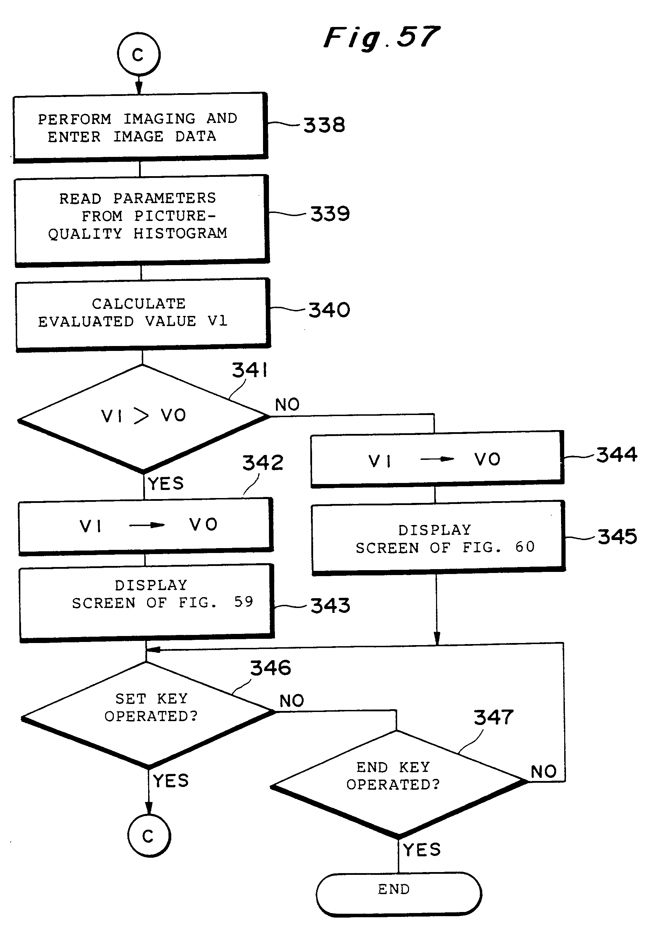

Figs. 56 and 57 are flowcharts showing the procedure of processing for setting the height position of a lighting device;

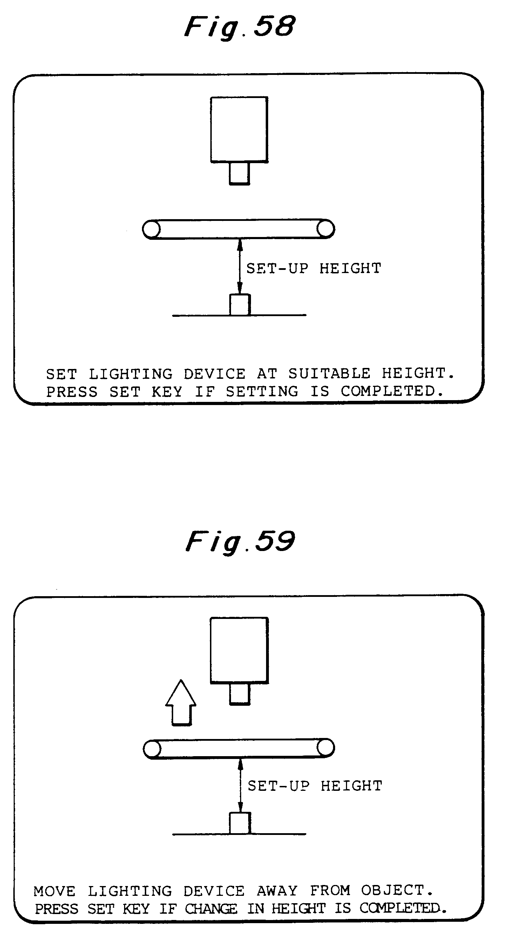

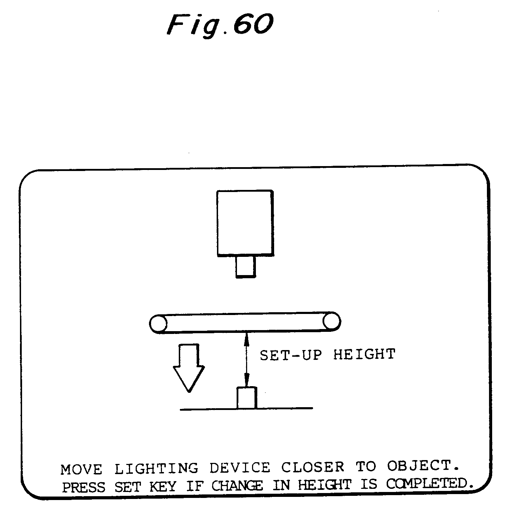

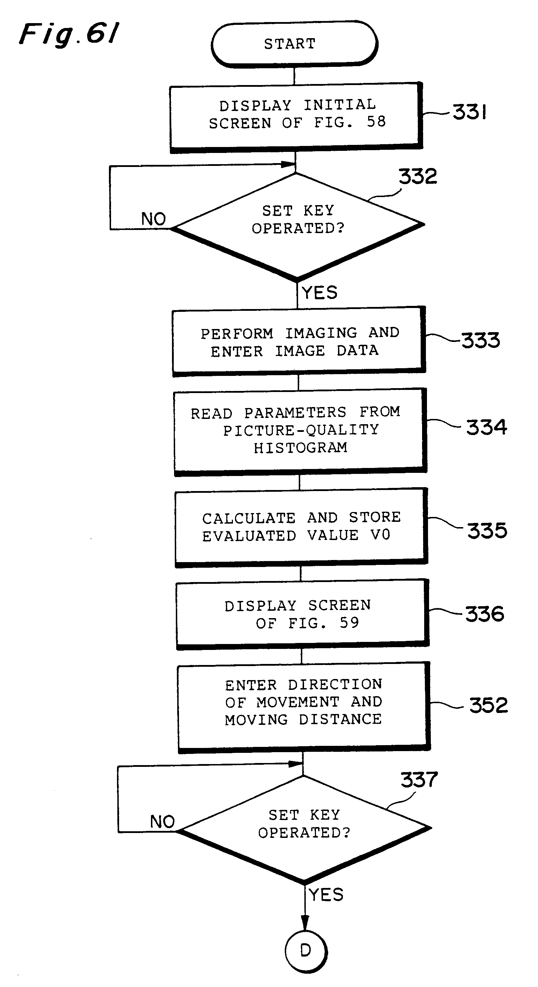

Figs. 58 through 60 show examples of displays of display screens that instruct the setting of height;

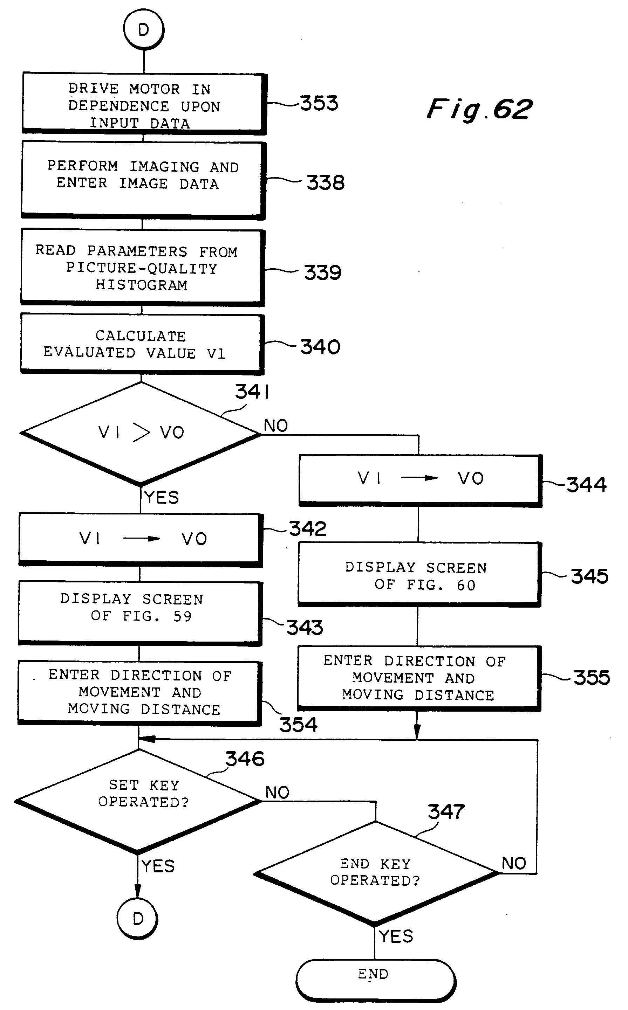

Figs. 61 and 62 are flowcharts showing another example of processing for setting the height position of a lighting device;

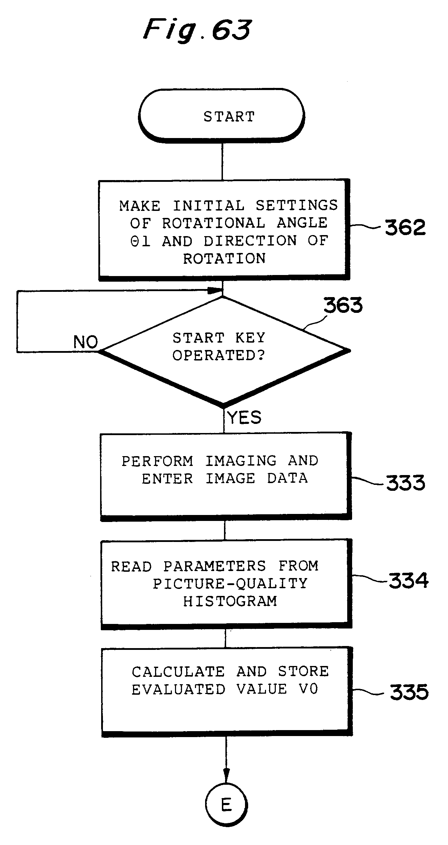

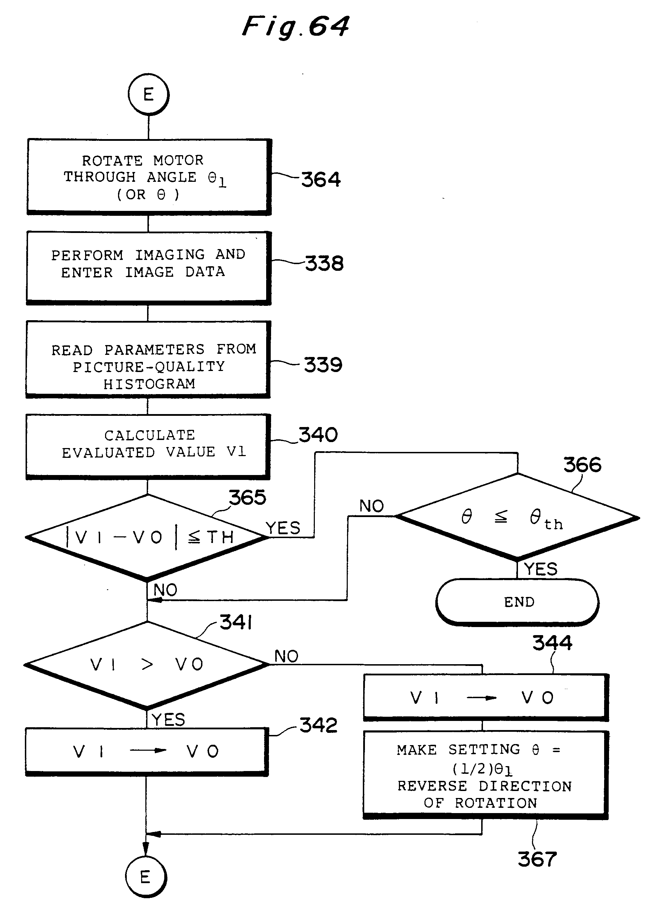

Figs. 63 and 64 are flowcharts showing still another example of processing for setting the height position of a lighting device;

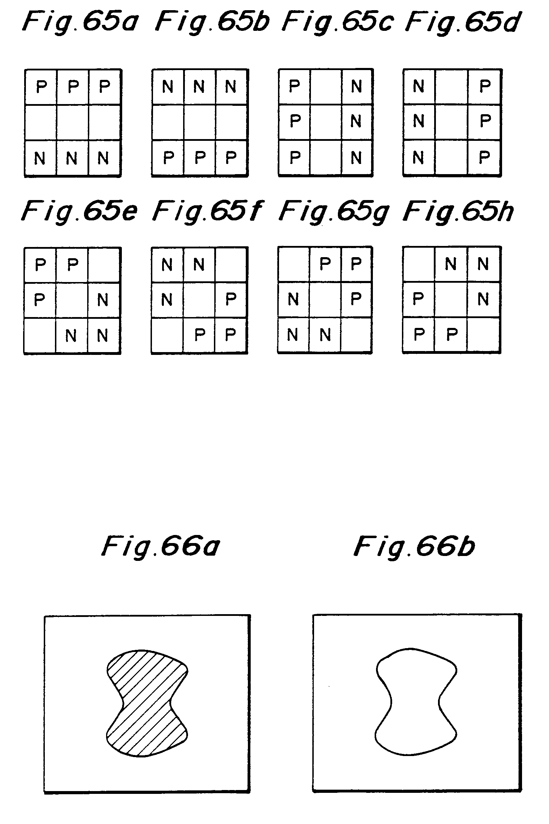

Figs. 65a through 65h show other fuzzy models representing edge patterns;

Figs. 66a and 66b show the manner in which an edge image is generated from a gray image;

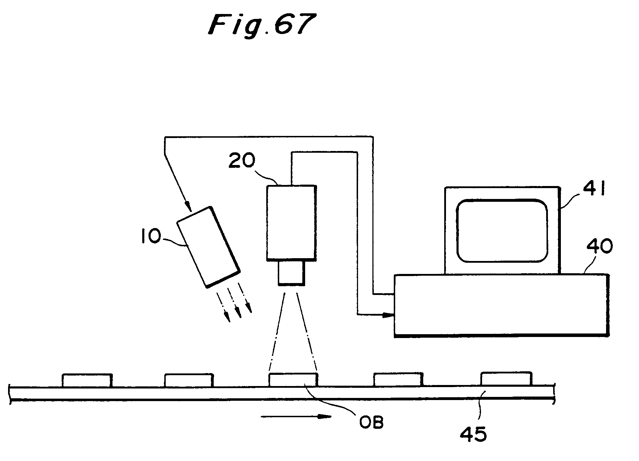

Fig. 67 shows the overall arrangement of an automatic inspecting apparatus;

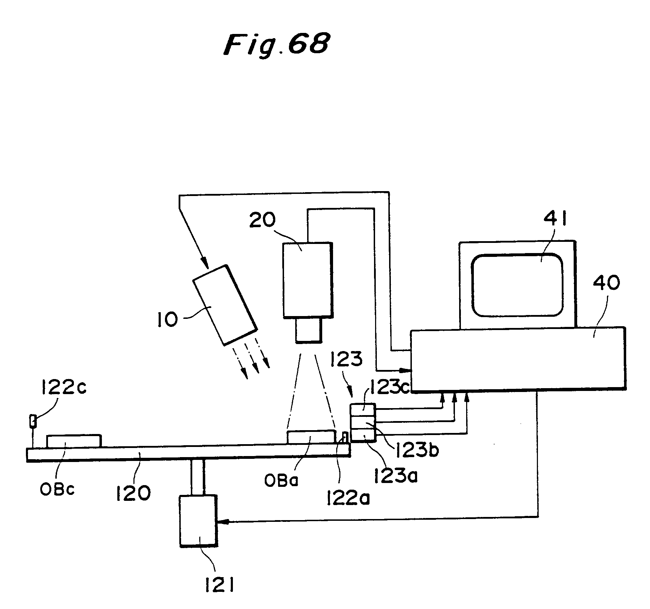

Fig. 68 shows the overall arrangement of an apparatus for aiding in setting of optimum lighting conditions;

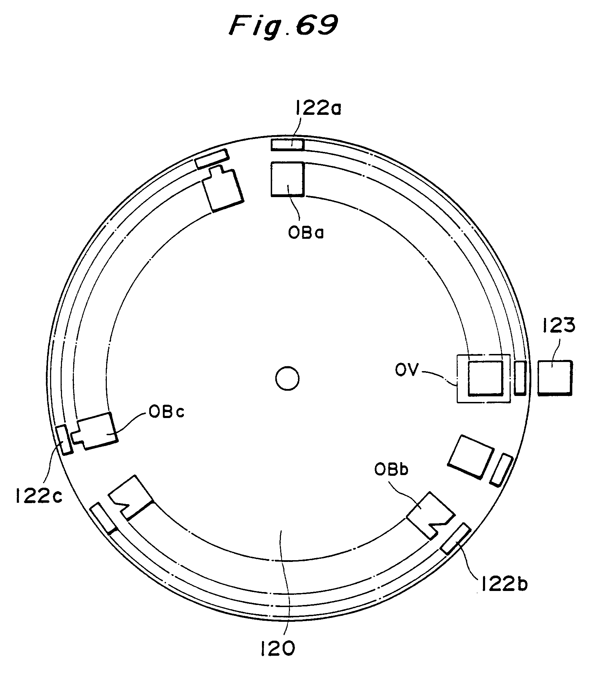

Fig. 69 is a plan view showing the manner in which samples are arranged on a rotary table;

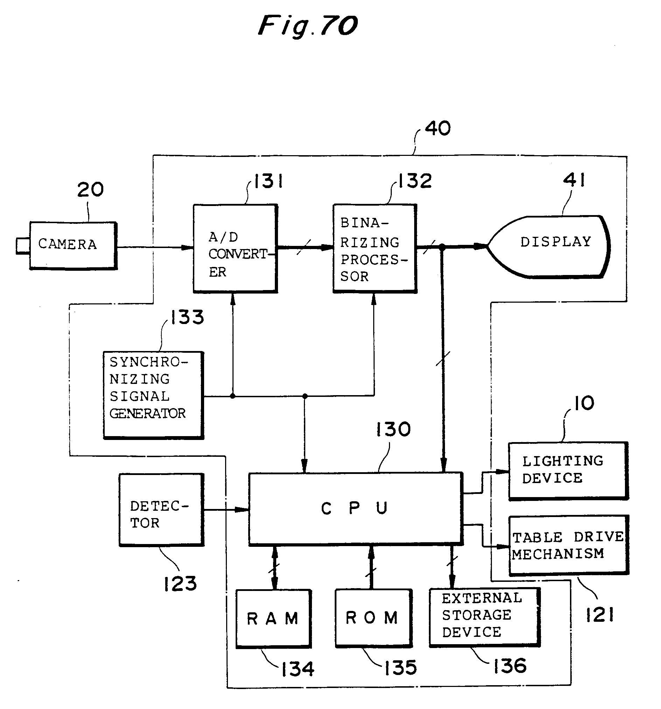

Fig. 70 is a block diagram showing an example of the circuit arrangement of an image processor;

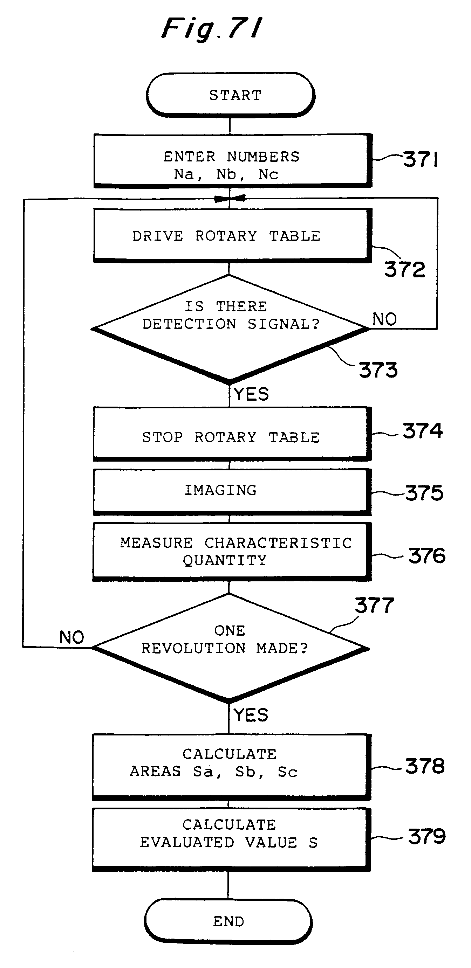

Fig. 71 is a flowchart showing a processing procedure for deciding optimum lighting conditions of a lighting device;

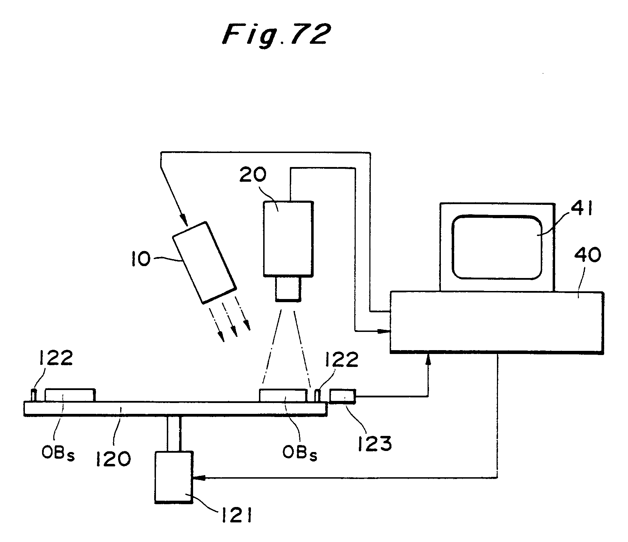

Fig. 72 shows the overall arrangement of an apparatus for aiding in setting of optimum lighting conditions;

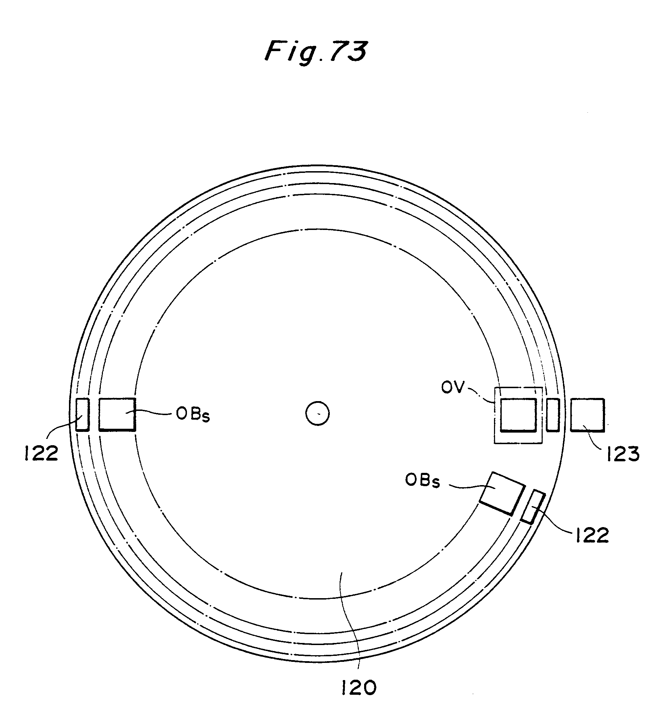

Fig. 73 is a plan view showing the manner in which samples are arranged on a rotary table;

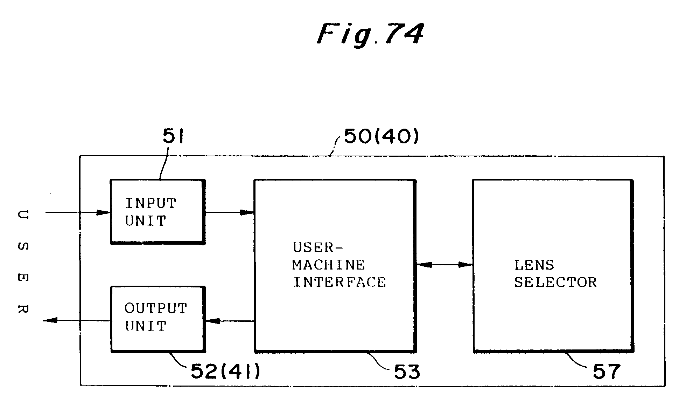

Fig. 74 shows the arrangement of an apparatus for aiding in deciding of imaging conditions;

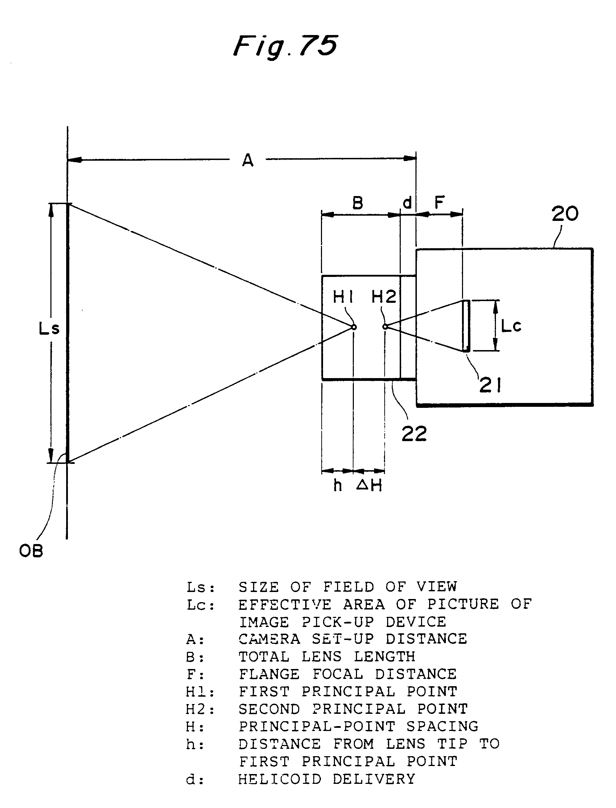

Fig. 75 is for describing parameters of a camera and lens, etc.;

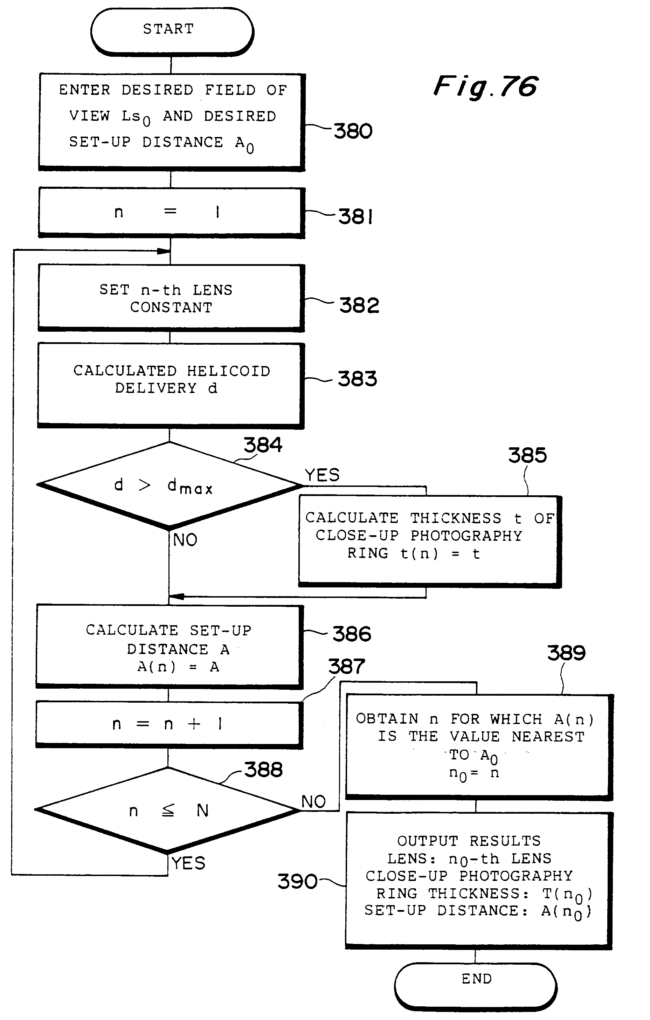

Fig. 76 is a flowchart showing a processing procedure for aiding in deciding of imaging conditions;

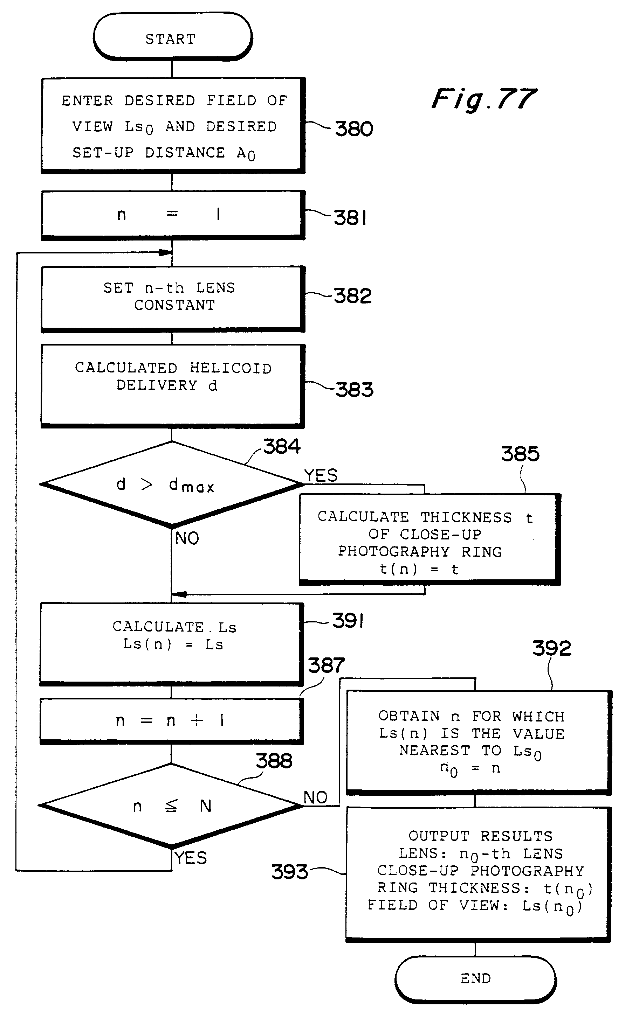

Fig. 77 is a flowchart showing another processing procedure for aiding in deciding of imaging conditions; and

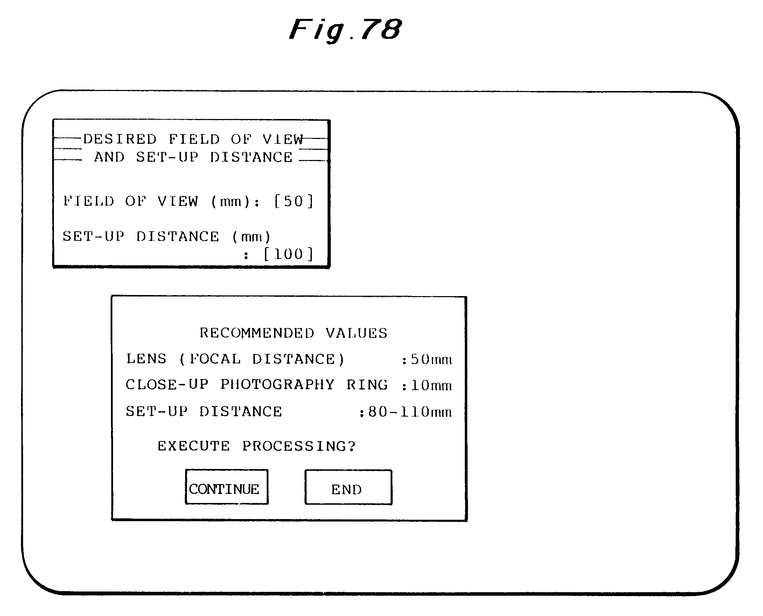

Fig. 78 is an example of a display showing selected imaging conditions.

Best Mode for Carrying Out the Invention

(1) Types of lighting devices and lighting methods

The lighting devices (light sources) mainly used in image processing systems rely upon fluorescent lamps and halogen lamps.

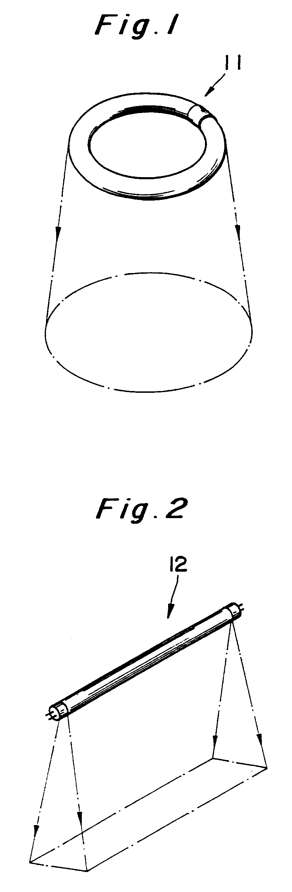

Based upon their shape, fluorescent lamps are broadly classified into ring-type and straight-type lamps, and lamps of this kind having various dimensions are available on the market. Fig. 1 illustrates a ring-type fluorescent lamp 11, and Fig. 2 depicts a straight-type fluorescent lamp 12.

In a lighting device that uses a halogen lamp as the light source, the light from the halogen lamp is led to a light-emitting portion using an optical fiber referred to as a light guide. Lighting devices having light-emitting portions of various shapes such as of a ring type, slit type, straight type and bifurcated type are available on the market, and the dimensions thereof also are multifarious.

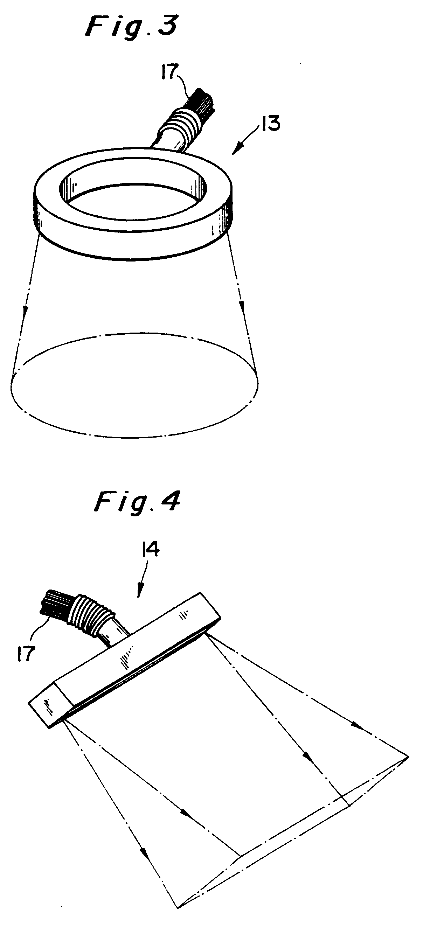

Fig. 3 illustrates a lighting device 13, referred to as a so-called ring light guide, having a ring-type light-emitting port on. A number of optical fibers 17 are formed into a bundle, and the distal ends of these fibers are arranged in the form of a ring, thereby constructing the light-emitting portion.

Fig. 4 illustrates a lighting device 14, referred to as a so-called slit ring guide. The distal ends of a number of optical fibers 17 are arranged in linear form, thereby constructing the light-emitting portion. This device is suited to the generation of slit light.

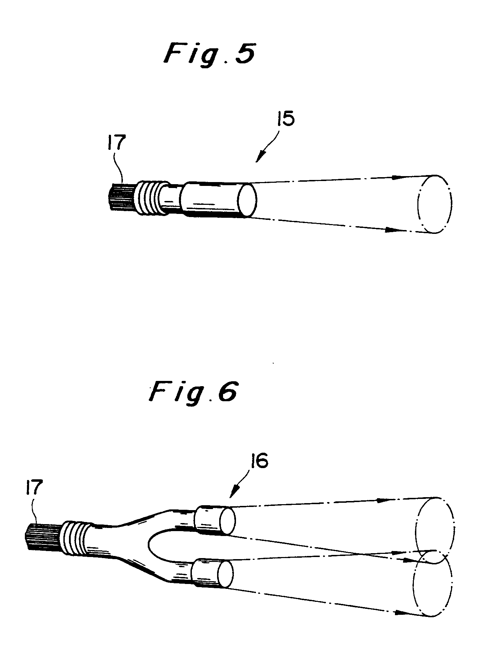

Fig. 5 illustrates a lighting device 15 in which light having a circular cross section is projected from the distal ends of a number of optical fibers 17 in bundled form. This device is referred to as a straight light guide.

In a lighting device 16 illustrated in Fig. 6, the bundle of optical fibers 17 is divided into two portions from the distal end of each of which light having a circular cross section is projected. This is referred to as a bifurcated light guide.

The slit light guide 14, straight light guide 15 and bifurcated light guide 16 are particularly suitable for cases in which the illuminated area is small.

The foregoing may be summarized as follows:
Ring fluorescent lamp 11 (Fig. 1);
Straight fluorescent lamp 12 (Fig. 2);
Ring light guide 13 (Fig. 3);
Slit light guide 14 (Fig. 4);
Straight light guide 15 (Fig. 5); and
Bifurcated light guide 16 (Fig. 6).

Figs. 7 through 11 illustrates various lighting methods indicated below:
Lighting by transmitted light (Fig. 7);
Lighting by uniform light (Fig. 8);
Lighting by coaxial incident illumination from above (Fig. 9);
Lighting by parallel rays (Fig. 10); and
Lighting by dark field illumination (Fig. 11).

Lighting by transmitted light (Fig. 7) involves illuminating a diffusing plate 29, upon which an object OB has been placed, from below with light from a light source 10. An image pick-up device (a CCD television camera, for example) 20 is disposed above the object OB, and the camera 20 picks up an image produced by the light that has passed through the diffusing plate 29 at a location other than the portion thereof occupied by the object OB.

Lighting by uniform light (Fig. 8) involves illuminating the object OB with light, which has a uniform intensity distribution, from above the object OB at a location the same as that at which the camera 20 is placed. In Fig. 8, the illuminating light is drawn in the form of parallel rays. However, the light need not necessarily be composed of parallel rays. Light by uniform light is also referred to as homogeneous illumination.

In lighting by coaxial incident illumination from above (Fig. 9), a half-mirror 28 inclined at an angle of approximately 45° is disposed between the camera 20 and the object OB. Light from the lateral direction irradiates the half-mirror 28, and light reflected by the half-mirror 28 irradiates the object OB. Light that has passed through the half-mirror 28 upon being reflected by the object OB impinges upon the camera 20. The term "lighting by coaxial incident illumination from above" signifies illumination in which illuminating light is emitted just as if it were coming from the camera 20 serving as the image pick-up device.

Lighting by parallel rays (Fig. 10) is a method through which parallel rays are made to irradiate the object OB. In Fig. 10, the object OB is irradiated with parallel light rays diagonally from above. This is particularly referred to as parallel-directed illumination. Of course, the object OB may be irradiated with parallel light rays perpendicularly from above. In general, background BG in which the object OB has been placed is composed of a substance that produces irregular reflection. As a result, both the object OB and background BG appear bright to the camera 20.

In lighting by dark field illumination (Fig. 11), background BG having a mirror surface or a surface approximating a mirror surface is used. The illuminating light is emitted diagonally from above. Irregularly reflected light (diffusely reflected light) from the object OB impinges upon the camera 20. Since there is very little irregularly reflected light from the background BG, the background BG appears dark to the camera 20.

(2) Apparatus for aiding in deciding of lighting conditions (Part 1: aid in deciding optimum height)

An aiding apparatus for deciding optimum height of a lighting device relative to an object will now be described in an image processing system for lighting an object by a lighting device, picking up an image of the illuminated object by an image pick-up device and executing image processing such as various inspections using the image data obtained by imaging.

Fig. 12 shows the overall construction of an image processing system that includes an apparatus for aiding in the decision of optimum height.

The image processing system includes the lighting device 11 for lighting the object OB, the television camera 20 serving as the image pick-up device for imaging the object OB, and an image processor 40.

The ring fluorescent lamp shown in Fig. 1 is used as the lighting device 11, which illuminates the object OB from directly above. The center of the ring of the fluorescent lamp 11 is situated directly above the object OB. Let h represent the distance between the lighting device 11 and the object OB, namely the height of the lighting device 11 relative to the object OB. The ring light guide 13 shown in Fig. 3 can be used as the lighting device 11 as well.

The lighting device 11 is supported by a support column 30 and supporting device 31 so as to be free to move up and down. The supporting device 31 is equipped with a gripping portion 32 for gripping the lighting device 13 and a sliding portion 33 fixedly joined to the gripping portion 32 via an arm. The sliding portion 33 is a cylindrical body having a hole through which the support column 30 is passed in a freely slidable manner. Accordingly, the sliding portion 33 is supported on the support column 30 so as to be freely to slide up and down. The sliding portion 33 is provided with a fastening member 34 such as a set screw and a locking bolt. Accordingly, the lighting device 11 is manually adjusted and fixed at any height.

The camera 20 serving as the image pick-up device is arranged at a position directly above the object OB with its imaging center faced downward and made to coincide with the center of the ring of the lighting device 11 so that the object OB is imaged from above under lighting provided by the lighting device 11. The illustration of the supporting device of camera 20 is omitted from the drawing to avoid making the drawing too complicated. The camera 20 is fixedly supported by the supporting device. It goes without saying that the camera 20 also may be supported so as to be freely moved up and down.

A video signal representing the object OB imaged by the camera 20 (it will suffice if this signal is a monochromatic video signal, though a color video signal may also be used) is applied to the image processor 40. The latter preferably is constituted by a computer system and has a function that allows it to serve as an apparatus, described below, that aids in the deciding of lighting conditions. The image processor 40 is equipped with a CRT display unit 41. The display unit 41 displays the image of the object OB imaged by the camera 20. In addition, optimum height hp of the lighting device 11 decided by the image processor 40 is displayed on the display unit 41, as illustrated in Fig. 15.

Fig. 13 illustrates another example of the image processing system. Components identical with those shown in Fig. 12 are designated by like reference characters to avoid a redundant description thereof. In this image processing system, the lighting device 11 is moved up and down automatically by a command from the image processor 40 and is positioned at the optimum height $h_p$.

An elevating mechanism 38 for the lighting device 11 is equipped with a rack 35 secured to the sliding portion 33 and a pinion 36 threadedly engaged with the rack 35. The pinion 36 is freely rotatably supported by a fixed bearing (not shown). The pinion 36 is rotatively driven by a pulse motor 37.

When the image processor 40 decides the optimum height $h_p$ of the lighting device 11, the processor 40 applies forward- or reverse-rotation commands to the motor 37 in such a manner that the lighting device 11 will attain the height $h_p$. Since the motor 37 rotates by the commanded amount of rotation, the lighting device 11 is moved up or down via the pinion 36 and rack 35 and is positioned at the optimum height $h_p$. If necessary, the elevating mechanism 38 or motor 37 is provided with a locking mechanism so that the lighting device 11 may be held at the position of optimum height.

Fig. 14 illustrates the construction of an apparatus for aiding in the deciding of lighting conditions, which apparatus is suited to aiding in the deciding of the optimum height of the lighting device 11.

An apparatus 50 for aiding in the deciding of lighting conditions is equipped with a user-machine interface 53 and an optimum-height deciding unit 54. The units 53, 54 are included in the image processor 40.

An input unit 51 is constituted by a keyboard, light pen, mouse, etc. An output unit 52 includes the above-mentioned CRT display unit 41 and pulse motor 37. The user manipulates the input unit 51 in accordance with a menu, instructions, marks and cursor, etc., displayed on the display unit 41 and enters various data and information interactively by virtue of the action of the user-machine interface 53.

The optimum height $h_p$ decided by the optimum-height deciding unit 54 is displayed on the display unit 41 (output unit 52), as described above, and is used as a command for the motor 37. Preferably, the optimum-height deciding unit 54 is composed of a CPU that operates in accordance with a program, a data base, which is described later, and a memory for storing various entered data.

Figs. 16 through 19 illustrate a method of deciding the optimum set-up height $h_p$ of the ring-shaped lighting device 13 (e.g., the ring light guide lighting device) relative to the object OB, the surface of which is formed to have an annular groove (a carved seal) g.

The optimum set-up height hp refers to the height of the lighting device 13, relative to the object OB, for obtaining illumination that will render the groove g dark while uniformly lighting the surface of the object OB other than the groove g.

As shown in Fig. 16, the light from the lighting device 13 reaches the bottom of the groove g if the lighting device 13 is disposed at a fairly high position. Accordingly, a portion of the bottom of the groove g is illuminated and the groove g does not appear dark.

By contrast, if the lighting device 13 is lowered to a height that is less than a certain upper-limit value h1, the illuminating light will not reach the bottom of the groove g and the groove g will darken, as depicted in Fig. 17. Accordingly, the requirement on the height h of the lighting device 13 for obtaining an illuminated state in which the groove g will appear as a dark portion is given by h ≦ h1.

The upper-limit value h1 is expressed by the following equation:

$$h1 = d \times \frac{R1-R2}{W} \qquad \cdots \ (1)$$

where d represents the depth of the groove g, W the width of the groove g, R1 the distance from the center of the field of view to the edge of groove g most distant from the center thereof, and R2 the radius of the lighting device 13.

On the other hand, in order to uniformly illuminate the surface of the object OB other than the groove g, it is necessary to take the isophotic lines of the lighting device 13 into consideration and satisfy a condition in which uneven illumination of the surface of the object OB will not take place.

Fig. 18 illustrates the isophotic lines of the ring light guide lighting device 13.

It will be appreciated from the drawing that the radius R of an area illuminated at a uniform illuminance changes in dependence upon the distance from the lighting device 13 in the vertical direction, i.e., in dependence upon the set-up height h of the lighting device 13.

Fig. 19 illustrates the relationship between the radius R of the area illuminated at a uniform illuminance and the set-up height h of the lighting device 13. Let R0 represent the radius of the field of view (the range over which the object is illuminated) of the image pick-up device 20. In Fig. 19, the set-up height h of the lighting device 13 when the radius R of the area illuminated at the uniform illuminance is equal to the radius R0 of the field of view is h0. Accordingly, in order to effect illumination in such a manner that portions other than the groove g will be illuminated brightly and uniformly, the lower-limit value of the set-up height h of the lighting device 13 should be set at h0. This condition is h ≧ h0.

Based upon the two conditions mentioned above, the optimum set-up height $h_p$ of the lighting device 13 can be established to lie within the limits h0 ≦ $h_p$ ≦ h1. Information relating to the radius R2 of the lighting device and its isophotic lines is stored for each type of lighting device in the memory of the optimum-height deciding unit 54 and serves as a data base.

Fig. 20 shows the procedure of processing, executed by the optimum-height deciding unit 54, for deciding the optimum height of a lighting device in order to perform photography in such a manner that the groove g of the object OB having the aforementioned groove g appears as a dark portion while the surface of the object OB other than the groove g appears as a uniformly illuminated portion.

First, as information relating to the shape features of the object OB, the depth d and width W of the groove g and the distance R1 from the center of the field of view to the farthest edge of the groove g are entered from the input unit 51 by the user. Further, the radius R0 of the field of view of the image pick-up device 13 is entered by the user via the input unit 51 (step 201). Since it will suffice if the radius R0 of the field of view is equal to the radius of the object OB or half the length of the diagonal thereof, this also can be entered as one shape feature of the object OB.

If we assume that the type of lighting device has already been entered or decided, the radius R2 of this lighting device is read out of the data base. Further, the lower-limit value h0 of the height is derived, by using the already entered radius R0 of the field of view, from the data base relating to the isophotic lines of this lighting device (step 202).

Next, the arithmetic operation of Equation (1) is executed to calculate the upper-limit value h1 of the set-up height of the lighting device (step 203). It is determined whether the calculated upper-limit value h1 is greater than the lower-limit value h0 (step 204).

If $h0 \leq h1$ holds, it is possible to decide the optimum height. Accordingly, the average value of the lower-limit value h0 and upper-limit value h1 is calculated as the optimum set-up height hp of the lighting device using Equation (2) (step 205).

$$h_p = \frac{h0+h1}{2} \qquad \qquad \ldots \ (2)$$

It goes without saying that the calculation of optimum height $h_p$ is not limited to Equation (2); a height $h_p$ that satisfies $h0 \leq h_p \leq h1$ can be selected as being optimum.

Thus, the optimum height $h_p$ decided is outputted through the output unit 52 (step 206). For example, the display unit 41 displays a message image of the kind shown in Fig. 15 for the purpose of informing the user of the optimum set-up height $h_p$ of the lighting device. Alternatively, the motor 37 is driven based upon this optimum height $h_p$ to position the lighting device at the height $h_p$ automatically.

In a case where $h0 \leq h1$ is not satisfied, a message to the effect that the optimum height $h_p$ will not be obtained is displayed on the display unit 41 (step 207).

(3) Apparatus for aiding in deciding of lighting conditions (Part 2: aid in deciding optimum angle)

An aiding apparatus for deciding the optimum angle of a lighting device relative to an object in an image processing system will be described next.

Fig. 21 shows the overall construction of an image processing system that includes an apparatus for aiding in the decision of optimum angle.

The slit light guide 14 shown in Fig. 4 is used as the lighting device. The lighting device 14 is held in a horizontal attitude in the longitudinal direction thereof and is arranged in such a manner that the object OB will be irradiated with the illuminating light at an incline diagonally from above. The straight fluorescent lamp 12 shown in Fig. 2 can be used as the lighting device as well.

Components in Fig. 21 identical with those shown in Fig. 12 are designated by like reference characters to avoid a redundant description thereof. The lighting device 14 has a gripping portion 32A held on the sliding portion 33 in a freely tiltable manner. The orientation of the lighting device 14 can be manually set and fixed at any angle.

Like the system configuration shown in Fig. 13, it goes without saying that there are provided a mechanism for raising and lowering the sliding portion automatically and a mechanism for automatically positioning the gripping portion 32A at any angle so that the height and angle can be set automatically in dependence upon commands from the image processor 40.

Fig. 22 illustrates an example of the object OB. The object OB is a plate-shaped body the surface of which is formed to have a straight groove G extending in the longitudinal direction.

Fig. 23 illustrates the construction of an apparatus for aiding in the deciding of lighting conditions, which apparatus is suited to the aiding of decisions regarding the optimum set-up angle of the lighting device 14. In comparison with the configuration shown in Fig. 14, it will be seen that an optimum-angle deciding unit 55 is provided instead of the optimum-height deciding unit 54. Other components are the same as those depicted in Fig. 14.

Figs. 24 and 25 illustrate a method of setting the set-up angle $\theta$ of the lighting device 14 (the slit light guide lighting device), relative to the object OB having a groove G, to an optimum value.

The optimum set-up angle $\theta$ of the lighting device 14 referred to here is that for obtaining illumination by which the groove G of the object OB will be a dark portion and the surface portion other than the groove will be a bright portion. In order to achieve this, the relation of Equation (3) must be satisfied, where S represents the width of groove G and t the depth of groove G. The angle $\theta$ is an angle between the light ray (optical axis) of the lighting device 14 and a horizontal plane.

$$\tan\theta \leq \tfrac{t}{S} \qquad (3)$$

Light incident upon an ordinary object is imperfectly diffusely reflected at the surface of the object, as illustrated in Fig. 25. In other words, the strength of regularly reflected light reflected at an angle equal to the angle of incidence is the greatest, while the strength of reflected light weakens as the angle of reflection departs from the regular reflection angle. In order to perform imaging with the surface of the object OB other than the groove G appearing as a bright portion and obtain distinct contrast relative to the groove G, which is the dark portion, it is necessary to increase the strength of the reflected light that is incident upon the image pick-up device 20 from the portions other than the groove G. The image pick-up device 20 is placed directly above the object OB or at a position near this point. Therefore, in order to arrange it so that as much regularly reflected light as possible will impinge upon image pick-up device 20, the set-up angle $\theta$ of the lighting device 14 should be as close to 90° as possible. Accordingly, the optimum set-up angle $\theta$ of the lighting device 14 is given by Equation (4).

$$\theta_p = \tan^{-1}\frac{t}{S} \qquad \ldots (4)$$

Fig. 26 shows the procedure of processing, executed by the optimum-angle deciding unit 55, for finding lighting conditions in order to perform imaging in such a manner that the groove G of the object OB having the aforementioned groove G appears as a dark portion while the surface of the object OB other than the groove G appears as a bright portion.

First, the data regarding the width S and depth t of the groove G in object OB is entered from the input unit 51 by the user (step 211). Next, the arithmetic operation of Equation (4) is executed to calculate the optimum set-up angle $\theta p$ of the lighting device 14 (step 212). The calculated optimum set-up angle $\theta p$ is outputted from the output unit 52 (step 213). For example, the screen of the display unit 41 displays a message image (not shown) for the purpose of informing the user of the optimum set-up angle $\theta_p$ of the lighting device 14.

(4) Apparatus for aiding in deciding of lighting conditions (Part 3: aid in deciding lighting device and lighting method)

In order to obtain an image suited to the purpose of inspection in an image processing system, which lighting device to use and what kind of lighting method to be adopted for providing illumination are extremely important factors.

In order to inspect something in a particular manner, the inventors have closely investigated various kinds of lighting devices and the various lighting methods that these lighting devices employ, and the inventors have learned that an appropriate lighting device and lighting method can be decided if the following three factors are heeded: Specifically, ① the purpose of inspection, ② disparities in the optical properties of an observed portion and background, and ③ the size of the field of view.

The lighting device and lighting method can be tentatively decided based upon factors ② and ③ mentioned above. To be more exact, among the disparities (transmittance, reflectivity, direction of reflection, color, etc.) in the optical properties of the observed portion and background in factor ②, upon which disparity the lighting device and lighting method are decided also is important. The reason for this is that, generally speaking, the observed portion to be inspected and the background do not differ merely in one property among the properties of transmittance, reflectivity, direction of reflection and color, etc.

Accordingly, it is necessary to take into consideration the factor ② that is suited to each purpose of inspection on the basis of factor ①. To this end, use is made of the experience and knowledge of experts and results of optical analysis acquired in advance.

Fig. 27 illustrates the construction of an apparatus for aiding in the deciding of lighting conditions, the apparatus being suitable for aiding in the deciding of a lighting device and lighting method. In comparison with Figs. 14 and 23, it will be seen that a unit 56 for deciding a lighting device and lighting method is provided in place of the deciding unit 54 or 55.

Fig. 28 shows the external appearance of two connectors as one example of an object (workpiece) to be inspected. An actual example in which a lighting device and lighting method are decided with regard to these connectors will be touched upon later in greater detail.

Fig. 29 shows the overall procedure of processing, which is executed by the apparatus 50 for aiding in the deciding of lighting conditions, for deciding a lighting device and lighting method.

When factor ①, namely the purpose of inspection, is entered by the user from the input unit 51 through interaction utilizing the display screen of the display unit 41, the system jumps to any of the processing operations of Figs. 30 through 36 in accordance with the purpose of inspection that has been entered (step 221). The relationship between the purpose of inspection and these processing operations is as follows:

Inspection of shape and dimensions: Processing of Fig. 30

Inspection for presence of a part and inspection for defective parts: Processing of Fig. 31

Inspection for flaws: Processing of Fig. 32

Inspection of color: Processing of Fig. 33

Positioning: Processing of Figs. 34a and 34b

Inspection for foreign matter: Processing of Fig. 35

Inspection of characters and marks: Processing of Fig. 36

Factor ③ or the size of the field of view also may be entered. However, since a lighting device suited to the size of the field of view is displayed, the user is capable of deciding the lighting device even if the size of the field of view is not entered, as will be understood from the side of the display screens shown in Figs. 37 through 43. Of course, an arrangement may be adopted in which entry of the size of the field of view is awaited and only the lighting device suited to the entered size of the field of view is displayed.

As will be described later in detail, inquiries regarding the disparities between the optical properties of the observed portion and background in factor ② are successively made on the screen of the display unit 41 in the detailed processing conforming to the purposes of inspection shown in Figs. 30 through 36, and the user enters the responses to these inquiries through the input unit 51. When this has been done, the optimum disparity in the optical properties of the observed portion and background that should be noted for the sake of inspection is derived (step 222), and the lighting device and lighting method are decided in conformity with this result (step 223). In this embodiment, the user finally decides the lighting device and lighting method from several combinations of lighting devices and lighting methods presented on the displayed screen.

In the decision processing of Fig. 30 whose purpose is inspection of shape and dimensions, first the user is questioned with regard to whether silhouette inspection is possible (step 231). If the user enters a response to the effect that this is possible, then, since the optimum disparity in the optical properties of the observed portion and background in factor ② that is of interest for the sake of inspection is transmittance, a screen for illumination by transmitted light, shown in Fig. 37, is displayed on the display unit 41 (step 232).

The screen for illumination by transmitted light indicates that illumination by transmitted light shown in Fig. 7 is suitable if silhouette inspection is possible. Illumination by transmitted light is of two types, namely type I, in which the lighting device, object and camera are horizontally disposed, and type 2, in which the lighting device, object and camera are vertically disposed (the arrangement shown in Fig. 7). Appropriate lighting devices are displayed in correlation with sizes of field of view, these lighting devices being common to the two types of lighting by transmitted light. The user selects whichever of these displayed lighting devices that conforms to the size of the field of view. Here $\phi$ represents the diameter of the ring-type lighting device, and $\ell$ (see Fig. 38) represents the length of the straight lighting device.

If the user makes an entry to the effect that silhouette inspection is impossible, then an inquiry as to whether the colors of the observed portion and background are similar appears next on the display unit 41 (step 233). If the colors of the observed portion and background are not similar, then the disparity that is of interest is color or reflectivity. Accordingly, a screen for illumination by uniform light shown in Fig. 38 is displayed (step 234).

The fact that illumination by uniform light (Fig. 8) is appropriate, as well as types of lighting devices suited to the sizes of various fields of view in lighting by uniform light, is displayed on the screen for lighting by uniform light.

In a case where silhouette inspection is impossible and the colors of the observed portion and background are similar, the disparity of interest is the direction in which light is reflected. Accordingly, inquiries are made with regard to whether the observed portion has a projection or a recess (steps 235, 237).

If the observed portion of the object has a projection, a screen for illumination of a projection on an irregular surface (a screen for illumination intended for a projection on an irregular surface) shown in Fig. 39 is displayed (step 236). The fact that lighting by parallel light rays (Fig. 10) is appropriate and types of lighting devices used in this lighting by parallel rays are displayed on this screen, the latter for each size of field of view.

In a case where the observed portion has a recess, a screen for lighting of a recess on an irregular surface (a screen for illumination intended for a recess on an irregular surface) shown in Fig. 40 is displayed (step 238). The fact that illumination by parallel light rays or coaxial incident illumination from above (Fig. 9), depending upon the purpose of inspection or location, is appropriate and lighting devices for each of the sizes of fields of view suited to these types of lighting are displayed on this screen.

In a case where the observed portion has neither a projection nor a recess, a screen for illumination of an edge on an irregular surface shown in Fig. 41 is displayed (step 239). The fact that illumination by parallel light rays is appropriate and types of lighting devices conforming to the sizes of fields of view are displayed on this screen.

In order to perform an inspection shown in Fig. 31 for determining whether parts are absent or present and whether defective parts are absent or present, inquiries regarding whether silhouette inspection is possible (step 241) and whether the colors of a part and a base (a body on which the part is mounted) are similar (step 243) are successively made through the display unit 41.

To mention a screen other than the lighting screens described with reference to Fig. 30, a screen for illumination utilizing regular reflection shown in Fig. 43 is displayed (step 245) if the colors of the part and base are similar. Illumination utilizing regular reflection includes lighting by parallel rays (Fig. 10) and lighting by dark field illumination (Fig. 11). The user is capable of selecting a lighting device, which conforms to the lighting method and size of field of view, displayed on this screen.

The processing illustrated from Figs. 32 through 36 is almost the same as that set forth above, and the content of this processing can be understood from these drawings. A screen for illumination of a line on an irregular surface shown in Fig. 42, which has not yet been discussed, will now be described in brief. This screen is displayed in a case where silhouette inspection is impossible and the direction of a flaw is incapable of being specified ("NO" at step 251 and "YES" at step 253) in illumination for which the purpose is inspection of flaws shown in Fig. 32. This screen displays that use of lighting by parallel rays is suitable in order to appropriately image a flaw (a slender, linear irregularity) in the surface of the object, and that the slit light guide or straight fluorescent lamp should be selected in conformity with the size of the field of view.

Thus, predetermined inquiries and user responses thereto are repeated through the display unit 41 and input unit 51 in dependence upon the purpose of inspection, optimum disparity in the optical properties of the observed portion and background that is of interest for the sake of the particular inspection is determined, and the appropriate lighting device and lighting method are decided based upon the results of determination.

A case in which an inspection for missing connector pins shown in Fig. 28 is performed will now be described as a specific example. Since inspection purpose ① corresponds to inspection for presence of parts and inspection of defective parts, processing proceeds to that shown in Fig. 31. If the arrangement is such that silhouette inspection can be performed on the inspection line, the screen for illumination by transmitted light shown in Fig. 37 is displayed. Since the field of view is on the order of 30 mm, this means that the horizontal or vertical lighting with transmitted light using the ring-shaped fluorescent lamp is appropriate. In a case where silhouette scanning cannot be performed, processing shifts to the next decision. Since the colors of the part and base are not similar, the screen for illumination with uniform light illustrated in Fig. 38 is displayed. In this example, the object is oblong (Type 2) and the field of view is 30 mm. Therefore, the conclusion obtained is that illuminating the object diagonally from above using the slit light guide is suitable.

In the above-mentioned example, processing proceeds based upon interaction between the user and the deciding unit 56 through the display unit 41 and input unit 51. It is permissible for processing to be advanced by having the user enter various data and information in accordance with a selection flow, which selects the aforesaid factors ①, ②, ③, as well as a guidebook. Further, though selection is made in the order of the factors ①, ②, ③, the procedure may be one in which, say, "③ Size of Field of View" is determined first.

(5) Apparatus for aiding in deciding of lighting conditions (Part 4)

As a final example of an apparatus for aiding in the deciding of lighting conditions, an apparatus for deciding lighting device and lighting method, described above, as well as for deciding optimum height and optimum angle of the lighting device, will now be described.

This apparatus 50 shown in Fig. 44 for aiding in the deciding of lighting conditions is provided with the above-mentioned optimum-height deciding unit 54, optimum-angle deciding unit 55 and the unit 56 for deciding a lighting device and lighting method. Other components are the same as shown in Figs. 14, 23 and 27.

The processing procedure executed in the apparatus 50 is illustrated in Fig. 45.

First, as described above, the user decides the lighting device and lighting method suited to the purpose of inspection through interaction with the deciding unit 56 (step 311). The user selects the optimum lighting device and lighting method from those displayed on the display device 41 and enters them.

It is determined whether optimum height or optimum angle should be decided with regard to the lighting device thus decided, and either deciding unit 54 or 55 is selected in dependence upon this determination (step 312). In general, it is necessary to decide optimum height for the ring-shaped lighting device and optimum angle for the straight lighting device. The required information is entered in conformity with the optimum height or optimum angle to be decided, and the optimum height $h_p$ or optimum angle $\theta_p$ is decided in accordance with the processing shown in Fig. 20 or the processing shown in Fig. 26 (step 313). The result is either displayed on the display unit 41 or applied to the height or angle adjusting device (the elevating mechanism, etc.) (step 314).

Fig. 46 shows the procedure of processing for deciding optimum height with regard to respective ones of lighting devices in a case where plural types (n types) of lighting devices have been selected. Processing steps identical with those shown in Fig. 20 are designated by like step numbers and a description thereof is omitted.

A counter i is provided and, in a first step, is initially set at $i = 1$ (step 321). The counter is incremented (step 323) in case of a lighting device that does not satisfy the condition $0 \leq h1$ of step 204. After various conditions have been entered (step 201), the type of an i-th lighting device is entered (step 322) and it is determined whether the optimum height $h_p$ can be decided with regard to the entered lighting device (step 204). If the optimum height can be decided, then the optimum height hp is obtained and processing ends. In a case where optimum height cannot be decided with regard to all types (n types) of lighting devices (step 324), a message to this effect is displayed and processing ends (step 207). There will also be cases in which the radius R0 of the field of view of a lighting device having uniform illuminance will be entered for each type of lighting device at step 322.

(6) Apparatus for aiding in setting of optimum lighting conditions (Part 1: setting of position of lighting device)

In the above-described apparatus (Parts 1 and 2) for aiding in the deciding of lighting conditions, the optimum height and optimum angle of a lighting device are decided based upon the positional relationship between the lighting device and the object to be inspected. Described next will be an apparatus for deciding the optimum position of a lighting device from the viewpoint of the quality of the image captured by the camera, or an apparatus for aiding in making the decision.

The construction of the image processing system shown in Fig. 12 is applied in this embodiment as well. The image processor 40 accepts the video signal representing the object OB imaged by the television camera 20 and executes image processing, described below, for aiding in the setting of the optimum height of the lighting device 11. The CRT display unit 41 displays the photographic image of the object OB as well as a message for giving advice on the position setting of the lighting device 11.

Fig. 47 illustrates the circuit arrangement of the image processor 40. The image processor 40 is constituted by an image input unit 61, an image memory 62, an image output unit 63, a microcomputer, a timing control unit 64, etc.

The image input unit 61 includes an A/D converter for converting an analog video signal, which is outputted by the television camera 20, into digital image data. This digital image data is applied to the image memory 62. The image input unit 61 further includes a histogram generating circuit which, based upon the entered analog video signal, generates, on a real-time basis, a picture-quality histogram representing picture quality in which brightness is plotted along the horizontal axis. The specific circuit arrangement and operation of the histogram generating circuit will be described later.

The image memory 62 stores, in pixel units, the image data provided by the image input unit 61. The image output unit 63 includes a D/A converter for converting image data read out of the image memory 62 into an analog video signal and providing the CRT display unit 41 with one screen of the converted analog video signal. As a result, the image of the object OB imaged by the television camera 20 is displayed on the display unit 41 as well.

The microcomputer has a CPU 65 mainly for control and arithmetic operations. A ROM 66, RAM 67 and I/O control unit 68, etc., are connected to the CPU 65 via a system bus. The CPU 65 decodes and executes a program stored in the ROM 66 and executes predetermined image processing by reading and writing various data with respect to the RAM 67. A keyboard 69 is connected to the I/O control unit 68. A key input signal from the keyboard 69 is sent to the CPU 65 via the I/O control unit 68.

Under the control of the CPU 65, the timing control unit 64 outputs a timing signal, which is for controlling the input/output operation of various data, to the image input unit 61, image memory 62 and image output unit 63.

Fig. 48 illustrates a specific example of the histogram generating circuit provided in the image input unit 61.

The CPU 65 controls an address generator 80 via a CPU bus. The address generator 80 generates the necessary address, control and timing signals and applies these signals to the various components of the apparatus. The image memory 62 has its writing and reading operations controlled by the control signal, which enters via a control bus. Image data supplied from a data bus is written at an address of the image memory 62 in accordance with an address signal entered via an address bus, or image data is read out of this address. It goes without saying that the address bus, control bus and data bus are connected to the other circuits as well. One field (or one frame) of image data is written in the image memory 62.

In this embodiment, as shown in Fig. 50, a window of 3 x 3 = 9 pixels is set on one field (or one frame) of image data that has been stored in the image memory 62. The pixel at the center of the window shall be $P_0$, and the pixels surrounding the center pixel $P_0$ are denoted by the characters $P_1 \sim P_8$ in the counter-clockwise direction. The 3 x 3 window moves the area of the overall screen in the directions of horizontal and vertical scanning.

In order to set a window of this kind, latch circuits 76, 75, a 1H delay circuit (shift register) 78, latch circuits 70, 74, a 1H delay circuit 71 and latch circuits 72, 73 are provided. Image data read out of the image memory 62 in the sequence of horizontal and vertical scanning is successively transferred to these latch circuits and 1H delay circuits in the above-mentioned sequence. The 1H delay circuits 78, 71 output the input data upon applying a delay of 1H (the time period of one horizontal scan), and the latch circuits 76, 75, 70, 74, 72, 73 output the input data upon applying a delay equivalent to the clock period of one pixel.

The image data (pixel $P_7$) read out of the image memory 62, the output image data (pixels $P_6$, $P_5$, $P_0$, $P_4$, $P_2$, $P_3$) of the latch circuits 76, 75, 70, 74, 72, 73 and the output image data (pixels $P_8$, $P_1$) of the 1H delay circuits 78, 71 are applied to an operation unit 81 for calculating degree of non-membership. The output image data (center pixel P0) of the latch circuit 70 is applied also to a unit 82 that generates a histogram of degree of non-membership and a unit 83 for generating a brightness histogram.

Fig. 49 illustrates an example of the construction of the operation unit 81 that calculates the degree of non-membership. The operation unit 81 obtains degrees of membership of image data (degrees of edge membership; edge likeness) $\mu_1 \sim \mu_8$, which lies within the window, in each of eight types (eight directions) of edge patterns that extend vertically, horizontally and diagonally, obtains degree of edge membership $\mu$ by subjecting these degrees of membership $\mu_1 \sim \mu_8$ to a MAX operation (selection of the maximum value), and obtains the degree of non-membership (lack of edge likeness) from $\overline{\mu} = 1-\mu$.

Eight subtracting circuits 91 ~ 98 are provided. The items of image data of the pixels $P_1 \sim P_8$ within the above-mentioned window are applied to the subtracting circuits 91 ~ 98, respectively. The image data of the center pixel $P_0$ is applied to all of the subtracting circuits 91 ~ 98. The subtracting circuit 91 calculates the difference (let this be represented by $q_1$) between the image data of pixel $P_1$ and the image data of the center pixel $P_0$. Similarly, the subtracting circuits 92 ~ 98 calculate the differences (let these be represented by $q_2 \sim q_8$) between the respective ones of the items of image data of pixels $P_2 \sim P_8$ and the image data of the center pixel $P_0$. Since the image data represents a monochromatic image (it will suffice to extract luminance data in the case of color image data), as mentioned above, this data indicates the brightness of each pixel. Accordingly, the items of difference data $q_1 \sim q_8$ represent the differences between the brightness of the center pixel $P_0$ and the brightnesses of the surrounding pixels $P_1 \sim P_8$. Fig. 51 illustrates the manner in which a brightness pattern (a pattern of differences in brightness) $q_0 \sim q_8$, in which the center pixel within the window serves as a reference, is generated from the brightness pattern $P_0 \sim P_8$ (in which $P_0 \sim P_8$ here indicate the image data) within the window.

In this embodiment, eight types of edge patterns are represented by fuzzy models expressed using membership functions. These fuzzy models are illustrated in Figs. 52a through 52h, in which N, Z and P represent negative, zero and positive, respectively. Membership functions designated by these characters (referred to as labels) are illustrated in Fig. 53.

As indicated by the broken line, the function value of the membership function N takes on a maximum value of 1 within a range in which the brightness difference q is less than a certain negative value $-q_b$, a minimum value of 0 within a range in which the brightness difference q is greater 0, and a value of from 1 to 0 that varies linearly, within a range in which the brightness difference q varies from $-q_b$ to 0, in correspondence with this value.

The function value of the membership function P takes on the minimum value 0 within a range in which the brightness difference q is less than 0, the maximum value within a range in which the brightness difference q is greater then a certain positive value $q_b$, and a value of from 0 to 1 that varies linearly, within a range in which the brightness difference q varies from 0 to $q_b$, in correspondence with this value.

The function value of the membership function Z takes on the minimum value within a range in which the absolute value of the brightness difference q is greater than a certain value $q_a$, and the maximum value 1 within a range in which the absolute value is less than $q_b$. The function value takes on an intermediate value that varies from 1 to 0 linearly, within a range in which the absolute value of the brightness difference q is greater than $q_b$ and less than $q_a$, in correspondence with this value.

The fuzzy model shown in Fig. 52a, which brightens toward the lower right and darkens toward the upper left, represents an edge pattern inclined toward the upper right. The fuzzy model shown in Fig. 52b, which brightens toward the right and darkens toward the left, represents an edge pattern that extends vertically. It can readily be understood that the fuzzy models shown in Figs. 52c through 52h represent other types of edge patterns. The directions of the edge patterns in Figs. 52a through 52h are determined to be directions 1 through 8.

With reference again to Fig. 49, eight arithmetic circuits 111 ~ 118 for calculating degrees of edge membership are provided to correspond to the above-mentioned eight edge patterns. These arithmetic circuits for calculating degrees of edge membership have identical constructions, with the exception of the set membership functions, and will be described with regard to circuit 111.

The arithmetic circuit 111 for calculating the degree of edge membership is constituted by membership function circuits (hereinafter referred to as MFC's) 101 ~ 108, and a MIN circuit 109 for selecting a minimum value of outputs from these circuits. Items of output data q1 ~ q8 from the subtracting circuits 91 ~ 98 enter the MFC's 101 ~ 108, respectively.

The membership function Z, N or P is set in the MFC's 101 ~ 108 in correspondence with the fuzzy model of the edge pattern of direction 1 pointing upward to the right at an angle of 45° shown in Fig. 52a. More specifically, the membership function Z is set in the MFC's 101 and 105 corresponding to the pixels $P_1$ and $P_5$ (the brightness differences $q_1$ and $q_5$), the membership function N is set in the MFC's 102, 103, 104 corresponding to the pixels $P_2$, $P_3$, $P_4$ (the brightness differences $q_2$, $q_3$, $q_4$), and the membership function P is set in the MFC's 106, 107, 108 corresponding to the pixels $P_6$, $P_7$, $P_8$ (the brightness differences $q_6$, $q_7$, q8).

The MFC 101 calculates and outputs the degree of membership $\mu_{11}$ of the input data $q_1$ in the membership function Z set in this circuit. When the MFC has been constructed by a memory storing membership function data, it will suffice to read out the membership function data corresponding to the input data $q_1$. Similarly, the MFC's 102 ~ 108 calculate and output degrees of membership $\mu_{12} ~ \mu_{18}$ of input data $q_2 ~ q_8$ in the set membership function N, Z or P.

The MIN circuit 109 selects the minimum degree of membership from among the degrees of membership $\mu_{11} ~ \mu_{18}$ outputted by the MFC's 101 ~ 108, and the selected degree of membership is outputted as the degree of membership $\mu_1$ of the arithmetic circuit III for calculating degree of edge membership. The larger the value of the degree of membership $\mu_1$ (the nearer the value is to 1), the more appropriate the binarized image that is obtained when binarization of the data of other pixels within this window is performed with the brightness of pixel $P_0$ serving as a reference.

Membership functions representing the edge patterns shown in Figs. 52b ~ 52h are set in the MFC's of the other arithmetic circuits 112 ~ 118, respectively, for calculation of the degree of edge membership. All of the items of output data $q_1 ~ q_8$ of the subtracting circuits 91 ~ 98 are applied to respective ones of these arithmetic circuits 112 ~ 118 for calculation of the degree of edge membership, and data representing the degrees of membership $\mu_2 ~ \mu_8$ is obtained from these circuits 112 ~ 118.

A MAX circuit 85 selects, and outputs as a degree of membership $\mu$, the maximum degree of membership from among the degrees of membership $\mu_1 ~ \mu_8$ outputted by the arithmetic circuits 111 ~ 118 for calculating degree of edge membership. Since the largest degree of membership is selected from among the degrees of membership obtained in a case where the directions (pixel patterns) of the edges within the window are made to correspond to direction 1 ~ direction 8 (patterns set in advance), the degree of membership $\mu$ represents the degree of membership of the direction having the highest degree of conformity among the directions 1 ~ 8.

The degree of membership $\mu$ outputted by the MAX circuit 85 is applied to a subtracting circuit 87, the other input to which is data, which represents a logical value of 1, provided by a "1" generating circuit 86. The subtracting circuit 87 outputs the value $\bar{\mu} = 1-\mu$, which is the result of subtracting the degree of membership from the value 1. The value $\bar{\mu}$ represents the degree of non-membership (the lack of edge likeness) in the most appropriate edge pattern.

The foregoing processing is repeatedly executed by scanning the window over all pixels of one field (or one frame) of image data. Accordingly, the degree of non-membership $\bar{\mu}$ is obtained with regard to all pixels (i.e., with regard to windows in which all pixels are respectively adopted as the center pixel).

The degree of non-membership $\bar{\mu}$ obtained by the operation unit 81 for calculating degree of non-membership is applied to the unit 82 that generates the histogram of degree of non-membership. Also applied to the unit 82 is the image data of the center pixel $P_0$ (which data represents the brightness of the center pixel $P_0$), as mentioned above. The unit 82 that generates the histogram of degree of non-membership cumulatively adds the provided degree of non-membership $\bar{\mu}$ for every brightness (i.e., for every step of 256 steps in case of eight-bit representation) represented by the image data of the center pixel $P_0$ that produced this degree of non-membership $\bar{\mu}$, thereby generating the histogram of degree of non-membership. The histogram of degree of non-membership has brightness plotted along its horizontal axis and the value of the sum of degree of non-membership plotted along its vertical axis.

On the basis of the image data (brightness) of the reference pixel $P_0$ provided, and for every brightness, the unit 83 for generating the brightness histogram cumulatively adds the number of reference pixels $P_0$ possessing this brightness, thereby producing the brightness histogram. Brightness (e.g., 256 steps) is plotted along the horizontal axis of the brightness histogram, and the number of pixels having this brightness is plotted along the vertical axis.

The data representing the histogram of degree of non-membership produced by the generating unit 82, as well as the data representing the brightness histogram produced by the generating unit 83, is applied to the unit 84 that generates the histogram of picture quality. For every brightness, the generating unit 84 divides the value of the cumulative sum of the degrees of non-membership in the histogram of degree of non-membership by the corresponding number of pixels in the brightness histogram, thereby performing normalizing and calculating the average value of the degree of non-membership $\bar{\mu}$. A histogram in which the average value of the degree of non-membership $\bar{\mu}$ can be plotted along the vertical axis and brightness along the horizontal axis is the picture-quality histogram shown in Fig. 54. The average value of the degree of non-membership $\bar{\mu}$ along the vertical axis represents the poorness of picture quality as a reference for evaluating picture quality.

In the histogram of picture quality shown in Fig. 54, let $Q_{max}$ represent the maximum value and $Q_{min}$ the minimum value. When picture-quality data is binarized with a brightness $k_{opt}$ at which the minimum value $Q_{min}$ is obtained serving as a threshold value, the poorness of picture quality is minimized and the best binary image data is obtained.

The CPU 65 reads the maximum value $Q_{max}$ and minimum value $Q_{min}$ of the poorness of picture quality from the picture-quality histogram produced by the picture-quality histogram generating unit 84. Further, the CPU 65 reads the brightness $k_{opt}$ corresponding to the minimum value $Q_{min}$. Thereafter, the CPU 65 searches in the bright direction and dark direction about the brightness $k_{opt}$ along the horizontal axis in the picture-quality histogram and calculates a width WB of brightness for which the value along the vertical axis first exceeds a value equivalent to $(1-a) \times Q_{max} + a \times Q_{min}$.

Here a is a positive coefficient that is less than 1 and represents tolerance.

The CPU 65 calculates an evaluated value V of brightness at the set height h of the lighting device 11 in accordance with Equation (5) and stores the result of calculation in the RAM 67.

$$V = \frac{Q_{max}}{Q_{min}}WB \qquad \qquad \cdots \ (5)$$

In Equation (5), $Q_{max}/W_{min}$ expresses the depth of the valley of the picture-quality histogram. The larger this value, the more distinct a portion having edge likeness and a portion lacking edge likeness are from each other, and therefore the greater the contrast of the image. Further, since WB is the width of the valley, as mentioned above, the larger the value of WB, the smaller the change in picture quality even if the illuminance of the lighting device fluctuates. In other words, the larger the value of WB, the better the variability of the degree of contrast.

The calculation of the evaluated value V is not limited to Equation (5) but can be performed using the following Equations (6) through (10) as well:

$$V = \frac{Q_{max}}{Q_{min}} \qquad \qquad \cdots (6)$$

$$V = WB \qquad \qquad \cdots (7)$$

$$V = \frac{1}{Q_{min}} \qquad \qquad \cdots (8)$$

$$V = \frac{WB}{Q_{min}} \qquad \qquad \cdots (9)$$

$$V = \frac{Q_{max}}{Q_{min}} \times \frac{WB}{k_{opt}} \qquad \qquad \cdots (10)$$

Equation (10) provides an evaluated value that takes into account the absolute value of the fluctuation in the illuminance of the light source as well as the width of brightness at which photography can be performed stably. In general, the degree to which a light source darkens due to deterioration thereof is proportional to the illuminance of the light source as such time. Accordingly, a light source having a low illuminance exhibits a smaller absolute value of deviation in illuminance caused by deterioration. On the other hand, the width WB is constant. If it is assumed that $(Q_{max}/Q_{min})WB$ is constant, it is better $k_{opt}$ is small. The smaller $k_{opt}$, the larger the evaluated value V will be.

Fig. 55 illustrates the relationship between the set-up height h of the lighting device 11 and the evaluated value V of lighting. The evaluated value V of lighting takes on a maximum value $V_{max}$ at a certain set-up height $h_{opt}$, on both sides of which the evaluated value V decreases in monotonous fashion. In other words, the evaluated value V is a convex function having a single peak.

Accordingly, the height of the lighting device 11 can be set optimally as follows by taking the evaluated value V into account.

In a case where an evaluated value V0 is obtained at a certain set-up height h0 and a larger evaluated value V1 (V1 > V0) is obtained when the set-up height is then raised to h1 (h1 > h0), the height of the lighting device 11 should be adjusted in a direction that raises the height h further in order to set the height to the optimum set-up height $h_{opt}$.

Conversely, in a case where an evaluated value V0 is obtained at a certain set-up height h0 and a smaller evaluated value V1 (V1 < V0) is obtained when the set-up height is then raised to h1 (h1 > h0), the height of the lighting device 11 should be adjusted in a direction that lowers the height h in order to set the height to the optimum set-up height $h_{opt}$.

The CPU 65 of the image processor 40 evaluates the picture quality of the image based upon image data obtained by imaging the object OB using the camera 20 and A/D-converting the video signal outputted by the camera 20, and causes the display unit 41 to display instructions relating to the positional setting of the lighting device 11, thereby aiding the operation through which the user sets the lighting device 11 to the optimum position.

Figs. 56 and 57 illustrate such a processing procedure executed by the CPU 65.

The CRT display unit 41 displays an initial screen that contains a message of the kind illustrated in Fig. 58 (step 331). Upon observing the initial screen, the user loosens the fastening member 34, positions the lighting device 11 at the appropriate height h0 and then tightens the fastening member 34. When the setting of the lighting device 11 has been completed, the user presses a setting key on the keyboard 69, as a result of which a YES answer is received at step 332.

The CPU 65 causes the television camera 20 to pick up the image of the object and causes the image input unit 61 to accept the video signal obtained (step 333). If necessary, the image that has been picked up is displayed on the display unit 41.

The image input unit 61 A/D converts the accepted video signal to convert it into image data and then generates the picture-quality histogram through the technique described above. The CPU 65 reads the maximum value $Q_{max}$ and minimum value $Q_{min}$ of the poorness of picture quality, as well as the brightness $k_{opt}$ that corresponds to the minimum value $Q_{min}$, from the picture-quality histogram generated by the picture-quality histogram generating unit 84 (step 334). Furthermore, the CPU 65 decides the width WB of brightness in the valley from the picture-quality histogram, calculates the evaluated value V0 of lighting by executing the arithmetic operation of Equation (5) or any of Equations (6) through (10), and stores this value in the RAM 67 (step 335).

Next, the CPU 65 causes the display unit 20 to display a message of the kind shown in Fig. 59 (step 336). While observing the display, the user manually moves the lighting device 11 to a suitable height position h1 higher than the initial height h0 and fixes the lighting device at this position. Thereafter, the user operates the setting key, as a result of which a YES answer is obtained at step 337.

The imaging of the object, the entry of the image data and the creation of the picture-quality histogram based upon the input image data are performed again (step 338) and the evaluated value V1 of lighting that corresponds to the height h1 is calculated based upon the new histogram of picture quality (steps 339, 340).

The CPU 65 compares the preceding (initial) evaluated value V0 and the current evaluated value V1 (step 341) and, if V1 > V0 holds, stores the current evaluated value V1 in the RAM 67 in order to replace the preceding evaluated value V0 with the current evaluated value V1 (step 342). In order to raise the height of the lighting device 11 further, the message of Fig. 59 is displayed on the display unit 41 (step 343).

In a case where V1 ≤ V0 holds, the CPU 65 stores the current evaluated value V1 in the RAM 67 to update the evaluated value (step 344) and causes the display unit 41 to display the message shown in Fig. 60 in order to lower the height of the lighting device 11 (step[345]).

When the message of Fig. 59 has been displayed, the user changes the lighting device II to the height position hl that is higher than the preceding position. When the message of Fig. 60 has been displayed, the user changes the lighting device II to the height position hl that is lower than the preceding position. Thereafter, the user operates the setting key on the keyboard 69, as a result of which a YES decision is rendered at stem 346 and the program returns to step 338. The CPU 65 repeats the imaging of the object OB using the camera 20, the creation of the histogram of picture quality and the calculation of the evaluated value.

Thus, while observing the messages displayed on the display unit 41, the user repeats the above-described procedure while adjusting the set-up height of the lighting device 11 up or down and gradually reducing the amount of movement. A state in which the messages of Figs. 59 and 60 switch back and forth is obtained merely by successively adjusting height a slight amount. This means that the optimum set-up height $h_{opt}$ is in the vicinity of the set-up height at this time. Finally, the user presses an END key on the keyboard 69 (step 347), as a result of which the adjusting operation ends.

(7) Apparatus for aiding in setting of optimum lighting conditions (Part 2: setting of position of lighting device)

The above-described apparatus for aiding in the setting of optimum position is such that the user positions the lighting device 11 manually. Described next will be an embodiment in which the user enters the direction of movement and the moving distance (or position) of the lighting device 11 through the keyboard, whereby the lighting device II is positioned at a commanded position automatically.

An arrangement equipped with the automatic elevating mechanism shown in Fig. 13 is used as the image processing system. The circuitry shown in Fig. 47 is employed as the construction of the image processor 40. The pulse motor 37 is connected to the I/O control unit 68, as indicated by the chain line. The motor 37 is driven and controlled by commands from the CPU 65 (or by commands from the I/O control unit 68). The arrangements of the various circuits shown in Figs. 48 and 49 are used as is.

Figs. 61 and 62 illustrate a processing procedure executed by the CPU 65. Steps in these Figures identical with those shown in Figs. 56 and 57 are designated by like characters to avoid a redundant description.

The processing of steps 331 ~ 336 in Fig. 61 is the same as that indicated in Fig. 56.

Upon observing the message shown in Fig. 59, the user employs the keyboard 69 to enter the direction (up or down) of movement of the lighting device 11 as well as the moving distance (step 352) and operates the SET key (step 337).

When this is done, the pulse motor 37 is driven (step 353) via the I/O control unit 68 based upon the entered data representing the direction of movement and the moving direction. As a result, the lighting device 11 is moved the designated distance in the designated direction and then stops. Thereafter, the imaging of the object OB, the creation of the histogram of picture quality and the calculation of the evaluated value V1 are carried out (steps 338 ~ 341).

Upon observing the message of Fig. 59 or Fig. 60 displayed on the display unit 41, the user enters the direction of movement and the moving distance of the lighting device 11 via the keyboard 69 in accordance with the message (steps 354, 355). As a result, if there is a subsequent input from the SET key, the program returns to step 353 and movement of the lighting device 11 is performed by driving and controlling the motor 37.

Thus, while observing the message displayed on the display screen 41, the user adjusts the set-up position of the lighting device 11 up or down by entering a command from the keyboard 69. When adjustment is completed, the user operates the END key on the keyboard 69, whereby the adjusting operation is terminated (step 347).

According to the two embodiments set forth above, the direction of movement of the lighting device 11 is indicated to the user by a visual display using a display unit. However, this can be indicated to the user by voice or through alert sounds that differ depending upon the direction of movement.

(8) Apparatus for aiding in setting of optimum lighting conditions (Part 3: setting of position of lighting device)

An embodiment in which the height of a lighting device is set to an optimum height automatically will now be described in detail.

The image processing shown in Fig. 13 will be adopted. The construction of the image processor shown in Figs. 47 through 49 is used. In Fig. 47, the pulse motor 37 is connected to the I/O control unit 68.

The control processing procedure executed by the CPU 65 is illustrated in Figs. 63 and 64. Here also processing steps identical with those shown in Figs. 56 and 57 are designated by like characters.

First, the rotational angle $\theta_1$ and direction of rotation of the pulse motor 37 are entered from the keyboard 69 (step 362). It is permissible to enter the moving distance instead of the rotational angle $\theta_1$. In such case, the CPU 65 calculates the rotational angle $\theta_1$ of the motor 37 needed to move the lighting device 11 the entered moving distance. The direction of rotation generally is set to the upward direction, though it may be set to the downward direction.

Thereafter, when a START key input is made using the keyboard 69 (step 363), imaging of the object OB is performed under lighting provided by the lighting device 11 positioned at the initial height h0, and creation of the picture-quality histogram and calculation of the evaluate value V0 are executed (steps 333 ~ 335).

Next, the CPU 65 rotatively drives the pulse motor 37 through the initially set angle $\theta_1$ in the direction entered at step 362, thereby raising or lowering the lighting device 11 the corresponding distance (step 364). The height of the lighting device 11 becomes h1. Imaging, creation of the picture-quality histogram and calculation of the evaluated value V1 are carried out at the height h1 (steps 339, 340).

The CPU 65 determines whether the absolute value of the difference between the preceding evaluated value V0 and the current evaluated value V1 is equal to or less than a predetermined threshold value TH (step 365). If the determination is NO, then the program proceeds to step 341.

Even if a YES determination is made, it is determined whether the angle $\theta$ (the angle updated at step 367) is equal to or less than a predetermined threshold value $\theta_{th}$. If the answer here is NO, the program proceeds to step 341.

The evaluated values V0 and V1 are compared at step 341.

If V1 > V0 holds, the program returns to step 364 and the pulse motor 37 is rotated in the same direction as previously through the angle $\theta_1$ that is the same as previously, whereby the lighting device 11 is raised or lowered in the same direction. Thereafter, imaging and calculation of the evaluated value are carried out again.

In a case where V ≦ V0 holds, the rotational angle $\theta$ of the pulse motor 37 is set at an angle half that of the preceding angle $\theta1$, the direction of rotation is set to be the opposite direction (step 367) and the program returns to step 364. The pulse motor 37 is rotatively driven in the direction opposite that of the previous direction through the newly set angle $\theta$, thereby transporting the lighting device 11 in the opposite direction. Acceptance of the image data and calculation of the evaluated value are performed again.

Thus, the same procedure is repeated while the rotational angle $\theta$ of the pulse motor 37 is set to be successively smaller and the direction of rotation is reversed each time the relation V ≦ V0 is determined to hold. As a result, when YES determinations have been made at steps 365 and 366, the lighting device 11 is set at the optimum set-up height $h_{opt}$. This completes the operation for positionally adjusting the height of the lighting device.

(9) Apparatus for generating edge image

An edge image can be generated using the aforementioned degree of membership $\mu$ of edge likeness.

The construction of the image processor shown in Fig. 48 is adopted as the apparatus for generating edge images. Preferably, an image memory 88 that stores the degree of membership $\mu$ pixel by pixel is further provided. The arithmetic unit for calculating degree of non-membership shown in Fig. 49 also is utilized as is. Only the degree of membership $\mu$ need be outputted, with the degree of non-membership $\overline{\mu}$ being unnecessary.

23

Figs. 65a through 65h show other examples of fuzzy models representing edge patterns set in respective ones of the circuits 111 ~ 118 that calculate the degree of edge membership. Here the membership function Z is not used. The membership functions P, N have the shapes shown in Fig. 53.

When the fuzzy model illustrated in Fig. 65a is abided by, the membership function P is set in the MFC's 101, 102, 103 of the circuit 111 that calculates the degree of edge membership, and the membership function N is set in the MFC's 105, 106, 107 of the circuit 111. A membership function for outputting the maximum logical value 1 at all times irrespective of the value of the input data is set in the other MFC's 104 and 108.

Similarly, membership functions in accordance with Figs. 65b through 65h are set in the other circuits 112 ~ 118 for calculating degree of edge membership.

The degree of membership $\mu$ is calculated for every pixel with regard to all image data constituting one field (or one frame) that has been stored in the image memory 62, and these degrees of membership are stored at the corresponding locations of the image memory 88. As a result, an image representing the edge of an image of the kind shown in Fig. 66a is generated, as depicted in Fig. 66b. It is permissible to store the degree of membership $\mu$ in the image memory 88 after it has been converted into binary data using a suitable threshold value.

(10) Apparatus for aiding in setting of optimum lighting conditions (Part 4: setting of position of lighting device)

An embodiment of an apparatus for setting optimum lighting conditions based upon image data indicative of the object obtained by imaging, or for aiding in such setting, will be described again.

Fig. 67 illustrates the overall arrangement of an automatic inspecting apparatus having a lighting system whose optimum lighting conditions have been set by an apparatus for aiding in the setting of optimum lighting conditions, described below. The automatic inspecting apparatus is constituted by the lighting device 10, the camera 20, the image processor 40 and a conveyance mechanism 45. The conveyance mechanism 45 is realized by a conveyor and successively conveys a number of objects OB, which are to be inspected, to a predetermined inspection position.

The lighting device 10 and camera 20 are disposed above the inspection position. The camera 20 images the object OB at the inspection position from directly above the object and provides the image processor 40 with image data obtained by imaging.

The lighting device 10 is realized by a halogen lamp, for example, and illuminates, diagonally from above, the object OB under inspection at the inspection position. As will be described later, the luminous intensity of the lighting device 10 is set at an optimum value at which optimum inspection of the object OB will be assured.

In a case where inspection of the object OB by the image processor 40 is a sample inspection in which it is determined whether an article is an acceptable article or a defective article having a chip or burr, the luminous intensity of the lighting device 10 is set so as to maximize the accuracy with which acceptable articles and defective articles can be distinguished. This is an optimum lighting condition.

Lighting conditions are not limited to luminous intensity and may include the set position and set angle of the lighting device 10. The optimum lighting conditions may be set in the image processor 40 or in a controller, which is incorporated within the lighting device 10. In any case, the lighting device 10 is controlled by the image processor 40 or the aforesaid controller in such a manner that illumination satisfying the set optimum lighting conditions is performed by the lighting device 10.

On the basis of processing through which the image processor 40 binarizes a video signal representing the object OB provided by the camera 20, measures a characteristic quantity such as the area of the object using the resulting binary image data and compares the measured value with a predetermined reference value, the image processor 40 determines whether the object OB is an acceptable article or a defective article having a chip or burr. The characteristic quantity serving as the basis of the determination is not limited to area but can be the perimeter or center of gravity, etc., of the object.

Figs. 68 and 69 illustrate the apparatus for aiding in the setting of optimum lighting conditions. For the sake of simplicity, the lighting device 10, camera 20, image processor 40 display unit 41 and the like are indicated by characters identical with those in the inspection apparatus shown in Fig. 67. The reason for this is that the inspection apparatus and apparatus for aiding in the setting of optimum lighting conditions can serve a double purpose. Of course, these apparatus can be separately constructed.

The camera 20 is disposed directly above an observation position OV at a height the same as that in the automatic inspection apparatus. The lighting device 10 is disposed diagonally above the observation position OV and the same angle of inclination and at the same height as in the automatic scanning apparatus. Preferably, both the camera and lighting device used are the same in the automatic inspection apparatus and aiding apparatus.

The aiding apparatus is equipped with a sample supply mechanism. The latter includes a rotary table 120, a table drive mechanism 121 and a detector 123.

The rotary table 120 is a circular disk on the perimeter of the upper surface of which a plurality of acceptable samples OBa, a plurality of chipped defective samples OBb and a plurality of defective samples OBc having a burr are fixedly positioned in equiangularly spaced relation.

Identifying bodies 122a, 122b, 122c each comprising a metal plate are secured on the rotary table 120 outwardly of the positions at which the samples are secured. The identifying bodies 122a, 122b, 122c are for allowing the detector 123 to detect the fact that each of the samples OBa, OBb, OBc has reached the observation position OV. The set-up height of the identifying body 122a regarding the acceptable sample OBa, the set-up height of the identifying body 122b regarding the chipped defective sample OBb, and the set-up height of the identifying body 122c regarding the defective sample OBc with the burr differ from one another.

The table drive mechanism 121 includes a motor coupled to the center of rotation of the rotary table 120. The rotary table 120 is rotated intermittently in response to a control signal from the image processor 40, whereby the samples OBa, OBb, OBc are successively introduced to the observation position OV within the field of view of the camera 120.

The detector 123 is for detecting and distinguishing among the acceptable sample OBa, the chipped defective sample OBb and the defective sample OBc with the burr that have reached the observation position OV. The detector 123 is placed on the outer side of the rotary table 120.

The detector 123 is composed of three proximity switches 123a, 123b, 123c. The first proximity switch 123a is placed at a height the same as that of the identifying body 122a in order to detect the identifying body 122a regarding the acceptable sample OBa, the second proximity switch 123b is placed at a height the same as that of the identifying body 122b in order to detect the identifying body 122b regarding the chipped defective sample OBb, and the third proximity switch 123c is placed at a height the same as that of the identifying body 122c in order to detect the identifying body 122c regarding the defective sample OBc having the burr. The proximity switches 123a, 123b, 123c apply detection signals to the image processor 40 when the respective identifying bodies 122a, 122b, 122c are detected.

Fig. 70 illustrates the circuit arrangement of the image processor 40, which is composed of an A/D converter 131, a binarizing processing unit 132, the display unit 41, a synchronizing signal generator 133, a CPU 130, a ROM 135, a RAM 134 and an external storage device 136.

The A/D converter 131 converts the analog video signal outputted by the camera 20 into digital image data. The binarizing processing unit 132 binarizes the digital image data, which has been provided by the A/D converter 131, at a predetermined threshold value. The display unit 41 displays the binary image represented by the image data that has been binarized. The synchronizing signal generator 133 generates a vertical synchronizing signal, a horizontal synchronizing signal and other timing signals and applies these signals to the A/D converter 131, the binarizing processing unit 132 and the CPU 130.

The CPU 130, which mainly executes control and arithmetic operations for searching for and deciding optimum lighting conditions, accepts the detection signal from the detector 123 and controls the operations of the lighting device 10, table drive mechanism 121, etc. A program is stored in the ROM 135, and various kinds of data are stored temporarily in the RAM 134. The external storage device 136 is constituted by a floppy-disk device or the like and stores the decided optimum lighting conditions of the lighting device 10.

Fig. 71 illustrates the processing procedure, which is executed by the CPU 130, for deciding the optimum lighting conditions of the lighting device 10.

First, a number $N_a$ of the acceptable samples OBa, a number $N_b$ of the chipped defective samples OBb and a number $N_c$ of the burred defective samples OBc that have been placed upon the rotary table 120 are entered from the keyboard (step 371). When a start command is applied, the image processor 40 applies a start signal to the table drive mechanism 121, as a result of which the rotary table 120 rotates (step 372).

When any sample arrives at the observation position OV, the first, second and third proximity switches 123a, 123b, 123c detect the corresponding identifying bodies 122a, 122b, 122c if the samples are the acceptable sample OBa, the chipped defective sample OBb and the burred defective sample OBc, respectively. The particular detection signal is applied to the image processor 40 (step 173).

When the detection signal enters, the CPU 130 outputs a stop signal to stop the table drive mechanism 121 and halt the rotation of the rotary table 120 (step 374). As a result, the sample is positioned within the field of view of the camera 20 at the observation position OV.

In this embodiment, the luminous intensity of the lighting device 10 is optimized. The lighting device 10 is provided with the initial luminous intensity by the image processor 40 so that the lighting device 10 emits light at this initial luminous intensity to illuminate the sample. The sample at the observation position OV is imaged by the camera 20 under the lighting provided by the lighting device 10 (step 375). The output video signal from the camera 20 enters the image processor 40.

The video signal is A/D-converted and binarized. The CPU 130 measures the characteristic quantity of the sample at the observation position OV using this binary image data (step 376). In this embodiment, the characteristic quantity is the area of the sample in the image resulting from imaging. The characteristic quantity measured is stored in the RAM 134.

The RAM 134 is internally provided with areas for separately storing respective ones of the characteristic quantities for the acceptable articles, chipped defective articles and burred defective articles. On the basis of the detection signal entered from the detector 123, CPU 130 determines whether the sample at the observation position OV is an acceptable sample, a chipped defective sample or a burred defective sample and stores the measured characteristic quantity in the storage area for the type of sample determined.

The processing of steps 372 ~ 376 is successively performed with regard to all of the samples on the rotary table 120. If the number of times processing is performed reaches the total number ($N_a$ + $N_b$ + $N_c$) of the number of samples entered previously, the rotary table 120 will have made one revolution (step 377).

When measurement of the characteristic quantity (area) ends with regard to all samples on the rotary table 120, the sum for every type of sample whose measured area has been stored in the RAM 134 is divided by the number of samples $N_a$, $N_b$ or $N_c$, thereby obtaining an average value $S_a$ of the areas of acceptable samples OBa, an average value $S_b$ of the areas of chipped defective samples OBb and an average value $S_c$ of the areas of burred defective samples OBc (step 378).

An evaluated value S of the accuracy with which the acceptable and defective articles are discriminated is calculated in accordance with the following equation using the average values $S_a$, $S_b$, $S_c$ (step 379):

$$S = |S_c\text{-}S_a| + |S_a\text{-}S_b| \qquad (11)$$

The larger the evaluated value S, the higher the accuracy with which the acceptable articles and defective articles can be discriminated.

The evaluated-value calculating processing shown in Fig. 71 is repeated a plurality of times while changing the initial luminous intensity set in the lighting device 10. When the initial luminous intensity is plotted along a horizontal axis and the calculated evaluated value S is plotted along a vertical axis, the evaluated value S defines a convex function having a single peak in the same manner as the evaluated value V shown in Fig. 55. The initial luminous intensity that gives the maximum value or an evaluated value in the vicinity thereof indicates lighting conditions at which the acceptable and defective articles can be discriminated with the highest accuracy. An initial luminous intensity of this kind is decided by the CPU 130 or by the operator.

The optimum lighting conditions (the optimum initial luminous intensity) thus decided are stored in the external storage device 136 along with other necessary data. The optimum lighting conditions are utilized by the inspection apparatus shown in Fig. 67.

(11) Apparatus for aiding in setting of optimum lighting conditions (Part 5: setting mainly of luminous intensity of lighting device)

In the foregoing embodiment, the optimum lighting conditions are set based upon the area of a sample. Described next will be an apparatus for setting optimum lighting conditions, or for aiding in such setting, based upon an approach in which lighting conditions that minimize a variance in the characteristic quantity of a sample are optimum.

A lighting system optimized based upon the above-mentioned approach is used in an automatic measuring apparatus that measures such characteristic quantities as position of center of gravity, area and perimeter from the image of an object undergoing measurement. The arrangement of this automatic measuring apparatus is the same as that shown in Fig. 67.

Figs. 72 and 73 show the arrangement of an apparatus for aiding in setting of optimum lighting conditions. Components identical with those shown in Figs. 68 and 69 are designated by like reference characters to avoid a redundant description thereof.

A plurality of samples $OB_s$ are fixedly positioned in equiangularly spaced relation along the perimeter of the upper surface of the disk-shaped rotary table 120. Identifying bodies 122 each comprising a metal plate are secured at the same height on the rotary table 120 outwardly of the positions at which the samples $OB_s$ are secured.

The detector 123, which comprises a proximity switch, is disposed outwardly of the rotary table 120 at a height the same as that of the identifying body in the vicinity of the observation position OV.

The construction of the image processor 40 is the same as that shown in Fig. 70 and therefore an illustration and description thereof are omitted.

The processing procedure for deciding the optimum lighting conditions for measurement also is a flow basically the same as that shown in Fig. 71. The following description will deal mainly with points that differ from the processing of Fig. 71. In this embodiment, the number of samples $OB_s$ secured on the rotary table 120 is entered at the initial step 371.

When the rotary table 120 is rotated so that any sample $OB_s$ arrives at the observation position OV, the rotary table 120 is stopped and the sample $OB_s$ is imaged. A predetermined initial luminous intensity is set in the lighting device 10 by the image processor 40.

The image processor 40 processes the image data accepted from the camera 20, thereby measuring a characteristic quantity such as the position of the center of gravity or the area, and stores the measured characteristic quantity.

The above-described operation is executed with regard to all samples on the rotary table 120.

When measurement with regard to all samples $OB_s$ is completed, a variance in the characteristic quantities regarding all measured samples is obtained. The smaller the variance, the smaller the dispersion of the characteristic quantities and the higher the accuracy of measurement.

Similar measurement and calculation of variance are executed by the image processor 40 while the luminous intensity of the lighting device 10 is changed. The luminous intensity that results in the smallest obtained variance is retrieved and this luminous intensity is decided as being the optimum lighting condition.

In the two embodiments described above, a rotary table is provided. However, the device on which the samples are placed to convey the same may be the belt conveyor of the kind shown in Fig. 67.

(12) Apparatus for aiding in deciding of imaging conditions

Fig. 74 illustrates an arrangement of the apparatus 50 for aiding in the deciding of imaging conditions. Components identical with those shown in Fig. 14 are designated by like reference characters. The aiding apparatus 50 is capable of being realized even if an image processor identical with that of the aiding apparatus shown in Fig. 14 is used. For this reason, the same reference character 50 is assigned thereto.

The apparatus 50 for aiding in the deciding of imaging conditions is provided with a lens selecting unit 57. In accordance with information entered by the user from the input unit 51, such as the desired size of the field of view, the desired set-up distance and information indicating what is to be given priority, the lens selecting unit 57 introduces the lens, the close-up photography ring and set-up distance, etc., suited to the entered information.

The relationship to the various parameters of the imaging system will be described with reference to Fig. 75.

The set-up distance (the distance between the object OB imaged and the camera 20) A of the camera is given by the following equation:

$$A = [Ls(F + B - h - \Delta H + d)/Lc] + B - h + d \qquad (12)$$

where

Ls: size of field of view
F: flange focal distance
B: total length of lens 22
h: distance from lens tip to first principal point
$\Delta H$: spacing between principal points
d: helicoid delivery
Lc: effective area of picture of image pick-up device

The helicoid delivery d is represented by the following equation using the focal length $f_0$ of the lens 22 (a lens combination or lens barrel):

$$d = (Lc \times f_0/Ls) - F - B + h + \Delta H + f_0 \qquad (13)$$

The set-up distance A of the camera is expressed as follows when Ls/Lc is derived from Equation (13) and this is substituted into Equation (12):

$$A = f_0[(F + d + B - h - \Delta H)/(F + d + B - h - \Delta H - f_0)] + d + B - h \qquad (14)$$

The field of view Ls is derived as follows from Equations (13) and (14):

$$Ls = Lc(A - d - B + h)/(F + d + B - h - \Delta H) \qquad (15)$$

The flange focal distance F and the effective area Lc of the picture are constants decided by the camera 20 and may be considered as being fixed values. The total length B of the lens, the distance h from the selected lens to the first principal point, the spacing $\Delta H$ between the principal points and the actual focal length $f_0$ are constants decided by the lens 22 and, hence, we let $l_{ens}$ express the set of these constants. The constant $l_{ens}$ is uniquely determined by the type of lens.

Accordingly, Equations (12) and (13) are expressed concisely as follows using the symbol function f( ):

$$A = f(Ls, d, l_{ens}) \qquad (16)$$

$$d = f(Ls, l_{ens}) \qquad (17)$$

If d is derived from Equation (14), the helicoid delivery may be expressed also as follows:

$$d = f(A, l_{ens}) \qquad (18)$$

Furthermore, the size Ls of the field of view may be expressed also as follows from Equation (15):

$$Ls = f(A, d, l_{ens}) \qquad (19)$$

Equations (16) through (17) represent the relationship among the camera set-up distance A, the size Ls of the field of view, the helicoid delivery d and the lens constant $l_{ens}$. If at least two of the above-mentioned four parameters are given, the other two are determined using these relations.

Processing will be described for selecting the optimum type of lens, in a case where a desired size $Ls_0$ of field of view and a desired set-up distance $A_0$ have been given, utilizing the relations of Equations (16) through (19). It will be assumed that there are N types of lenses and that the constants $l_{ens}$ regarding these lenses are already known. It is preferred that the lens constant $l_{ens}$ be stored in memory beforehand for each type of lens. The user may enter the lens constant $l_{ens}$ on each of occasion.

Fig. 76 illustrates processing for a case in which priority is given to the desired field of view $Ls_0$.

First, the user enters the desired field of view $Ls_0$ and the desired set-up distance $A_0$ from the input unit 51 (step 380).

The lens constant $l_{ens}$ of the first (n = 1) lens is read out of the memory or is entered through the input unit 51, and the helicoid delivery d is calculated from Equation (17) using the desired field of view $Ls_0$ and the n-th lens constant $l_{ens}$ (steps 381 ~ 383).

The helicoid delivery d must be smaller than the maximum helicoid delivery $d_{max}$. Therefore, it is determined whether the calculated helicoid delivery d is larger than the maximum helicoid delivery $d_{max}$ (step 384).

If the calculated helicoid delivery d is larger than the maximum helicoid delivery $d_{max}$, then use must be made of a close-up photography ring having a thickness t that satisfies the inequality indicated by Equation (20) below. Accordingly, a close-up photography ring that satisfies Equation (20) is selected (step 385). Preferably, data relating to the close-up photography ring also is stored in memory in advance.

$$t < d < (t + d_{max}) \qquad (20)$$

Next, in accordance with Equation (16), the camera set-up distance A is calculated with regard to the particular lens using the calculated helicoid delivery d (step 386).

The foregoing processing is performed repeatedly with regard to N types of lenses (steps 387, 388) and the lens number n, close-up photography ring thickness t and set-up distance A obtained in each processing cycle are stored in memory.

When processing regarding the N types of lenses ends, a lens number $n_0$ having the set-up distance A nearest to the desired set-up distance $A_0$ is selected from among these lenses (step 289). If there is data regarding the thickness t of the close-up photography ring with regard to the selected lens number $n_0$, then

this data is selected. The calculated camera set-up distance A is the distance at which the camera 20 is actually to be set up. Since the relation B + d < A must of course hold among the total length B of the lens 22, the helicoid delivery d and the camera set-up distance A, it goes without saying that it is required that such a lens be selected.

The thus selected type of lens, thickness of the close-up photography ring and set-up distance A are illustrated on the display unit 41, as shown in Fig. 78.

Fig. 77 illustrates processing through which priority is given to the desired set-up distance. Processing steps identical with those shown in Fig. 76 are designated by like characters to avoid a redundant description.

The helicoid delivery d is calculated in accordance with Equation (18) using the desired set-up distance $A_0$ and the lens constant $l_{ens}$ of the n-th lens (step 383). In a case where $d > d_{max}$ holds, the close-up photography ring thickness t is calculated (step 385).

The field of view Ls is calculated in accordance with Equation (19) using the calculated helicoid delivery d (step 391).

The foregoing processing is executed repeatedly with regard to all types of the lenses. Thereafter, the lens having the field of view Ls nearest to the desired field of view $Ls_0$ is selected (step 392) and the result of selection is displayed as shown in Fig. 78 (step 393).

Finally, processing will be described for obtaining the close-up photography ring and set-up distance with which the desired field of view is realized using the designated lens. No flowchart is illustrated for this processing.

In this case, since the lens 22 is already known, the helicoid delivery d is calculated by substituting the desired field of view $Ls_0$ and the constant $l_{ens}$ of the designated lens into Equation (17). The helicoid delivery d must be smaller than the helicoid delivery $d_{max}$ of the lens. Therefore, in a case in which the calculated helicoid delivery d is greater than the maximum helicoid delivery $d_{max}$, the close-up photography ring having the thickness t that satisfies the inequality of Equation (20) is used.

Next, the set-up distance A is obtained in accordance with Equation (16) using the calculated helicoid delivery d, the desired field of view $Ls_0$ and the lens constant $l_{ens}$.

In this case also, the relation B + d < A must of course hold among the total length B of the lens 22, the helicoid delivery d and the camera set-up distance A. When B + d > A holds, therefore, the desired field of view cannot be realized using the designated lens.

Thus, as set forth above, when the desired field of view $Ls_0$ and the desired set-up distance A are entered from the input unit 51, the lens (focal distance), the thickness of the close-up photography ring and the set-up distance are displayed on the CRT display unit as recommended values. If the desired field of view and the lens are entered, the set-up distance conforming thereto is calculated and displayed.

Industrial Applicability

The image processing system may be utilized effectively in inspection of manufactured articles on a factory conveyor line, in recognition of objects by robots, etc. An apparatus for aiding in the deciding of lighting conditions, the setting of optimum lighting conditions and the deciding of imaging conditions, etc., in accordance with the present invention may be utilized as a tool by which the user may decide and set more appropriate lighting conditions and imaging conditions for the sake of appropriate imaging of objects suited to inspection purposes and in order to perform highly precise recognition of objects.

## Claims

1. An apparatus for aiding in deciding of lighting conditions, comprising:
   an input unit (51) for entering information relating to a shape feature of an object;
   a memory device (54) for storing information relating to characteristics of lighting devices;
   an operation unit (54) for deriving a setting position of said lighting devices that satisfies a requirement for optimum photography of the object based upon the shape feature of the object entered from said input unit and characteristics that have been stored in said memory device regarding a designated lighting device; and
   an output unit (41, 52) for outputting the setting position derived by said operation unit.

2. The apparatus according to claim 1, wherein the information relating to the shape feature of the object includes sizes of fields of view of the lighting devices necessary for lighting the object.

3. The apparatus according to claim 1, wherein the information relating to the characteristics of the lighting devices includes sizes of the lighting devices and uniform-illuminance characteristics.

4. The apparatus according to claim 1, wherein the setting position of a lighting device is represented by distance between the lighting device and the object.

5. The apparatus according to claim 1, wherein said output unit is a display unit (41) for displaying the setting position.

6. The apparatus according to claim 1, wherein said output unit controls support devices (37, 38) for supporting a lighting device in such a manner that the setting position thereof may be freely adjusted.

7. The apparatus according to claim 1, further comprising:
a memory device (56) for storing beforehand appropriate types of lighting devices and lighting methods in correlation with information relating to purposes of illumination and disparities in optical properties between an observed portion and a background portion of the object;
an input unit (51) for entering information relating to the purpose of illumination and the disparity in optical properties between the observed portion and background portion of the object;
a processing unit (56) for deriving an appropriate type of lighting device and lighting method, which have been stored in said memory device, in accordance with the information entered from said input unit (51); and
a display unit (41) for displaying the appropriate type of lighting device and lighting method that have been derived by said processing unit (56).

8. The apparatus according to claim 7, wherein said purpose of illumination is an inspection purpose of the object.

9. The apparatus according to claim 7, wherein said processing unit selects a lighting device and a method of lighting suited to an entered size of field of view.

10. In an image processing system having lighting devices (11, 13) for lighting an object, an image pick-up device (20) for photographing the object under lighting provided by the lighting devices and outputting a video signal representing the photographed object, and a processing unit (40, 50) for executing image processing relating to the object using the video signal outputted by the image pick-up device, a method of aiding in deciding of lighting conditions, comprising:
accepting information relating to a shape feature of the object;
deriving a setting position of a designated lighting device that satisfies a requirement for optimum photography of the object based upon the information relating to the shape feature of the object and characteristics that have been set in advance regarding said lighting device; and
outputting the setting position derived.

11. The method according to claim 10, further comprising:
accepting information relating to a purpose of illumination and a disparity in optical properties between an observed portion and a background portion of the object;
selecting, from types of lighting devices and lighting methods that have been set in advance, a type of lighting device and illumination method suited to said information accepted; and
deriving said setting position suited to the selected lighting device and lighting method.

12. An apparatus for aiding in deciding of lighting conditions, comprising:
an input unit (51) for entering information relating to a shape feature of an object;
an operation unit (55) for deriving a setting angle of a lighting device (14) that satisfies a requirement for optimum photography of the object based upon the shape feature of the object entered from said input unit; and
an output unit (41, 52) for outputting the setting angle derived by said operation unit.

13. The apparatus according to claim 12, wherein said output unit is a display unit (41) for displaying the setting angle.

**14.** The apparatus according to claim 12, wherein said output unit controls a support devices (39) for supporting a lighting device in such a manner that the setting angle thereof may be freely adjusted.

**15.** The apparatus according to claim 12, further comprising:

a memory device (56) for storing beforehand appropriate types of lighting devices and lighting methods in correlation with information relating to purposes of illumination and disparities in optical properties between an observed portion and a background portion of the object;

an input unit (51) for entering information relating to the purpose of illumination and the disparity in optical properties between the observed portion and background portion of the object;

a processing unit (56) for deriving an appropriate type of lighting device and lighting method, which have been stored in said memory device, in accordance with the information entered from said input unit (51); and

a display unit (41) for displaying the appropriate type of lighting device and lighting method that have been derived by said processing unit (56).

**16.** The apparatus according to claim 15, wherein said purpose of illumination is an inspection purpose of the object.

**17.** The apparatus according to claim 15, wherein said input unit enters size of a field of view, and

said processing unit selects a lighting device and a method of lighting suited to the entered size of the field of view.

**18.** In an image processing system having a lighting device (14) for lighting an object, an image pick-up device (20) for photographing the object under lighting provided by the lighting device and outputting a video signal representing the photographed object, and a processing unit (40, 50) for executing image processing relating to the object using the video signal outputted by the image pick-up device, a method of aiding in deciding of lighting conditions, comprising:

accepting information relating to a shape feature of the object;

deriving a setting angle of said lighting device that satisfies a requirement for optimum photography of the object based upon the accepted information relating to the shape feature of the object; and

outputting the setting angle derived.

**19.** The method according to claim 18, further comprising:

accepting information relating to a purpose of illumination and a disparity in optical properties between an observed portion and a background portion of the object;

selecting, from types of lighting devices and lighting methods that have been set in advance, a type of lighting device and illumination method suited to said information accepted; and

deriving said setting angle suited to the selected lighting device and lighting method.

**20.** An apparatus for aiding in deciding of lighting conditions, comprising:

a memory device (56) for storing beforehand appropriate types of lighting devices and lighting methods in correlation with information relating to purposes of illumination and disparities in optical properties between an observed portion and a background portion of a object;

an input unit (51) for entering information relating to the purpose of illumination and the disparity in optical properties between the observed portion and background portion of the object;

a processing unit (56) for deriving an appropriate type of lighting device and lighting method, which have been stored in said memory device, in accordance with the information entered from said input unit (51); and

a display unit (41) for displaying the appropriate type of lighting device and lighting method that have been derived by said processing unit (56).

**21.** The apparatus according to claim 20, wherein said purpose of illumination is an inspection purpose of the object.

**22.** The apparatus according to claim 20, wherein said input unit enters size of a field of view, and

said processing unit selects a lighting device and a method of lighting suited to the entered size of the field of view.

**23.** An method of aiding in deciding of lighting conditions, comprising:

accepting information relating to a purpose of illumination and a disparity in optical properties between an observed portion and a background portion of an object;

selecting, from types of lighting devices and lighting methods that have been set in advance, a type of lighting device and illumination method suited to said information accepted; and

outputting the selected lighting device and lighting method in visible form.

**24.** An apparatus for aiding in setting of lighting conditions, comprising:

a lighting device (11) for lighting an object;

a support device (30, 31, 38) for supporting said lighting device in a positionally adjustable manner;

an image pick-up device (20) for imaging the object under lighting provided by said lighting device and outputting a video signal representing an image of the object;

picture-quality histogram generating circuit means (61, 82, 83, 84) for generating a picture-quality histogram that represents degree of acceptability of picture quality with respect to brightness based upon the video signal outputted by said image pick-up means;

evaluated-value calculating circuit means (65) for calculating an evaluated value of brightness based upon the picture-quality histogram generated by said picture-quality histogram generating circuit means;

comparing circuit means (65) for comparing a currently prevailing evaluated value calculated by said evaluated-value calculating means with an immediately preceding evaluated value that prevailed prior to a change in position of said lighting device; and

output means (41, 68) for outputting results of the comparison performed by said comparing circuit means.

**25.** The apparatus according to claim 24, wherein said output means is a display unit (41) that designates a direction for positional adjustment of said lighting device in dependence upon the results of the comparison performed by said comparing circuit means.

**26.** The apparatus according to claim 24, wherein said supporting device includes a driving device (37) for changing the position of said lighting device;

said output means is a display unit (41) that designates a direction for positional adjustment of said lighting device in dependence upon the results of the comparison performed by said comparing circuit means; and

said apparatus further comprises an input unit (69) for entering a command for the purpose of driving said driving device, and a control unit (65, 68) for controlling said driving device in response to the command entered through the input unit.

**27.** The apparatus according to claim 24, wherein said supporting device includes a driving device (37) for changing the position of said lighting device; and

said apparatus further comprises control means (65, 68) for controlling said driving device (37) in dependence upon the results of comparison performed by said comparing circuit means and adjusting the position of said lighting device to an optimum position.

**28.** The apparatus according to claim 24, wherein said picture-quality histogram generating circuit means includes:

A/D converting means (61) for converting said video signal into digital image data;

an image memory (62) for storing one screen of digital image data resulting from the A/D conversion;

window means (70 ~ 76, 78) for setting a window on said one screen of image data and extracting pixel data regarding a plurality of pixels within the window;

means (91 ~ 98) for generating data relating to slope of the image data within said window;

means (101 ~ 109, 111 ~ 118) for calculating degree of matching between the data relating to slope and a plurality of edge patterns;

means (85, 86, 87) for calculating an evaluated value of picture quality from said degree of matching; and

means (65, 80, 82, 83, 84) for executing control in such a manner that the calculation of said evaluated value of picture quality is performed with regard to all pixels of one screen, and calculating an average value of said evaluated value for every brightness represented by image data of each pixel.

EP 0 569 589 A1

**29.** In an image processing system having a lighting device (11) for lighting an object, a support (30, 31, 38) for supporting said lighting device in a positionally adjustable manner, and an image pick-up device (20) for imaging the object under lighting provided by said lighting device and outputting a video signal representing an image of the object, a method of aiding in setting of lighting conditions, comprising:

generating a picture-quality histogram that represents degree of acceptability of picture quality with respect to brightness based upon the video signal outputted by said image pick-up device;

calculating an evaluated value of brightness based upon the picture-quality histogram generated;

comparing a calculated currently prevailing evaluated value with an immediately preceding evaluated value that prevailed prior to a change in position of said lighting device; and

outputting results of the comparison.

**30.** An edge-image generating apparatus comprising:

an image pick-up device (20) for imaging an object and outputting a video signal representing an image resulting from imaging;

A/D converting means (61) for converting the video signal, which is outputted by said image pick-up device, into digital image data;

an image memory (62) for storing one screen of digital image data resulting from the A/D conversion;

window means (70 ~ 76, 78) for setting a window on said one screen of image data and extracting pixel data regarding a plurality of pixels within the window;

means (91 ~ 98) for generating data relating to slope of the image data within said window;

means (101 ~ 109, 111 ~ 118) for calculating degree of matching between said data relating to slope and a plurality of edge patterns;

means (85) for calculating an evaluated value of edge likeness from said degree of matching; and

means (65, 80) for executing control in such a manner that the calculation of said evaluated value of edge likeness is performed with regard to all pixels of one screen.

**31.** The apparatus according to claim 30, further comprising an edge-image memory (88) for storing said evaluated value of edge likeness.

**32.** The apparatus according to claim 30, further comprising means for binarizing said evaluated value of edge likeness by subjecting said evaluated value to level discrimination using a predetermined threshold value.

**33.** A method of picking up an image of an object by an image pick-up device (20) and, based upon a video signal representing the image obtained thereby, generating data representing an edge image of the image that has been picked up, comprising:

A/D-converting one screen of the video signal into digital image data;

setting a window on said one screen of image data and extracting pixel data regarding a plurality of pixels within the window;

generating data relating to slope of the image data within said window;

calculating degree of matching between said data relating to the slope and each of a plurality of edge patterns;

calculating an evaluated value of edge likeness from said degree of matching;

performing the calculation of said evaluated value of edge likeness with regard to all pixels of one screen and obtaining edge image data comprising said evaluated values.

**34.** An apparatus for aiding in setting of lighting conditions, comprising:

a sample supply device (120, 121) for successively supplying a plurality of samples of acceptable articles and defective articles to a predetermined observation position;

a lighting device (10) capable of varying lighting conditions for lighting a sample at said observation position;

an image pick-up device (20) for imaging, under lighting provided by said lighting device, each sample of the acceptable and defective articles brought to said observation position and outputting a video signal representing the samples imaged;

characteristic-quantity measuring means (130) for measuring a characteristic quantity of each sample based upon the video signal outputted by said image pick-up device;

means (130) for calculating an evaluated value relating to discrimination accuracy of acceptable articles and defective articles based upon the characteristic quantity measured by said characteristic-quantity measuring means; and

means (130) for retrieving lighting conditions, which will give the best evaluated value, based upon evaluated values for each of the lighting conditions obtained while changing the lighting conditions of said lighting device.

35. The apparatus according to claim 34, further comprising a detector (123, 123a, 123b, 123c) for detecting presence of a sample supplied to said observation position as well as distinction between an acceptable article and a defective article.

36. The apparatus according to claim 34, wherein said sample supply device is constituted by a rotary table (120) on which each sample is placed, and a driving device (121) for rotatively driving the rotary table (120).

37. A method of aiding in setting of lighting conditions, comprising:

setting up a lighting device (10) capable of varying lighting conditions for lighting a predetermined observation position;

successively supplying a plurality of samples of acceptable articles and defective articles to said observation position;

imaging, under lighting provided by said lighting device, each sample of the acceptable and defective articles supplied to said observation position;

measuring a characteristic quantity of each sample based upon a video signal obtained by imaging;

calculating an evaluated value relating to discrimination accuracy of acceptable articles and defective articles based upon the characteristic quantity measured;

obtaining an evaluated value for every lighting condition while changing the lighting conditions of said lighting device, and retrieving lighting conditions that will give the best evaluated value.

38. An apparatus for aiding in setting of lighting conditions, comprising:

a sample supply device (120, 121) for successively supplying a plurality of samples to a predetermined observation position;

a lighting device (10) capable of varying lighting conditions for lighting a sample at said observation position;

an image pick-up device (20) for imaging, under lighting provided by said lighting device, each sample brought to said observation position by said supply device and outputting a video signal representing each sample imaged;

characteristic-quantity measuring means (l30) for measuring a characteristic quantity of each sample based upon the video signal outputted by said image pick-up device;

means (l30) for calculating dispersion of the characteristic quantities measured by said characteristic-quantity measuring means; and

means (l30) for retrieving lighting conditions, which will minimize the dispersion, based upon dispersion for every lighting condition obtained while varying the lighting conditions of said lighting device.

39. The apparatus according to claim 38, further comprising a detector (123) for detecting samples supplied to said observation position.

40. The apparatus according to claim 38, wherein said sample supply device is constituted by a rotary table (120) on which each sample is placed, and a driving device (121) for rotatively driving the rotary table (120).

41. A method of aiding in setting of lighting conditions comprising:

setting up a lighting device (10) capable of varying lighting conditions for lighting a predetermined observation position;

successively supplying a plurality of samples to said observation position;

imaging, under lighting provided by said lighting device, each sample supplied to said observation position;

measuring a characteristic quantity of each sample based upon a video signal obtained by imaging;

calculating dispersion of characteristic quantities of all samples measured;

obtaining dispersion for every lighting condition while varying the lighting conditions of said lighting device, and retrieving lighting conditions that will minimize the variance.

42. An apparatus for aiding in deciding of photographic conditions, for deciding photographic conditions in a camera on which a lens and a required close-up photography ring are detachably mounted, comprising:

an input unit for entering at least two items of information from among camera field-of-view information, camera set-up-distance information relating to an object of photography, lens information and close-up photography ring information;

an operation unit for calculating the remaining items of information using the at least two items of information entered from said input unit; and

a display unit for displaying the remaining information represented by the results of calculation performed by said arithmetic unit.

Fig. 1

Fig. 2

Fig.3

Fig.4

## Fig.5

## Fig.6

# Fig.7

# Fig.8

# Fig.9

20

28

OB

# Fig.10

20

BG

OB

# Fig.11

## Fig. 12

## Fig. 13

EP 0 569 589 A1

# Fig. 14

50(40)

51

```
USER  →  ┌──────────┐       ┌──────────────┐       ┌──────────────┐
         │  INPUT   │   →   │    USER-     │       │  OPTIMUM-    │
         │  UNIT    │       │   MACHINE    │   →   │   HEIGHT     │
         └──────────┘       │  INTERFACE   │       │  DECIDING    │
                            │              │       │   UNIT       │
         ┌──────────┐       │              │       │              │
     ←   │  OUTPUT  │   ←   │              │       │              │
         │  UNIT    │       └──────────────┘       └──────────────┘
         └──────────┘
```

52(41)        53        54

# Fig. 15

OPTIMUM HEIGHT hp

$h_P$

# Fig. 16

# Fig. 17

## Fig. 18

## Fig. 19

RADIUS R OF AREA OF UNIFORM ILLUMINANCE

HEIGHT h OF LIGHTING DEVICE

## Fig. 20

START OPTIMUM-
HEIGHT DECISION
PROCESSING

ENTER DEPTH d, WIDTH
W, DISTANCE R1,
RADIUS R0 — 201

RETRIEVE RADIUS R2
AND LOWER-LIMIT
VALUE h0 — 202

$$h1 = d \times \frac{R1 - R2}{W}$$ — 203

204

$h0 \leqq h1$

NO

YES

DISPLAY MESSAGE
"hp NOT OBTAINED"

207

$$hp = \frac{h0 + h1}{2}$$ — 205

OUTPUT OPTIMUM
HEIGHT hp — 206

END

## Fig. 21

## Fig. 22

## Fig. 23

# Fig. 24

# Fig. 25

# *Fig.26*

```
┌─────────────────────────┐
│    START OPTIMUM-        │
│   ANGLE DECISION         │
│     PROCESSING           │
└─────────────────────────┘
            │
┌─────────────────────────┐
│     ENTER WIDTH S        │ ── 211
│     AND DEPTH t          │
└─────────────────────────┘
            │
┌─────────────────────────┐
│                          │ ── 212
│   θ_P = tan⁻¹ t/S        │
└─────────────────────────┘
            │
┌─────────────────────────┐
│    OUTPUT OPTIMUM        │ ── 213
│    ANGLE θ_p             │
└─────────────────────────┘
            │
┌─────────────────────────┐
│          END             │
└─────────────────────────┘
```

$$\theta_P = \tan^{-1} \frac{t}{S}$$

# Fig. 27

50(40)

51

```
           ┌──────────┐      ┌──────────────┐      ┌──────────────────┐
  USER  →   │  INPUT   │  →   │              │      │   LIGHTING-      │
           │  UNIT    │      │    USER-     │      │   DEVICE AND     │
           └──────────┘      │   MACHINE    │ ↔    │   LIGHTING-      │
           ┌──────────┐      │  INTERFACE   │      │    METHOD        │
       ←   │  OUTPUT  │  ←   │              │      │   DECIDING       │
           │  UNIT    │      │              │      │    UNIT          │
           └──────────┘      └──────────────┘      └──────────────────┘
```

52(41)    53    56

# Fig. 28

# Fig.29

```
        ┌───────────────┐
        │     START     │
        └───────┬───────┘
                │
    ┌───────────┴───────────┐
    │ ENTER ① PURPOSE OF    │
    │ INSPECTION AND ③      │──── 221
    │    FIELD OF VIEW      │
    └───────────┬───────────┘
                │
    ┌───────────┴───────────┐
    │  ACQUIRE NECESSARY    │
    │   INFORMATION BY      │
    │ DIALOG WITH USER, AND │
    │ ② DETERMINE WHAT IS   │──── 222
    │ DISPARITY IN OPTICAL  │
    │PROPERTIES OF OBSERVED │
    │    PORTION AND        │
    │    BACKGROUND         │
    └───────────┬───────────┘
                │
    ┌───────────┴───────────┐
    │  DECIDE LIGHTING      │
    │     DEVICE AND        │──── 223
    │  LIGHTING METHOD      │
    └───────────┬───────────┘
                │
        ┌───────┴───────┐
        │     END       │
        └───────────────┘
```

# Fig.30

START
( SHAPE, DIMENSIONS )

**231**
IS SILHOUETTE INSPECTION POSSIBLE ? — NO

YES

**233**
ARE COLORS OF OBSERVED PORTION AND BACKGROUND SIMILAR? — YES

NO

**232**
DISPLAY SCREEN FOR ILLUMINATION BY TRANSMITTED LIGHT

**235**
DOES OBSERVED PORTION HAVE PROJECTION? — NO

YES

**234**
DISPLAY SCREEN FOR ILLUMINATION BY UNIFORM LIGHT

**237**
DOES OBSERVED PORTION HAVE RECESS? — NO

YES

**236**
DISPLAY SCREEN FOR LIGHTING PROJECTION

**238**
DISPLAY SCREEN FOR LIGHTING RECESS

**239**
DISPLAY SCREEN FOR LIGHTING EDGE

# Fig. 31

START
(PRESENCE OF PART;
DEFECTIVE PART)

241

IS
SILHOUETTE
INSPECTION
POSSIBLE?

NO

YES

243

ARE
COLORS OF
PART AND BASE
SIMILAR?

YES

NO

242

DISPLAY SCREEN FOR
ILLUMINATION BY
TRANSMITTED LIGHT

244

DISPLAY SCREEN FOR
ILLUMINATION BY
UNIFORM LIGHT

245

DISPLAY SCREEN FOR
ILLUMINATION
UTILIZING REGULAR
REFLECTION

EP 0 569 589 A1

## Fig.32

START
(FLAWS)

IS SILHOUETTE INSPECTION POSSIBLE? — 251

NO

YES

FLAW DIRECTION SPECIFIABLE? — 253

NO

YES

DISPLAY SCREEN FOR ILLUMINATION BY TRANSMITTED LIGHT — 252

DISPLAY SCREEN FOR LIGHTING LINE — 254

DISPLAY SCREEN FOR LIGHTING RECESS — 255

## Fig.33

START
(COLOR)

IS SILHOUETTE INSPECTION POSSIBLE? — 261

NO

YES

DISPLAY SCREEN FOR ILLUMINATION BY TRANSMITTED LIGHT — 262

DISPLAY SCREEN FOR ILLUMINATION BY UNIFORM LIGHT — 263

56

START
(POSITIONING)

271

IS
SILHOUETTE
INSPECTION
POSSIBLE?

*Fig.34a*

NO

273

IS
POSITIONED
LOCATION
RECESS?

NO

YES

275

IS
POSITIONED
LOCATION
PIN?

NO

DISPLAY SCREEN FOR
ILLUMINATION BY
TRANSMITTED LIGHT

YES

277

IS
POSITIONED
LOCATION MARK
OR LABEL
?

NO

272

DISPLAY SCREEN FOR
LIGHTING
RECESS

YES

A

274

DISPLAY SCREEN FOR
LIGHTING
PROJECTION

YES

276

278

DISPLAY SCREEN FOR
ILLUMINATION BY
UNIFORM LIGHT

A

*Fig.34b*

279

IS
POSITIONED
LOCATION EXTERNAL
SHAPE?

NO

283

IS
POSITIONED
LOCATION PART
?

NO

287

YES

280

ARE
COLORS OF
OBSERVED PORTION
AND BACKGROUND
SIMILAR?

NO

284

ARE
COLORS OF
OBSERVED PORTION
AND BACKGROUND
SIMILAR
?

NO

EXECUTE OTHER
PROCESSING (OR
ERROR PROCESSING)

286

YES

282

DISPLAY SCREEN FOR
ILLUMINATION BY
UNIFORM LIGHT

YES

DISPLAY SCREEN FOR
ILLUMINATION BY
UNIFORM LIGHT

DISPLAY SCREEN FOR
LIGHTING
EDGE

281

DISPLAY SCREEN FOR
ILLUMINATION BY
REGULAR REFLECTION

285

57

**Fig. 35**

START
( FOREIGN MATTER )

291

IS SILHOUETTE INSPECTION POSSIBLE?

— NO →

293

ARE COLORS OF FOREIGN MATTER AND BASE SIMILAR?

— YES →

YES ↓

NO ↓

292

DISPLAY SCREEN FOR ILLUMINATION BY TRANSMITTED LIGHT

294

DISPLAY SCREEN FOR ILLUMINATION BY UNIFORM LIGHT

295

DISPLAY SCREEN FOR ILLUMINATION BY REGULAR REFLECTION

**Fig. 36**

START
( CHARACTERS, MARKS )

301

IS SILHOUETTE INSPECTION POSSIBLE?

— NO →

303

CARVED SEAL? PRINTING?

— CARVED →

YES ↓

PRINTING ↓

302

DISPLAY SCREEN FOR ILLUMINATION BY TRANSMITTED LIGHT

304

DISPLAY SCREEN FOR ILLUMINATION BY UNIFORM LIGHT

305

DISPLAY SCREEN FOR LIGHTING RECESS

## Fig. 37

DISPLAY SCREEN FOR ILLUMINATION BY TRANSMITTED LIGHT

TYPE 1 (HORIZONTAL TYPE)
  (ILLUMINATION BY
  TRANSMITTED LIGHT)

CAMERA   OBJECT

LIGHTING
DEVICE

| TYPE | FIELD OF VIEW | LIGHTING DEVICE |
|---|---|---|
| COMMON TO ALL | 10 mm OR LESS | BIFURCATED LIGHT GUIDE |
| | 50 mm OR LESS | RING FLUORESCENT LAMP Ø100 mm |
| | 150 mm OR LESS | RING FLUORESCENT LAMP Ø200 mm |
| | 150 mm OR MORE | RING FLUORESCENT LAMP Ø200 OR MORE |

TYPE 2 (VERTICAL TYPE)
  (ILLUMINATION BY
  TRANSMITTED LIGHT)

CAMERA

OBJECT

LIGHTING
DEVICE

EP 0 569 589 A1

## Fig. 38

SCREEN FOR ILLUMINATION BY UNIFORM LIGHT

TYPE 1 (STANDARD TYPE)
(ILLUMINATION BY
UNIFORM LIGHT)

CAMERA

LIGHTING
DEVICE

OBJECT

TYPE 2 (OBLONG OBJECT)
(ILLUMINATION BY
UNIFORM LIGHT)

CAMERA

LIGHTING
DEVICE

OBJECT

| TYPE | FIELD OF VIEW | LIGHTING DEVICE |
|---|---|---|
| 1 | 50 mm OR LESS | RING LIGHT GUIDE Ø50 mm |
| 1 | 100 mm OR LESS | RING LIGHT GUIDE Ø150 mm |
| 1 | 200 mm OR LESS | RING FLUORESCENT LAMP Ø200 mm |
| 2 | 50 mm OR LESS | SLIT LIGHT GUIDE ℓ 50 mm |
| 2 | 200 mm OR LESS | STRAIGHT FLUORES-CENT LAMP ℓ200 mm |
| COMMON TO ALL | 200 mm OR MORE | FLUORESCENT LAMP Ø, ℓ200 OR MORE |

EP 0 569 589 A1

# Fig. 39

SCREEN FOR LIGHTING OF PROJECTION

TYPE 1 (STANDARD TYPE)
(ILLUMINATION BY
PARALLEL RAYS)

CAMERA

LIGHTING
DEVICE

OBJECT

TYPE 2 (OBLONG OR TRANSVERSELY
ARRAYED OBJECT)

(ILLUMINATION BY
PARALLEL RAYS)

CAMERA

LIGHTING
DEVICE

OBJECT

| TYPE | FIELD OF VIEW | LIGHTING DEVICE |
|---|---|---|
| 1 | 50 mm OR LESS | BIFURCATED LIGHT GUIDE |
| | 100 mm OR LESS | RING LIGHT GUIDE Ø150 mm |
| | 200 mm OR LESS | RING FLUORESCENT LAMP Ø200 mm |
| 2 | 50 mm OR LESS | SLIT LIGHT GUIDE ℓ50 mm |
| | 200 mm OR LESS | STRAIGHT FLUORESCENT LAMP ℓ200 mm |
| COMMON TO ALL | 200 mm OR MORE | FLUORESCENT LAMP Ø, ℓ200 OR MORE |

EP 0 569 589 A1

## Fig. 40

SCREEN FOR LIGHTING OF RECESS

TYPE 1 (STANDARD TYPE;
FLAW INSPECTION)

(ILLUMINATION BY
PARALLEL RAYS)

CAMERA

LIGHTING
DEVICE

OBJECT

TYPE 2 (BOTTOM OF RECESS)
(ILLUMINATION BY COAXIAL
INCIDENCE FROM ABOVE)

CAMERA

LIGHTING
DEVICE

HALF-MIRROR

OBJECT

| TYPE | FIELD OF VIEW | LIGHTING DEVICE |
|------|---------------|-----------------|
| 1 | 50 mm OR LESS | BIFURCATED LIGHT GUIDE |
| | 100 mm OR LESS | RING LIGHT GUIDE Ø150 mm |
| | 200 mm OR LESS | RING FLUORESCENT LAMP Ø200 mm |
| | 200 mm OR MORE | RING FLUORESCENT LAMP Ø200 mm OR MORE |
| 2 | 50 mm OR LESS | STRAIGHT LIGHT GUIDE |

EP 0 569 589 A1

## Fig. 41

SCREEN FOR LIGHTING OF EDGE

TYPE 1 (STANDARD TYPE)
(ILLUMINATION BY
PARALLEL RAYS)

CAMERA

LIGHTING DEVICE

OBJECT

TYPE 2 (OBLONG OBJECT)
(ILLUMINATION BY
PARALLEL RAYS)

CAMERA

LIGHTING DEVICE

OBJECT

| TYPE | FIELD OF VIEW | LIGHTING DEVICE |
|---|---|---|
| 1 | 100 mm OR LESS | RING LIGHT GUIDE ∅150 mm |
| | 200 mm OR LESS | RING FLUORESCENT LAMP ∅200 mm |
| 2 | 50 mm OR LESS | SLIT LIGHT GUIDE ℓ50 mm |
| | 200 mm OR LESS | STRAIGHT FLUORESCENT LAMP ℓ200 mm |
| COMMON TO ALL | 200 mm OR MORE | FLUORESCENT LAMP ∅, ℓ200 OR MORE |

# *Fig. 42*

SCREEN FOR LIGHTING OF LINE

TYPE 1 (STANDARD TYPE)

(ILLUMINATION BY
PARALLEL RAYS)

CAMERA

LIGHTING
DEVICE

OBJECT

| FIELD OF VIEW | LIGHTING DEVICE |
|---|---|
| 50 mm OR LESS | SLIT LIGHT GUIDE $\ell$50 mm |
| 200 mm OR MORE | STRAIGHT FLUORESCENT LAMP $\ell$200 mm OR MORE |

EP 0 569 589 A1

## *Fig. 43*

SCREEN FOR ILLUMINATION UTILIZING REGULAR REFLECTION

(ILLUMINATION BY PARALLEL RAYS
OR DARK-FIELD ILLUMINATION)

CAMERA

LIGHTING
DEVICE

OBJECT

| TYPE | FIELD OF VIEW | LIGHTING DEVICE |
|---|---|---|
| 1 | 50 mm OR LESS | BIFURCATED LIGHT GUIDE |
| | 100 mm OR LESS | RING LIGHT GUIDE $\emptyset$150 mm |
| | 200 mm OR LESS | RING FLUORESCENT LAMP $\emptyset$200 mm |
| 2 | 50 mm OR LESS | SLIT LIGHT GUIDE $\ell$50 mm |
| | 200 mm OR LESS | STRAIGHT FLUORESCENT LAMP $\ell$200 mm |
| COMMON TO ALL | 200 mm OR MORE | FLUORESCENT LAMP $\emptyset$, $\ell$200 OR MORE |

TYPE 1:  STANDARD TYPE
     2:  OBLONG OR TRANSVERSELY
        ARRAYED OBJECT

EP 0 569 589 A1

## *Fig.44*

## *Fig.45*

```
          ┌─────────────┐
          │    START    │
          └──────┬──────┘
                 │
       ┌─────────┴─────────┐
       │  DECIDE LIGHTING  │
       │     DEVICE AND    │── 311
       │  LIGHTING METHOD  │
       └─────────┬─────────┘
                 │
       ┌─────────┴─────────┐
       │      SELECT       │
       │   DECIDING UNIT   │── 312
       └─────────┬─────────┘
                 │
       ┌─────────┴─────────┐
       │ EXECUTE PROCESSING│
       │    BY SELECTED    │── 313
       │   DECIDING UNIT   │
       └─────────┬─────────┘
                 │
       ┌─────────┴─────────┐
       │      OUTPUT       │
       │      RESULT       │── 314
       └─────────┬─────────┘
                 │
          ┌──────┴──────┐
          │     END     │
          └─────────────┘
```

## Fig.46

```
        ┌─────────────────────┐
        │  START OPTIMUM-      │
        │  HEIGHT DECISION     │
        │  PROCESSING          │
        └──────────┬──────────┘
                   │
        ┌──────────┴──────────┐
        │      i = 1          │──321
        └──────────┬──────────┘
                   │
        ┌──────────┴──────────┐
        │  ENTER DEPTH d,      │
        │  WIDTH W, DISTANCE   │──201
        │  R1, RADIUS R0       │
        └──────────┬──────────┘
```

$$h1 = d \times \frac{R1 - R2}{W}$$

204

$h0 \leqq h1$

$$h_P = \frac{h0 + h1}{2}$$

ENTER i-th LIGHTING DEVICE — 322

RETRIEVE RADIUS R2 AND LOWER-LIMIT VALUE h0 — 202

203

NO

YES

i = i + 1 — 323

324

NO

i = n

YES

205

OUTPUT OPTIMUM HEIGHT hp — 206

DISPLAY MESSAGE "hp NOT OBTAINED" — 207

END

*Fig. 47*

EP 0 569 589 A1

EP 0 569 589 A1

## Fig.48

70

# Fig.49

## Fig. 50

| | | |
|---|---|---|
| $p_3$ | $p_2$ | $p_1$ |
| $p_4$ | $p_0$ | $p_8$ |
| $p_5$ | $p_6$ | $p_7$ |

$\Rightarrow$

## Fig. 51

| | | |
|---|---|---|
| $p_3$ | $p_2$ | $p_1$ |
| $p_4$ | $p_0$ | $p_8$ |
| $p_5$ | $p_6$ | $p_7$ |

$\Rightarrow$

| | | |
|---|---|---|
| $q_3$ | $q_2$ | $q_1$ |
| $q_4$ | | $q_8$ |
| $q_5$ | $q_6$ | $q_7$ |

## Fig.52a

| N | N | Z |
|---|---|---|
| N |   | P |
| Z | P | P |

(DIRECTION 1)

## Fig.52b

| N | Z | P |
|---|---|---|
| N |   | P |
| N | Z | P |

(DIRECTION 2)

## Fig.52c

| Z | P | P |
|---|---|---|
| N |   | P |
| N | N | Z |

(DIRECTION 3)

## Fig.52d

| P | P | P |
|---|---|---|
| Z |   | Z |
| N | N | N |

(DIRECTION 4)

## Fig.52e

| P | P | Z |
|---|---|---|
| P |   | N |
| Z | N | N |

(DIRECTION 5)

## Fig.52f

| P | Z | N |
|---|---|---|
| P |   | N |
| P | Z | N |

(DIRECTION 6)

## Fig.52g

| Z | N | N |
|---|---|---|
| P |   | N |
| P | P | Z |

(DIRECTION 7)

## Fig.52h

| N | N | N |
|---|---|---|
| Z |   | Z |
| P | P | P |

(DIRECTION 8)

## Fig.53

DEGREE OF MEMBERSHIP

N   Z   I   P

$-q_a$   $-q_b$   O   $q_b$   $q_a$

DIFFERENCE q
IN BRIGHTNESS

73

# Fig.54

# Fig.55

# Fig. 56

START

DISPLAY INITIAL
SCREEN OF FIG. 58 — 331

SET KEY
OPERATED? — 332

NO

YES

PERFORM IMAGING AND
ENTER IMAGE DATA — 333

READ PARAMETERS
FROM PICTURE-
QUALITY HISTOGRAM — 334

CALCULATE AND STORE
EVALUATED VALUE V0 — 335

DISPLAY SCREEN
OF FIG. 59 — 336

SET KEY
OPERATED? — 337

NO

YES

C

# Fig.57

```
        (C)
         │
         ▼
┌─────────────────────────┐
│  PERFORM IMAGING AND    │──── 338
│   ENTER IMAGE DATA      │
└─────────────────────────┘
         │
         ▼
┌─────────────────────────┐
│   READ PARAMETERS       │
│   FROM PICTURE-         │──── 339
│   QUALITY HISTOGRAM     │
└─────────────────────────┘
         │
         ▼
┌─────────────────────────┐
│     CALCULATE           │──── 340
│  EVALUATED VALUE V1     │
└─────────────────────────┘
         │
         ▼
      341
    ◇ V1 > V0 ◇ ──── NO ────┐
         │                   ▼
        YES         ┌──────────────────┐
      342           │   V1 ──→ V0      │──── 344
┌──────────────────┐└──────────────────┘
│   V1 ──→ V0      │          │
└──────────────────┘          ▼
         │          ┌──────────────────┐
         ▼          │   DISPLAY        │──── 345
┌──────────────────┐│ SCREEN OF FIG.60 │
│   DISPLAY        │└──────────────────┘
│ SCREEN OF FIG.59 │──── 343
└──────────────────┘
         │
         ▼
      346
    ◇ SET KEY      ◇ ──── NO ───┐
      OPERATED?                  ▼
         │                    347
        YES              ◇ END KEY    ◇ ── NO ──┐
         ▼                 OPERATED?            │
        (C)                    │                │
                              YES               │
                               ▼                │
                         ( END )                │
```

## Fig.58

SET-UP HEIGHT

SET LIGHTING DEVICE AT SUITABLE HEIGHT.
PRESS SET KEY IF SETTING IS COMPLETED.

## Fig.59

SET-UP HEIGHT

MOVE LIGHTING DEVICE AWAY FROM OBJECT.
PRESS SET KEY IF CHANGE IN HEIGHT IS COMPLETED.

# Fig.60

SET-UP HEIGHT

MOVE LIGHTING DEVICE CLOSER TO OBJECT.
PRESS SET KEY IF CHANGE IN HEIGHT IS COMPLETED.

## Fig.61

```
        ( START )
            │
            ▼
┌─────────────────────┐
│  DISPLAY INITIAL    │ ──── 331
│  SCREEN OF FIG. 58  │
└─────────────────────┘
            │
            ▼
          ╱╲
    NO   ╱  ╲        332
   ┌────< SET KEY >
   │     ╲ OPERATED? ╱
   │      ╲  ╱
   │       ╲╱
   │        │ YES
   │        ▼
   │ ┌─────────────────────┐
   │ │  PERFORM IMAGING AND │ ──── 333
   │ │  ENTER IMAGE DATA   │
   │ └─────────────────────┘
   │        │
   │        ▼
   │ ┌─────────────────────┐
   │ │  READ PARAMETERS FROM│ ──── 334
   │ │  PICTURE-QUALITY    │
   │ │  HISTOGRAM          │
   │ └─────────────────────┘
   │        │
   │        ▼
   │ ┌─────────────────────┐
   │ │  CALCULATE AND STORE │ ──── 335
   │ │  EVALUATED VALUE V0 │
   │ └─────────────────────┘
   │        │
   │        ▼
   │ ┌─────────────────────┐
   │ │  DISPLAY SCREEN     │ ──── 336
   │ │  OF FIG. 59         │
   │ └─────────────────────┘
   │        │
   │        ▼
   │ ┌─────────────────────┐
   │ │  ENTER DIRECTION    │ ──── 352
   │ │  OF MOVEMENT AND    │
   │ │  MOVING DISTANCE    │
   │ └─────────────────────┘
   │        │
   │        ▼
   │      ╱╲
   │ NO  ╱  ╲        337
   └───< SET KEY >
        ╲ OPERATED? ╱
         ╲  ╱
          ╲╱
           │ YES
           ▼
          ( D )
```

79

*Fig. 62*

D

DRIVE MOTOR IN DEPENDENCE UPON INPUT DATA — 353

PERFORM IMAGING AND ENTER IMAGE DATA — 338

READ PARAMETERS FROM PICTURE-QUALITY HISTOGRAM — 339

CALCULATE EVALUATED VALUE V1 — 340

341 — V1 > V0

NO → V1 → V0 — 344

DISPLAY SCREEN OF FIG. 60 — 345

ENTER DIRECTION OF MOVEMENT AND MOVING DISTANCE — 355

YES

V1 → V0 — 342

DISPLAY SCREEN OF FIG. 59 — 343

ENTER DIRECTION OF MOVEMENT AND MOVING DISTANCE — 354

346 — SET KEY OPERATED?

NO → 347 — END KEY OPERATED?

NO

YES

D

YES

END

80

## Fig.63

START

MAKE INITIAL SETTINGS OF ROTATIONAL ANGLE $\theta 1$ AND DIRECTION OF ROTATION — 362

START KEY OPERATED? — 363
NO
YES

PERFORM IMAGING AND ENTER IMAGE DATA — 333

READ PARAMETERS FROM PICTURE-QUALITY HISTOGRAM — 334

CALCULATE AND STORE EVALUATED VALUE V0 — 335

E

# Fig.64

E

ROTATE MOTOR
THROUGH ANGLE $\theta_1$
( OR $\theta$ ) — 364

PERFORM IMAGING AND
ENTER IMAGE DATA — 338

READ PARAMETERS FROM
PICTURE-QUALITY
HISTOGRAM — 339

CALCULATE
EVALUATED VALUE V1 — 340

365

$|V1 - VO| \leqq TH$ — YES → $\theta \leqq \theta_{th}$ — 366

NO → YES

END — 344

341

$V1 > VO$ — NO → $V1 \longrightarrow VO$

YES — 342

$V1 \longrightarrow VO$

MAKE SETTING $\theta =$
$(1/2)\theta_1$
REVERSE DIRECTION
OF ROTATION — 367

E

*Fig.65a  Fig.65b  Fig.65c  Fig.65d*

| P | P | P |
|---|---|---|
|   |   |   |
| N | N | N |

| N | N | N |
|---|---|---|
|   |   |   |
| P | P | P |

| P |   | N |
|---|---|---|
| P |   | N |
| P |   | N |

| N |   | P |
|---|---|---|
| N |   | P |
| N |   | P |

*Fig.65e  Fig.65f  Fig.65g  Fig.65h*

| P | P |   |
|---|---|---|
| P |   | N |
|   | N | N |

| N | N |   |
|---|---|---|
| N |   | P |
|   | P | P |

|   | P | P |
|---|---|---|
| N |   | P |
| N | N |   |

|   | N | N |
|---|---|---|
| P |   | N |
| P | P |   |

*Fig.66a*          *Fig.66b*

## Fig.67

# Fig.68

## Fig.69

# Fig.70

## Fig.71

```
                    ┌─────────────┐
                    │    START    │
                    └─────────────┘
                           │
              ┌────────────────────────┐
              │     ENTER NUMBERS      │────── 371
              │      Na, Nb, Nc        │
              └────────────────────────┘
                           │
              ┌────────────────────────┐
              │    DRIVE ROTARY TABLE   │
              └────────────────────────┘────── 372
                           │
                      ╱─────────╲
                     ╱ IS THERE   ╲        NO
                    ⟨ DETECTION SIGNAL? ⟩──────
                     ╲           ╱
                      ╲─────────╱ ────── 373
                        │ YES
              ┌────────────────────────┐
              │   STOP ROTARY TABLE    │────── 374
              └────────────────────────┘
                           │
              ┌────────────────────────┐
              │        IMAGING         │────── 375
              └────────────────────────┘
                           │
              ┌────────────────────────┐
              │  MEASURE CHARACTERISTIC │
              │       QUANTITY         │────── 376
              └────────────────────────┘
                           │
                      ╱─────────╲  ────── 377
              NO     ╱   ONE      ╲
              ──────⟨ REVOLUTION MADE? ⟩
                     ╲           ╱
                      ╲─────────╱
                        │ YES
              ┌────────────────────────┐
              │      CALCULATE         │
              │    AREAS Sa, Sb, Sc    │────── 378
              └────────────────────────┘
                           │
              ┌────────────────────────┐
              │      CALCULATE         │
              │   EVALUATED VALUE S    │────── 379
              └────────────────────────┘
                           │
                    ┌─────────────┐
                    │     END     │
                    └─────────────┘
```

# *Fig.72*

## Fig.73

## Fig.74

EP 0 569 589 A1

# Fig.75

```
Ls:  SIZE OF FIELD OF VIEW
Lc:  EFFECTIVE AREA OF PICTURE OF
     IMAGE PICK-UP DEVICE
A:   CAMERA SET-UP DISTANCE
B:   TOTAL LENS LENGTH
F:   FLANGE FOCAL DISTANCE
H1:  FIRST PRINCIPAL POINT
H2:  SECOND PRINCIPAL POINT
H:   PRINCIPAL-POINT SPACING
h:   DISTANCE FROM LENS TIP TO
     FIRST PRINCIPAL POINT
d:   HELICOID DELIVERY
```

*Fig.76*

```
                    ┌─────────────┐
                    │    START    │
                    └──────┬──────┘
                           │
              ┌────────────▼────────────┐
              │ ENTER DESIRED FIELD OF  │
              │ VIEW Ls₀ AND DESIRED    │── 380
              │ SET-UP DISTANCE A₀      │
              └────────────┬────────────┘
                           │
              ┌────────────▼────────────┐
              │        n  =  1          │── 381
              └────────────┬────────────┘
                           │
              ┌────────────▼────────────┐
              │      SET n-th LENS       │── 382
              │       CONSTANT           │
              └────────────┬────────────┘
              ┌────────────▼────────────┐
              │   CALCULATED HELICOID    │── 383
              │       DELIVERY d         │
              └────────────┬────────────┘
```

ENTER DESIRED FIELD OF VIEW $Ls_0$ AND DESIRED SET-UP DISTANCE $A_0$ — 380

n = 1 — 381

SET n-th LENS CONSTANT — 382

CALCULATED HELICOID DELIVERY d — 383

384 — $d > d_{max}$  YES

385 — CALCULATE THICKNESS t OF CLOSE-UP PHOTOGRAPHY RING $t(n) = t$

NO

CALCULATE SET-UP DISTANCE A $A(n) = A$ — 386

n = n + 1 — 387

389 — OBTAIN n FOR WHICH $A(n)$ IS THE VALUE NEAREST TO $A_0$ $n_0 = n$

388 — n ≤ N  NO

YES

OUTPUT RESULTS LENS: $n_0$-th LENS CLOSE-UP PHOTOGRAPHY RING THICKNESS: $T(n_0)$ SET-UP DISTANCE: $A(n_0)$ — 390

END

*Fig.77*

```
        ┌─────────────┐
        │    START    │
        └──────┬──────┘
               │
   ┌───────────▼───────────┐
   │ ENTER DESIRED FIELD OF│
   │ VIEW Ls₀ AND DESIRED  │──── 380
   │ SET-UP DISTANCE A₀    │
   └───────────┬───────────┘
               │
   ┌───────────▼───────────┐
   │       n = 1           │──── 381
   └───────────┬───────────┘
               │
   ┌───────────▼───────────┐
   │    SET n-th LENS      │──── 382
   │     CONSTANT          │
   └───────────┬───────────┘
               │
   ┌───────────▼───────────┐
   │  CALCULATED HELICOID  │──── 383
   │     DELIVERY d        │
   └───────────┬───────────┘
```

START

ENTER DESIRED FIELD OF VIEW $Ls_0$ AND DESIRED SET-UP DISTANCE $A_0$ — 380

n = 1 — 381

SET n-th LENS CONSTANT — 382

CALCULATED HELICOID DELIVERY d — 383

384

$d > d_{max}$

YES

385

CALCULATE THICKNESS t OF CLOSE-UP PHOTOGRAPHY RING $t(n) = t$

NO

CALCULATE Ls $Ls(n) = Ls$ — 391

n = n + 1 — 387

387

392

OBTAIN n FOR WHICH $Ls(n)$ IS THE VALUE NEAREST TO $Ls_0$ $n_0 = n$

388

$n \leqq N$

NO

YES

393

OUTPUT RESULTS LENS: $n_0$-th LENS CLOSE-UP PHOTOGRAPHY RING THICKNESS: $t(n_0)$ FIELD OF VIEW: $Ls(n_0)$

END

## Fig.78

```
┌─────────────────────────────────┐
│  ──DESIRED FIELD OF VIEW──       │
│  ── AND SET-UP DISTANCE ──       │
│                                  │
│  FIELD OF VIEW (mm): [50]        │
│                                  │
│  SET-UP DISTANCE (mm)            │
│                  : [100]         │
└─────────────────────────────────┘

        ┌───────────────────────────────────┐
        │        RECOMMENDED VALUES          │
        │  LENS (FOCAL DISTANCE)      :50mm  │
        │  CLOSE-UP PHOTOGRAPHY RING  :10mm  │
        │  SET-UP DISTANCE        :80-110mm  │
        │                                    │
        │      EXECUTE PROCESSING?           │
        │     ┌──────────┐  ┌──────────┐     │
        │     │ CONTINUE │  │   END    │     │
        │     └──────────┘  └──────────┘     │
        └───────────────────────────────────┘
```

EP 0 569 589 A1

# INTERNATIONAL SEARCH REPORT

International Application No PCT/JP92/00893

| I. CLASSIFICATION OF SUBJECT MATTER (if several classification symbols apply, indicate all) 6 |
|---|

According to International Patent Classification (IPC) or to both National Classification and IPC

Int. Cl$^5$   G06F15/70, G06F15/64, H04N7/18

## II. FIELDS SEARCHED

Minimum Documentation Searched 7

| Classification System | Classification Symbols |
|---|---|
| IPC | G06F15/70, G06F15/64, G06K9/20, H04N7/18, G01B11/24, G01N21/84 |

Documentation Searched other than Minimum Documentation
to the Extent that such Documents are Included in the Fields Searched 8

| | |
|---|---|
| Jitsuyo Shinan Koho | 1926 – 1992 |
| Kokai Jitsuyo Shinan Koho | 1971 – 1992 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 2-069080 (Fuji Electric Co., Ltd.), March 8, 1990 (08. 03. 90), (Family: none) | 1-23 |
| A | JP, A, 3-022181 (Fujitsu Ltd.), January 30, 1991 (30. 01. 91), Fig. 5 (Family: none) | 30-33 |
| A | JP, A, 64-061872 (Omron Corp.), March 8, 1989 (08. 03. 89), (Family: none) | 24-29, 34-41 |
| A | JP, A, 62-194589 (Fujitsu Ltd.), August 27, 1987 (27. 08. 87), (Family: none) | 1-11, 20-23, 42 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 10, 1992 (10. 08. 92) | August 25, 1992 (25. 08. 92) |
| International Searching Authority | Signature of Authorized Officer |
| Japanese Patent Office | |